(19) Europäisches Patentamt
European Patent Office
Office européen des brevets

(11) EP 4 783 224 A1

(12) EUROPEAN PATENT APPLICATION

(43) Date of publication:
29.07.2026 Bulletin 2026/31

(21) Application number: 26153533.0

(22) Date of filing: 22.01.2026

(51) International Patent Classification (IPC):
H01J 49/06 (2006.01)      H01J 49/42 (2006.01)

(52) Cooperative Patent Classification (CPC):
H01J 49/062; H01J 49/422; H01J 49/427;
G01N 27/622

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.01.2025 US 202563749962 P

(71) Applicant: THERMO FINNIGAN LLC
San Jose CA 95134 (US)

(72) Inventors:
• GOODWIN, Michael P.
Santa Clara (US)
• SENKO, Michael W.
Sunnyvale (US)
• McALISTER, Graeme C.
San Jose (US)
• SZALWINSKI, Lucas Jeremy
San Jose (US)

(74) Representative: Boult Wade Tennant LLP
Salisbury Square House
8 Salisbury Square
London EC4Y 8AP (GB)

(54) **ION SORTER EJECTION CONTROL**

(57) An ion guide includes a first end, a second end, and a series of electrodes between the first end and second end. A power source applies RF voltage waveforms to the electrodes and DC voltages to the electrodes or an additional series of electrodes to generate moving pseudopotential wells that urge the ions to migrate in a first direction and a static, non-uniform DC electric field that urges the ions to migrate in a second direction. A controller determines target operating points and directs the power source to discontinuously step the operating point of the ion guide through the target operating points. Each target operating point corresponds to a distinct target $m/z$ and comprises a combination of magnitudes of the DC voltages and an amplitude of the RF voltage waveforms that together cause ions having the target $m/z$ to migrate out of the ion guide.

EP 4 783 224 A1

**Description**

RELATED APPLICATIONS

The present application claims priority under 35 U.S.C. §119(e) to U.S. Provisional Patent Application No. 63/749,962, filed January 27, 2025, which is incorporated herein by reference in its entirety.

BACKGROUND INFORMATION

Mass spectrometry has often been referred to as a "Gold Standard" tool for the identification and analysis of various classes of compounds. In no small measure, the power of mass spectrometry resides in the ability of modern mass spectrometers to separately isolate, store, and subsequently manipulate - via ion fragmentation or ion-ion chemical reaction - specific ion species of interest that are chosen from among the multitude of ion species that are generally produced by ionization of any sample mixture. In many types of mass spectrometers, quadrupole mass filters are often employed to perform the ion isolation function. For example, in a mass spectrometer of the triple-quadrupole type or of the quadrupole-time-of-flight (Q-TOF) type, a mass filter is disposed upstream from a mass analyzer. The mass filter may receive a stream of ions composed of a variety of ion species comprising a variety of mass-to-charge ($m/z$) ratios. To isolate a particular ion species comprising a specific $m/z$, a specific pair of direct-current (DC) and oscillatory radio-frequency (RF) voltages may be applied to rod electrodes of the mass filter. The application of DC and RF voltages of the appropriate magnitude permits transmission, through the mass filter, of only a narrow range of $m/z$ values that encompasses the specific $m/z$ of interest. Under such operation, ions having all other $m/z$ values are ejected from the apparatus and neutralized. The ion species that comprises the specific $m/z$ that is of interest is thus transmitted, without significant contamination from other ion species, through the mass filter to other, downstream mass spectrometer components that may manipulate and analyze ions of the isolated ion species in various ways.

Although mass filters perform an important function, they are nonetheless inefficient in that, at any one time, they cause the elimination of all ions except for those specific ions that are permitted to pass through the apparatus by the choice of filter passband. As a result, typically more than ninety percent of potentially available compositionally relevant information may be wasted by the mass filter at any particular time.

To improve overall analytical efficiency, various types of pre-separation apparatuses have been employed, generally upstream from a mass filter, as a means of providing non-destructive initial coarse separation of ion species. Once separated by the pre-separation apparatus, the various coarsely separated groups of ions may then be separately transferred to a mass filter for narrow-band isolation of ion species of interest. Because of the earlier pre-separation, a lesser proportion of ions will be discarded by the mass filter during each such isolation.

As one example of such a pre-separation method, ion mobility spectrometry (IMS) is often used to separate ionized molecules in the gas phase based on their mobility in a carrier buffer gas. The reader is referred to Kanu et al. (Kanu, Abu B., Prabha Dwivedi, Maggie Tam, Laura Matz, and Herbert H. Hill Jr. "Ion mobility-mass spectrometry." Journal of mass spectrometry 43, no. 1 (2008): 1-22.) for a general review of coupling of ion mobility spectrometers to mass spectrometers. According to another separation method, which is known as trapped ion mobility spectrometry (TIMS), ions are trapped along a non-uniform electric DC field (field gradient) by a counteracting gas flow or along a uniform electric DC field by a counteracting gas flow which has a non-uniform axial velocity profile (gas velocity gradient). The trapped ions are separated in space according to ion mobility and subsequently eluted (released) over time according to their mobility by adjusting one of the gas velocity and the DC electric field. The details of the TIMS technique are described, for example, in U.S. Pat. No. 6,630,662 in the name of inventor Loboda; U.S. Pat. No. 7,838,826 B1 in the name of inventor Park; and U.S. Patent No. 11,226,308 in the names of Rather and Michelmann. Additional descriptions are provided in Michelmann et al. (Michelmann, Karsten, Joshua A. Silveira, Mark E. Ridgeway, and Melvin A. Park. "Fundamentals of trapped ion mobility spectrometry." Journal of the American Society for Mass Spectrometry 26, no. 1 (2014): 14-24.) as well as in Silveira et al. (Silveira, Joshua A., Karsten Michelmann, Mark E. Ridgeway, and Melvin A. Park. "Fundamentals of trapped ion mobility spectrometry part II: fluid dynamics." Journal of the American Society for Mass Spectrometry 27, no. 4 (2016): 585-595.)

Both the ion mobility spectrometry technique and the trapped ion mobility spectrometry technique make use of ion guides that are configured to provide an axial DC field along their length. Such axial fields may be provided by proportioning a voltage that is applied between entrance and exit ends of the ion guide among a plurality of electrodes that are disposed between the entrance and exit ends of the ion guide. As one example, the voltage may be proportioned among segments of the rod electrodes of a quadrupole or multipole ion guide apparatus. Alternatively, as discussed in greater detail later in this document, the voltage may be proportioned, for example, among a plurality of mutually parallel electrode plates or among a plurality of thin electrode wires deposited on or otherwise adhered to a substrate plate or wafer.

With the provision of appropriate power supplies and electrical connections, the various rod segments of a segmented quadrupole ion guide, plate electrodes of a stacked plate or stacked ring ion guide, or electrode wires of a printed circuit board may be provided with so-called "travelling-wave" DC voltages (U.S. Pat. No. 6,812,453 in the names of inventors Bateman et al). Generally, in such operation, periodically varying DC voltages are applied to the individual rod segment electrodes, plate electrodes, or wires, the phase of the periodicity being shifted between pairs of electrodes such that electrical potential wells are caused to migrate from an ion guide's ion inlet end to its ion outlet end. Travelling DC voltage waves have been used to control ions in mass spectrometers in accordance with several different configurations. The most common commercially-available ion guides and mass spectrometer collision cells that employ DC travelling waves are the T-Wave™ systems that are provided by Waters Corporation of Milford, Massachusetts, USA. The T-Wave™ systems employ stacked ring ion guides, with radial confinement of ions provided by RF voltages and axial ion propulsion provided by a summed DC travelling wave. Other DC travelling wave configurations known by the acronym "SLIM" (Structures for Lossless Ion Manipulation) have been developed at Pacific Northwest National Laboratory and are described in Tolmachev et al. (Tolmachev, Aleksey V., Ian K. Webb, Yehia M. Ibrahim, Sandilya VB Garimella, Xinyu Zhang, Gordon A. Anderson, and Richard D. Smith. "Characterization of ion dynamics in structures for lossless ion manipulations." Analytical chemistry 86, no. 18 (2014): 9162-9168.) as well as in Ibrahim et al. (Ibrahim, Yehia M., Ahmed M. Hamid, Liulin Deng, Sandilya VB Garimella, Ian K. Webb, Erin S. Baker, and Richard D. Smith. "New frontiers for mass spectrometry based upon structures for lossless ion manipulations." Analyst 142, no. 7 (2017): 1010-1021.). The SLIM ion guides employ similar travelling wave concepts to trap and propel ions, but do so using modified electrode configurations that are amenable to printed circuit board implementation. The T-Wave™ and SLIM travelling wave systems are most commonly used at relatively high pressures (e.g., approximately 1 Torr), where the axial motion of ions is impeded by gas collisions, such that separation is possible based partially on collisional cross section.

Recently, there have been descriptions of ion guides in which travelling waves are implemented not by DC voltages but, instead, by the manipulation of the main RF axial-confinement waveform(s) that are applied to multipole rod segments or to plate electrodes of stacked ring structures. According to these teachings, the various electrodes of an electrode array (e.g., an array of plate electrodes, rod-electrode segments, printed-circuit-board electrodes, etc.) may be logically grouped into consecutive subsets of electrodes (e.g., sets comprising three or more electrodes each) whereby, within each subset, a differently modulated RF waveform is applied to each electrode of the subset. Examples include RF travelling waves created via amplitude modulation (U.S. Pat. No. 9,799,503 in the names of inventors Williams et al.) and frequency modulation (U.S. Pat. No. 10,692,710 in the names of inventors Prabhakaran et al.).

SUMMARY

The following description presents a simplified summary of one or more aspects of the systems and methods described herein. This summary is not an extensive overview of all contemplated aspects and is intended to neither identify key or critical elements of all aspects nor delineate the scope of any or all aspects. Its sole purpose is to present one or more aspects of the systems and methods described herein as a prelude to the detailed description that is presented below.

In illustrative examples, a system comprises: an ion guide configured to receive ions and including: a first end, a second end, and a series of electrodes disposed between the first end and the second end, the series of electrodes defining an ion occupation volume along an axis of the ion guide extending from the first end to the second end; a power source electrically coupled to the series of electrodes and configured to: apply a set of radio-frequency (RF) voltage waveforms to the series of electrodes, the RF voltage waveforms configured to generate a plurality of moving pseudo-potential wells within the ion occupation volume and that exert forces that urge the ions to migrate along the axis in a first direction, and apply, simultaneously with application of the set of RF voltage waveforms, a set of direct-current (DC) voltages to the series of electrodes or an additional series of electrodes disposed between the first end and the second end, the set of DC voltages configured to generate a static, non-uniform DC electric field that exerts forces that urge the ions to migrate along the axis in a second direction opposite to the first direction, wherein the plurality of moving pseudopotential wells and the static, non-uniform DC electric field cause the ions to accumulate within the ion accumulation volume at a plurality of different positions along the axis based on a mass-to-charge ratio (m/z) value of the ions; and a controller configured to: determine a plurality of target operating points for the ion guide, wherein each target operating point corresponds to a distinct target m/z of a plurality of target m/z and includes a combination of magnitudes of the set of DC voltages and an amplitude of the RF voltage waveforms that together cause a packet of ions having the corresponding target m/z to migrate out of the ion guide, and direct the power source to discontinuously step the operating point of the ion guide through the plurality of target operating points.

In some illustrative examples of a system for controlling an ion guide to eject ions accumulated in the ion guide, the ion guide including a first end, a second end, and a series of electrodes disposed between the first end and the second end, the series of electrodes defining an ion occupation volume along an axis of the ion guide extending from the first end to the second end, the system comprises: one or more processors; and memory storing executable instructions that, when executed by the one or more processors, cause a computing device for mass spectrometry to perform a process including: directing a power source electrically coupled to the series of electrodes to: apply a set of radio-frequency (RF) voltage waveforms to the series of electrodes, the RF voltage waveforms configured to generate a plurality of moving pseudo-potential wells within the ion occupation volume and that exert forces that urge the ions to migrate along the axis in a first direction, and apply, simultaneously with application of the set of RF voltage waveforms to the series of electrodes, a set of direct-current (DC) voltages to the series of electrodes or an additional series of electrodes disposed between the first end and the second end, the set of DC voltages configured to generate a static, non-uniform DC electric field that exerts forces that urge the ions to migrate along the axis in a second direction opposite to the first direction, wherein the plurality of moving pseudopotential wells and the static, non-uniform DC electric field cause the ions to accumulate within the ion accumulation volume at a plurality of different positions along the axis based on a mass-to-charge ratio (m/z) value of the ions; determining a plurality of target operating points of the ion guide, wherein each target operating point corresponds to a distinct target m/z of a plurality of target m/z and includes a combination of magnitudes of the set of DC voltages and an amplitude of the RF voltage waveforms that together cause a packet of ions having the corresponding target m/z to migrate out of the ion guide; and directing the power source to discontinuously step the operating point of the ion guide through the plurality of target operating points.

In illustrative examples, a system comprises: an ion guide configured to receive ions and including: a first end, a second end, and a series of electrodes disposed between the first end and the second end, the series of electrodes defining an ion occupation volume along an axis of the ion guide extending from the first end to the second end; a power source electrically coupled to the series of electrodes and configured to: apply a set of radio-frequency (RF) voltage waveforms to the series of electrodes, the RF voltage waveforms configured to generate a plurality of moving pseudo-potential wells within the ion occupation volume and that exert forces that urge the ions to migrate along the axis in a first direction, and apply, simultaneously with application of the set of RF voltage waveforms, a set of direct-current (DC) voltages to the series of electrodes or an additional series of electrodes disposed between the first end and the second end, the set of DC voltages configured to generate a static, non-uniform DC electric field that exerts forces that urge the ions to migrate along the axis in a second direction opposite to the first direction, wherein the plurality of moving pseudopotential wells and the static, non-uniform DC electric field cause the ions to accumulate within the ion accumulation volume at a plurality of different positions along the axis based on a mass-to-charge ratio (m/z) value of the ions; and a controller configured to: determine a plurality of operating points of the ion guide and a step time for each operating point of the plurality of operating points, wherein each operating point includes a combination of magnitudes of the set of DC voltages and an amplitude of the RF voltage waveforms that together cause ions having an m/z less than a low mass cutoff of the operating point to migrate out of the ion guide, and direct the power source to discontinuously step the operating point of the ion guide through the plurality of operating points based on the step time for each operating point of the plurality of operating points.

In illustrative examples, a non-transitory computer-readable medium stores instructions that, when executed, direct at least one processor of a computing device to perform a process for controlling an ion guide to eject ions accumulated in the ion guide, the ion guide including a first end, a second end, and a series of electrodes disposed between the first end and the second end, the series of electrodes defining an ion occupation volume along an axis of the ion guide extending from the first end to the second end, the process including: directing a power source electrically coupled to the series of electrodes to: apply a set of radio-frequency (RF) voltage waveforms to the series of electrodes, the RF voltage waveforms configured to generate a plurality of moving pseudopotential wells within the ion occupation volume and that exert forces that urge the ions to migrate along the axis in a first direction, and apply, simultaneously with application of the set of RF voltage waveforms to the series of electrodes, a set of direct-current (DC) voltages to the series of electrodes or an additional series of electrodes disposed between the first end and the second end, the set of DC voltages configured to generate a static, non-uniform DC electric field that exerts forces that urge the ions to migrate along the axis in a second direction opposite to the first direction, wherein the plurality of moving pseudopotential wells and the static, non-uniform DC electric field cause the ions to accumulate within the ion accumulation volume at a plurality of different positions along the axis based on a mass-to-charge ratio (m/z) value of the ions; determining a plurality of target operating points of the ion guide, wherein each target operating point corresponds to a distinct target m/z of a plurality of target m/z and includes a combination of magnitudes of the set of DC voltages and an amplitude of the RF voltage waveforms that together cause a packet of ions having the corresponding target m/z to migrate out of the ion guide; and directing the power source to discontinuously step the operating point of the ion guide through the plurality of target operating points.

BRIEF DESCRIPTION OF THE DRAWINGS

The accompanying drawings illustrate various embodiments and are a part of the specification. The illustrated embodiments are merely examples and do not limit the scope of the disclosure. Throughout the drawings, identical or similar reference numbers designate identical or similar elements.

Fig. 1A is a schematic cross-sectional depiction of a known stacked-ring ion guide ion transport apparatus.
Fig. 1B is a schematic depiction of an exemplary plate electrode as may be employed in a stacked-ring ion guide ion transport apparatus.
Fig. 1C is a schematic depiction of a known ion manipulation and ion guiding device that may be employed as an ion transport apparatus.

Fig. 1D is a schematic depiction of an electrode configuration of a surface of the known ion manipulation and ion guiding device of Fig. 1C.

Fig. 2A is a schematic cross-sectional depiction of an embodiment of an ion tunnel stacked-ring ion guide in accordance with the present teachings, wherein the directions of ion migration are caused to differ for different mass-to-charge ($m/z$) ratios by application of a static, uniform DC axial field that is in opposition to the downstream migration of pseudopotential wells produced by application of travelling Radio-Frequency (RF) waves.

Fig. 2B is another schematic cross-sectional depiction of the ion tunnel stacked-ring ion guide of Fig. 2A, wherein ions are caused to migrate to and accumulate within various different stability zones in accordance with their respective mass-to-charge ($m/z$) ratios by application of a static, non-uniform DC axial field that is in opposition to the downstream migration of the pseudopotential wells.

Fig. 2C is a schematic depiction of the extraction of ions from the stacked-ring ion guide apparatus of Fig. 2A, in order of their respective $m/z$ ratios, by ramping an amplitude (or amplitudes) of RF voltages applied to electrodes of the apparatus.

Fig. 3A is a schematic cross-sectional depiction of a first embodiment of an ion funnel stacked-ring ion guide in accordance with the present teachings, wherein the directions of ion migration are caused to differ for different mass-to-charge ($m/z$) ratios by application of a static, uniform DC axial field that pulls ions towards the downstream, narrow end of the funnel and that is in opposition to the upstream migration of pseudopotential wells produced by application of travelling RF waves.

Fig. 3B is a modified version, in accordance with the present teachings, of the ion manipulation and ion guiding device of Fig. 1C.

Fig. 4A is a set of simulated plots of the equilibrium positions of ions of various $m/z$ ratios within an ion guide ion separator apparatus under application of a gradient of a DC axial field, the direction of which opposes the direction of RF-generated travelling waves.

Fig. 4B is a set of simulated plots of the equilibrium positions of ions of various $m/z$ ratios within an ion guide ion separator apparatus under application of a gradient in the amplitude of travelling-wave-inducing RF waveforms in the presence of an opposing uniform DC axial field.

Fig. 5 is a schematic depiction of a portion of a mass spectrometer apparatus that includes a quadrupole mass filter or other mass spectrometer component arranged in series with an ion optical apparatus that is configured and operated in accordance with the present teachings.

Fig. 6A is a reproduction of the schematic cross-sectional depiction of the apparatus of Fig. 2A and of the ion packets therein, further showing a schematic example of how DC voltages may be apportioned among stacked electrodes to generate a static, uniform DC axial field.

Fig. 6B is a schematic plot of the application, in accordance with some embodiments of the present teachings, of a gradient of the magnitude of the uniform axial electric field, $\vec{E}$, in opposition to the urging of ions by movement of RF-generated travelling pseudo-potential wells (pseudo-waves).

Fig. 6C is a schematic plot of a profile of the magnitudes of DC voltages, V, applied to a series of electrodes within an ion guide or ion separator apparatus that may be used to generate the axial electric field profile of Fig. 6B.

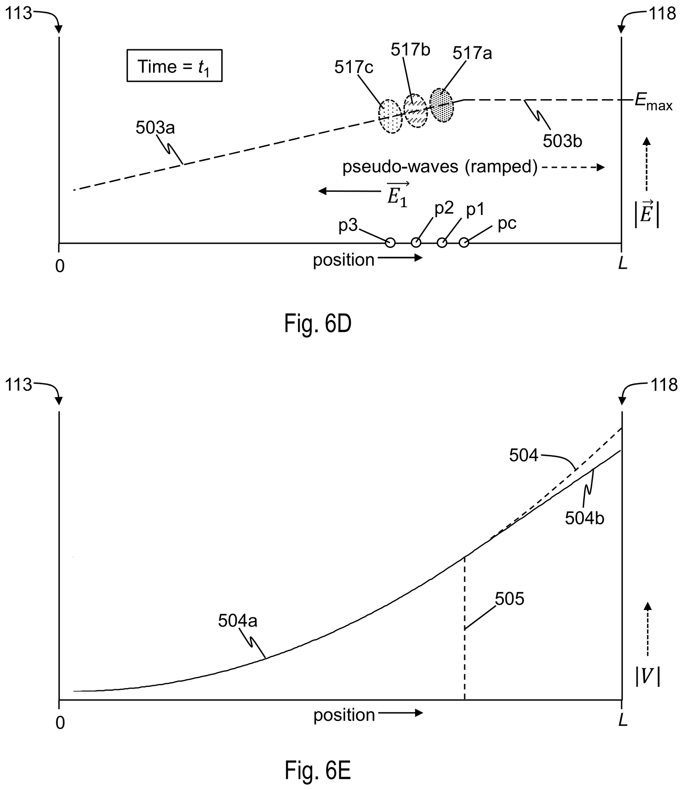

Fig. 6D is a schematic plot of the application, in accordance with some other embodiments of the present teachings, of an axial electric field, $\vec{E}$, that is in opposition to the urging of ions by movement of RF-generated travelling pseudo-waves, wherein the magnitude of the electric field increases along a direction towards an ion outlet in a first portion of an ion guide or ion separator apparatus and is constant in a second portion of the ion guide or ion separator apparatus, the plot also schematically depicting the positions, within the apparatus, of packets of ions having different respective mass-to-charge ratios at a first time, $t_1$, at which an applied amplitude of pseudopotential wells is at a first value.

Fig. 6E is a schematic plot of a profile of the magnitudes of DC voltages, V, applied to a series of electrodes within an ion guide or ion separator apparatus that may be used to generate the axial electric field profile of Fig. 6D.

Fig. 6F is a schematic depiction of the positions of the packets of ions of Fig. 6D at a second time, $t_2$, at which an applied amplitude of pseudopotential wells is at a second value that is greater than the first applied amplitude value.

Fig. 6G is a schematic depiction of the positions of the packets of ions of Fig. 6D and Fig. 6F at a third time, $t_3$, at which the applied amplitude of the pseudopotential wells is at a third value that is greater than the second applied amplitude value.

Fig. 6H is a schematic plot of the application, in accordance with some embodiments of the present teachings, of an axial electric field, $\vec{E}$, that is in opposition to the urging of ions by movement of RF-generated travelling pseudo-waves, wherein the magnitude of the electric field increases at a first rate along a direction towards an ion outlet in a first portion of an ion guide or ion separator apparatus and increases at a second, lesser rate in the same direction in a second portion of the ion guide or ion separator apparatus.

Fig. 7A is a schematic plot of a first method of ramping of an RF amplitude that is applied to electrodes of ion guides in accordance with the present teachings.

Fig. 7B is a schematic plot of a second method of ramping of an RF amplitude that is applied to electrodes of ion guides in accordance with the present teachings.

Fig. 8 is a plot of the mass spectral resolution of ions emerging from an ion guide or ion separator apparatus in which a DC electric field profile of the type shown in Fig. 6D is employed while an amplitude of an opposing set of RF-generated pseudo-waves is increased over time in accordance with the present teachings.

Fig. 9 is a plot of the variation, versus mass-to-charge ratio, of mass spectral resolution of ions emerging from an ion guide or ion separator apparatus versus total time allotted for ramping an amplitude of an opposing set of RF-generated pseudo-waves in accordance with the present teachings, wherein a DC electric field profile of the type shown in Fig. 6D is employed.

Fig. 10A is a flow diagram of a first method of operating an ion guide in accordance with the present teachings.

Fig. 10B is a flow diagram of a second method of operating an ion guide in accordance with the present teachings.

Fig. 10C is a flow diagram of a third method of operating an ion guide in accordance with the present teachings.

Fig. 11A is a schematic depiction of an example voltage profile and resultant electric field vector magnitudes as may be applied to an ion guide apparatus in accordance with alternative methods of the present teachings.

Fig. 11B is a schematic depiction of a second example voltage profile and the resultant electric field vector magnitudes that may be applied to an ion guide apparatus in alternation with the voltage profile of Fig. 7A, in accordance with alternative methods of the present teachings.

Figs. 12-18 show various illustrative timing diagrams for discontinuously stepping the operating point of an ion sorter to eject a population of ions accumulated in the ion sorter.

Fig. 19 shows a schematic plot of a profile of the magnitudes of applied DC voltages that are discontinuously stepped with reference to the timing diagram of Fig. 12.

Fig. 20 shows an illustrative system configured to control ejection of ions from an ion guide.

Fig. 21 shows illustrative components of a controller of the system of Fig. 20.

Fig. 22 shows a diagram that illustrates the relationship between the operating point, resolution, and ejection speed.

Fig. 23 shows a chart that plots normalized mass spectra signals for ions having m/z 1122 as a function of time for each of a plurality of distinct applied DC voltages, where the RF travelling wave is held constant.

Fig. 24 shows three charts that illustrate how ejection speed and resolution are related.

Fig. 25 shows a flowchart of an illustrative calibration method for setting target operating points.

Fig. 26 shows a chart that plots the operating point as a function of m/z for a set of four different target m/z and includes a curve representing a lower operating point function and a curve representing an upper operating point function.

Fig. 27 shows another chart that includes a curve representing a lower operating point function and a curve representing an upper operating point function.

Fig. 28 shows an illustrative method of operating the ion guide of Fig. 20.

Fig. 29 shows an illustrative computing device.

## DETAILED DESCRIPTION

The present application relates to mass spectrometers and mass spectrometry. More particularly, the present application relates to ion optics components, including ion guides, ion traps, and ion separation devices that are employed in mass spectrometers and to methods of use of such ion optics components within mass spectrometers. All patents, patent application publications and other published articles mentioned herein are hereby incorporated by reference herein in their entirety as if set forth fully herein.

In some examples, as a result of the $m/z$-dependence of the pseudopotential-derived forces (e.g., travelling pseudopotential wells) that drive ion migration in RF-modulated travelling-wave devices, a variety of ion sorting and/or ion storage devices may be constructed by counteracting the $m/z$-dependent pseudopotential force with an opposing $m/z$-independent force, such as an opposing DC field. Such RF-DC ion sorting devices may be configured to provide initial coarse separation and temporary storage of ion species without reliance upon gas flow. Such RF-DC sorting devices, as disclosed herein, may be deployed under both high-vacuum and moderate vacuum conditions and are therefore more versatile than conventional ion sorting devices. Whereas existing DC travelling wave devices require RF containment that is separate from the DC travelling wave to move ions, the apparatuses and methods described herein utilize RF voltages to both contain ions and move ions.

Since an RF-derived travelling wave has an $m/z$-dependent force (e.g., a greater force at lower $m/z$ values), it is possible to oppose this force with a second $m/z$-independent force. For example, a static opposed DC axial electric field may be created by applying a simple DC potential gradient across a plurality of electrodes. The combination of opposed forces may then be used, to advantage, to spatially sort ions within an ion guide or ion trapping device. Such a pair of opposing applied forces will create three different ion behavior conditions, as follows: (1) firstly, in the case of ions having the smallest $m/z$ values, for which the force attributable to the RF travelling wave dominates the DC-field force, the movement will be in the direction of the travelling wave; (2) in the case of ions having the greatest $m/z$ values, for which the DC axial field dominates, the movement will be opposite to the direction of the travelling wave; and (3), finally, for ions having a particular critical $m/z$ value, RF-derived and DC-potential gradient-derived forces will balance such that ions will not move in either direction and will be trapped within a specific region within an ion optical device, where the position of the specific region depends on the particular $m/z$ value and on the applied voltages.

By coordinated application of an RF field and a static DC field, it is possible, in some embodiments, to configure an ion guide so that low-$m/z$-value ions and high-$m/z$-value ions are caused to migrate in opposite directions, while, at the same time, ions having the critical $m/z$ value are trapped at a trapping location within the ion guide. According to some other embodiments, a gradient may be applied either to the RF field, the DC field or both the RF and DC fields. In such cases, the trapping location will become $m/z$ dependent, thereby both trapping and spatially separating ions based on their respective $m/z$ values. Therefore, in such embodiments, the ions may be spatially sorted along a length of the ion guide, similar to the fashion in which ions in liquid-phase isoelectric focusing move to the point in a pH gradient that makes the ions neutral. The RF field gradient can be created by changing the RF amplitude, V, along the length of the device or, more simply, by changing the electrode geometry by varying either axial spacing of the electrodes or by varying the electrode aperture diameters. The DC field gradient can most simply be created by altering the resistors in a voltage divider network used to create the gradient.

The spatial and temporal ion separation and sorting provided by apparatuses described herein do not rely on gas flow. However, optimal operation of such apparatuses may be achieved with ambient gas pressures in the range of 0.01 Torr to approximately 2 Torr. At lower pressures, when an ion is pulled from a pseudopotential well by the opposed DC, there are insufficient gas collisions to allow the ion to settle into an adjacent pseudopotential well. In such low-pressure regimes, ions may be pulled through or across several travelling RF pseudopotential wells by an opposing DC field. Such low-pressure behavior is harmful to the ultimate resolution of the separation. The strength of the ion mobility contribution will be dependent on ion characteristics as well as various controllable parameters, such as gas composition, gas temperature, etc. Unfortunately, this ion mobility contribution is difficult to predict as a result of the time-varying RF field. Accordingly, it may be necessary, under some circumstances, to perform an appropriate calibration of each apparatus' response under various chosen experimental conditions and various classes of ions. In many embodiments, even at pressures in the range from 0.01 to 0.5 Torr, the contribution of ion mobility effects between ions can be small or even negligible in comparison to effects caused by differences in mass-to-charge ratio or differences in charge of the ions.

In the description herein, it is understood that a word appearing in the singular encompasses its plural counterpart, and that a word appearing in the plural encompasses its singular counterpart, unless implicitly or explicitly understood or stated otherwise. Furthermore, it is understood that, for any given component or embodiment described herein, any of the possible candidates or alternatives listed for that component may generally be used individually or in combination with one another, unless implicitly or explicitly understood or stated otherwise. Moreover, it is to be appreciated that the figures, as shown herein, are not necessarily drawn to scale, wherein some of the elements may be drawn merely for clarity of the invention. Also, reference numerals may be repeated among the various figures to show corresponding or analogous elements. Additionally, it will be understood that any list of candidates or alternatives is merely illustrative, not limiting, unless implicitly or explicitly understood or stated otherwise.

Unless otherwise defined, all other technical and scientific terms used herein have the meaning commonly understood by one of ordinary skill in the art to which this invention belongs. In case of conflict, the present specification, including definitions, will control. It will be appreciated that there is an implied "about" prior to any quantitative terms mentioned in the present description, such that slight and insubstantial deviations are within the scope of the present teachings. In addition, the use of "comprise", "comprises", "comprising", "contain", "contains", "containing", "include", "includes", and "including" are not intended to be limiting. As used herein, "a" or "an" also may refer to "at least one" or "one or more." Also, the use of "or" is inclusive, such that the phrase "A or B" is true when "A" is true, "B" is true, or both "A" and "B" are true.

As used herein, the term "DC", when referring to a voltage applied to one or more electrodes of a mass spectrometer component (such as an ion tunnel or ion funnel), does not necessarily imply the imposition of or the existence of an electrical current through those electrodes. The term "DC" is thus used herein to distinguish the referred-to voltage(s) from applied oscillatory voltages that oscillate at radio frequencies and that, themselves, are referred to as "RF" voltages.

As used herein, the term "static", as applied to a DC electric field (a vector field) or to an RF amplitude, refers to a DC field or an RF amplitude that is maintained essentially unchanging with time during a period of time, possibly with inconsequential variations of not greater than ten percent of an average field strength or an average RF amplitude. The term "uniform", as applied to a DC field, refers to a DC field that is maintained so as to have a magnitude and a direction that do not substantially vary, other than inconsequential statistical variations, across a span encompassing a series of electrodes; for example, across a series of electrodes spanning a length of an ion optical component from an ion entrance end to an ion exit end. Conversely, the terms "gradient" and "non-uniform", as applied to a DC field, refer, respectively, to a spatial variation, spanning a series of electrodes, of at least a magnitude of a DC field and to a DC field that is caused to exhibit such a variation. It should be noted that a "static" DC field may either be uniform or may have a gradient. The term "uniform", as applied to an RF amplitude, refers to an RF amplitude that is maintained so as to not substantially vary across a span encompassing a series of electrodes. Conversely, the terms "gradient" and "non-uniform", as applied to an RF amplitude, refers to a spatial variation, spanning a series of electrodes, of the applied amplitude.

As used herein, the terms "dynamic" and "ramped", as applied to either a DC field or an RF amplitude, refer to a DC field or an RF amplitude that is caused to vary with time, in either a monotonically increasing fashion or a monotonically decreasing fashion, over a period of time. The ramping of the magnitude of a DC field that is applied across a series of electrodes is achieved by the ramping of a DC potential that is applied to a subset (e.g., to one or more) of those electrodes. Similarly, the ramping of an RF amplitude of RF waveforms that are applied across a series of electrodes is achieved by the ramping of an RF amplitude that is applied to one or more of those electrodes.

A DC field or RF amplitude that is maintained in a static state over a first time period may, at other times that occur either before or after the time period, be maintained in a dynamic or ramped state and vice versa. Likewise, a DC field or RF amplitude that is maintained in a uniform state over a first time period may, at other times, be maintained in a non-uniform state and vice-versa. As used herein, the terms "urge" and "urges", when used in relation to the effect, upon an ion or ions, of a direction of an applied force, do not necessarily imply that the ion or ions are caused to move in that direction in response to the force, since the direction of movement of any ion at the time of application of a force depends on its initial momentum vector as well as the vector sum of all such applied forces.

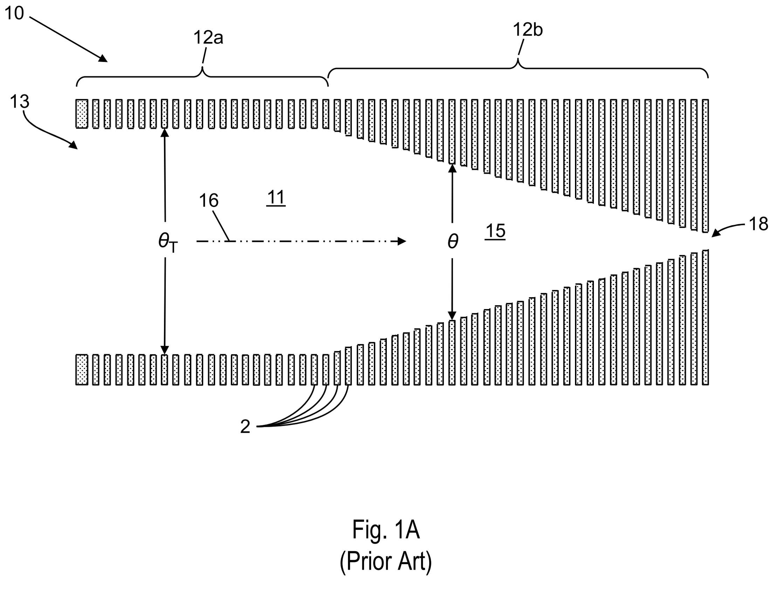

As noted above, so-called "stacked-ring ion guides" are frequently employed in mass spectrometry to either guide or otherwise manipulate ions. In this document, the term "stacked-ring ion guides" is used to refer to ion guides that either: comprise a series or stack of ring or ring-like electrodes; comprise a series or stack of plate or plate-like electrodes; and/or comprise a series or stack of printed circuit boards that have electrode structures printed on the board surfaces. Stacked-ring ion guides are often used as either so-called "ion tunnels" or "ion funnels". Fig. 1A provides a schematic longitudinal cross-sectional view of a stacked-ring ion guide apparatus 10 that includes both an ion tunnel section 12a and an ion funnel section 12b. It should be noted, however, that many apparatuses that are referred to in the art simply as "ion funnels" have both an ion tunnel section and an ion funnel section as depicted in Fig. 1A.

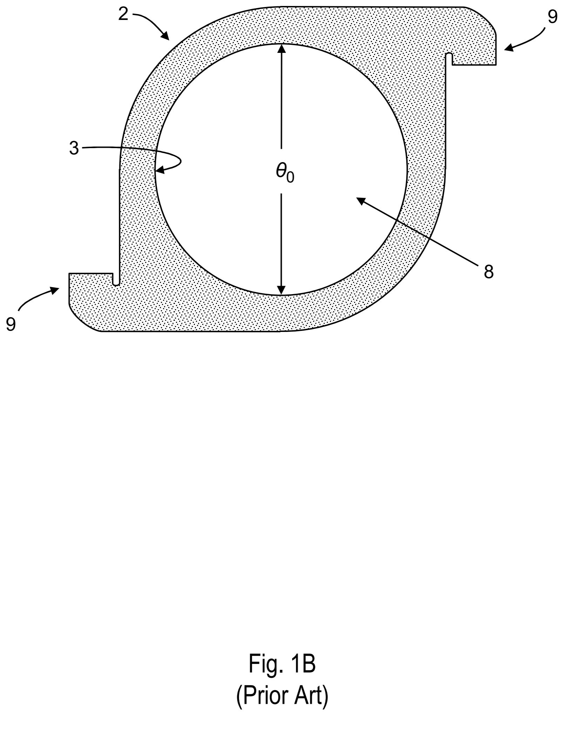

Generally described, the stacked-ring ion guide apparatus 10 comprises a plurality of closely spaced ring electrodes or plate electrodes 2. A schematic view of a typical individual ring or plate electrode 2 is provided in Fig. 1B. For purposes of clarity, Fig. 1A depicts only a small number of electrodes 2. It should be kept in mind that, in practice, a typical ion funnel or ion tunnel apparatus may comprise one-hundred or more individual electrodes. Each ring or plate electrode 2 (Fig. 1B) has an aperture 8 that is typically circular in form and that is defined by a ring inner surface 3. Each ring electrode 2 may comprise one or more tabs, such as tabs 9, for mounting to a support structure (not shown) and optionally providing electrical connection to one or more power sources (e.g., a voltage source and/or any other type of power supply).

Within an ion tunnel, as exemplified by the ion tunnel section 12a, all apertures of the electrodes of the section have a constant diameter $\theta_T$. In contrast, within an ion funnel section 12b, the diameters, $\theta$, of the various apertures generally decrease along a direction away from an ion inlet end 13 and towards an ion outlet end 18 of the device. As used in this document, the term "wide end" is used to designate an end of an ion funnel section at which the variable aperture diameter, $\theta$, is greatest and the term "narrow end" is used to designate the opposite end of the ion funnel section, at which the aperture diameter is smallest. In operation, oscillatory radio-frequency (RF) voltages are applied to the electrodes in a prescribed phase relationship to radially confine the ions to the interior of the device. According to the generally-prescribed conventional phase relationship, the phase of the RF voltage waveform of each electrode of the stack is $\pi$ radians (180 degrees) out of phase with the phase of each immediately adjacent electrode. The collection of all of the apertures of all of the electrodes 2 define an ion occupation volume 11, within which ions generally travel from the ion inlet end 13 to the ion outlet end 18 of the apparatus 10, as indicated by the arrow on longitudinal axis 16. In general operation, pseudopotential wells centered about the axis 16 and generated by the applied RF configuration serve to confine ions within the ion occupation volume 11. The relatively large electrode apertures of the ion inlet end 13 and the ion tunnel portion 12a of the apparatus are generally employed for the purpose of capturing a dispersed or diffuse cloud of ions. In contrast, the decrease, towards the ion outlet 18, of electrode apertures of the ion funnel portion 12b causes the ion cloud to be squeezed into a narrow beam that can be passed into a high-vacuum chamber through a narrow aperture. Migration of ions in the direction from the ion inlet end towards the ion outlet may be facilitated by a flow of gas within which the ions are entrained. Also, the ions may be urged in the same direction by provision of a DC axial field that is generated by differentially providing DC voltages to the electrodes 2.

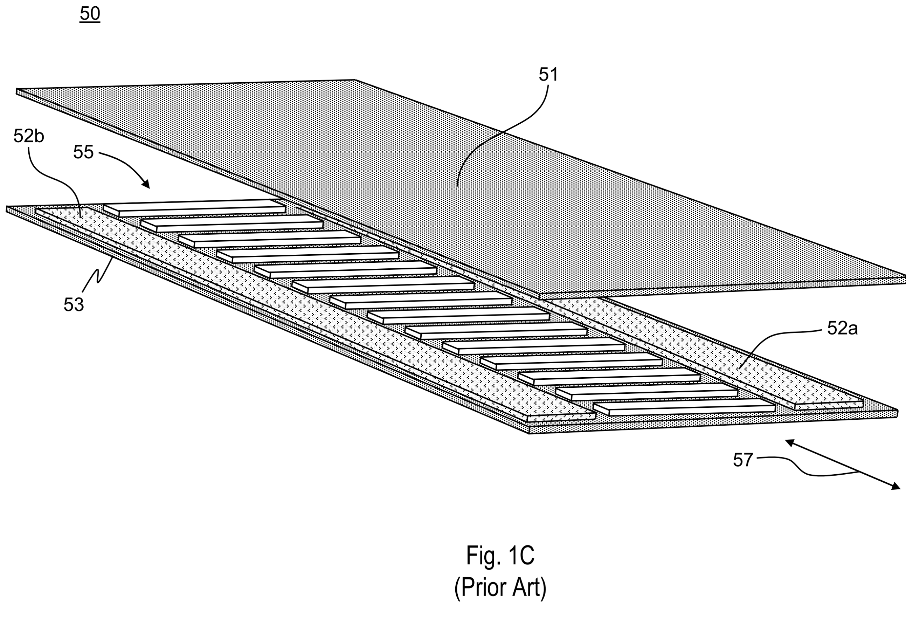

Fig. 1C is a schematic depiction of another known type of ion manipulation and ion guiding device 50, as taught in the previously mentioned U.S. Pat. No. 10,692,710. As described in that patent, the device 50 comprises two parallel substrate plates or wafers 51 and 53 that are spaced apart from one another, each plate or wafer having a surface upon which a plurality of electrodes is disposed. For example, the plates or wafers 51 and 53 may be the substrates of printed circuit boards. The electrode bearing surfaces may face one another across a gap between the two substrate plates or wafers as shown. A central axis 57 is defined through the device 50. Each of the electrode-bearing surfaces has an array 55 of inner electrodes and also has outer guard electrodes 52a, 52b. The outer guard electrodes 52a, 52b are positioned on either side of the array 55 of inner electrodes. The array 55 of inner electrodes and the outer electrodes 52a, 52b extend substantially along a length of the electrode-bearing surfaces of the substrate plates or wafers 51, 53. In operation, ions can be confined within the gap between the electrode-bearing surfaces and guided parallel to the central axis 57 as taught in U.S. Pat. No. 10,692,710.

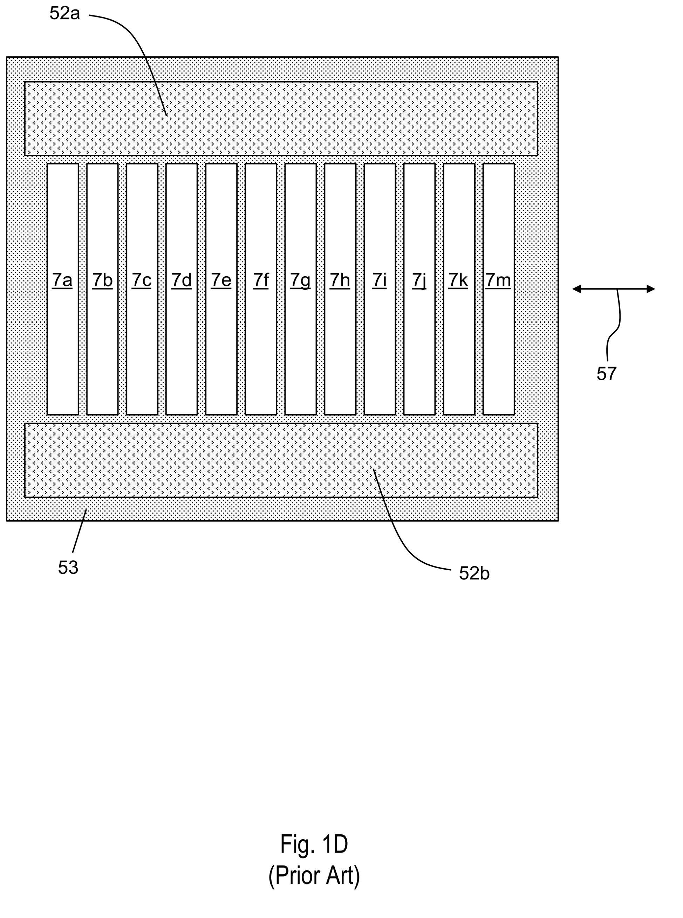

Fig. 1D schematically shows a portion of an electrode-bearing surface of an individual substrate plate or wafer 53 of the known ion manipulation and ion guiding device 50. In the illustrated example of Fig. 1D, each of the outer guard electrodes 52a, 52b comprises a single elongated electrode that is elongated parallel to the central axis 57. The array 55 of electrodes comprises a series of individual electrodes 7a, 7b, 7c, ..., 7m. Although twelve such individual electrodes are shown, the array 55 can comprise any number of electrodes. A voltage source (not shown) can apply a voltage to each electrode 7a-7m, individually. As noted above in the Background section of this document, U.S. Pat. No. 10,692,710 further teaches, using the ion manipulation device 50 as an example, that the various electrodes of the inner-electrode array 55 may be logically grouped into consecutive subsets of electrodes (e.g., sets comprising three or more electrodes each). The patent further teaches that, by providing a differently modulated RF waveform to each electrode of each subset, a travelling wave may be generated that tends to urge ions parallel to the central axis 57 through the apparatus 50.

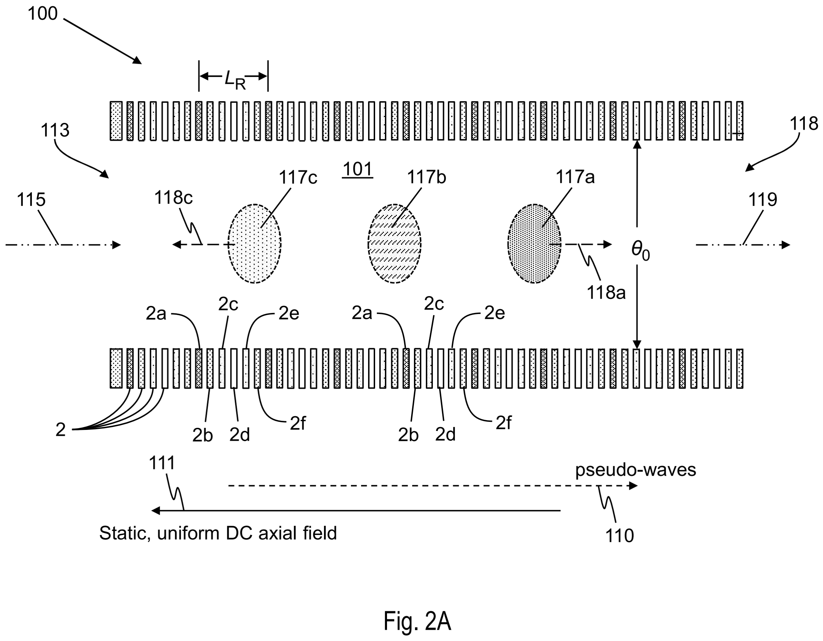

Fig. 2A is a schematic cross-sectional depiction of a first embodiment of an ion tunnel stacked-ring ion guide 100 in accordance with the present teachings. Although the stacked ring ion guide 100 is depicted as comprising only an ion tunnel portion, it may alternatively comprise a combination of any number of ion funnel and ion tunnel portions. In general operation of the apparatus 100, a stream of ions 115 comprising an unseparated mixture of ion species is delivered to an ion occupation volume 101 of the apparatus through a first end 113 (an ion inlet). By means of the operation of the apparatus 100, the original mixture of ion species may be separated into a plurality of packets - for example, the ion packets 117a, 117b and 117c as shown - each of which comprises a different subset of the original set of ion species. These partially-separated packets of ions may then be caused to exit the apparatus as a stream 119 of ion packets through a second end 118 (an ion outlet).

The physical configuration of electrodes 2 of the apparatus 100 (Fig. 2A) is similar to the physical configuration of the electrodes of the ion tunnel portion 12a of the stacked ring ion guide 10, with each electrode having an aperture of diameter $\theta_0$ and the collection of apertures defining the ion occupation volume 101. Despite this similarity, the apparatus 100 differs from the apparatus 10 (Fig. 1A) in that:

(a) the electrodes are logically grouped into a stacked sequence of subsets of electrodes, with each of the subsets comprising (in this example) exactly four electrodes;

(b) RF voltage waveforms applied to the electrodes vary within each subset of electrodes and with time in a fashion that generates a plurality of pseudopotential wells within which ions tend to be concentrated, whereby the pseudopotential wells are caused to migrate in a desired direction parallel to the axis of the apparatus, the set of migrating pseudopotential wells being referred to herein as an RF travelling wave or, equivalently, a "pseudo-wave"; and

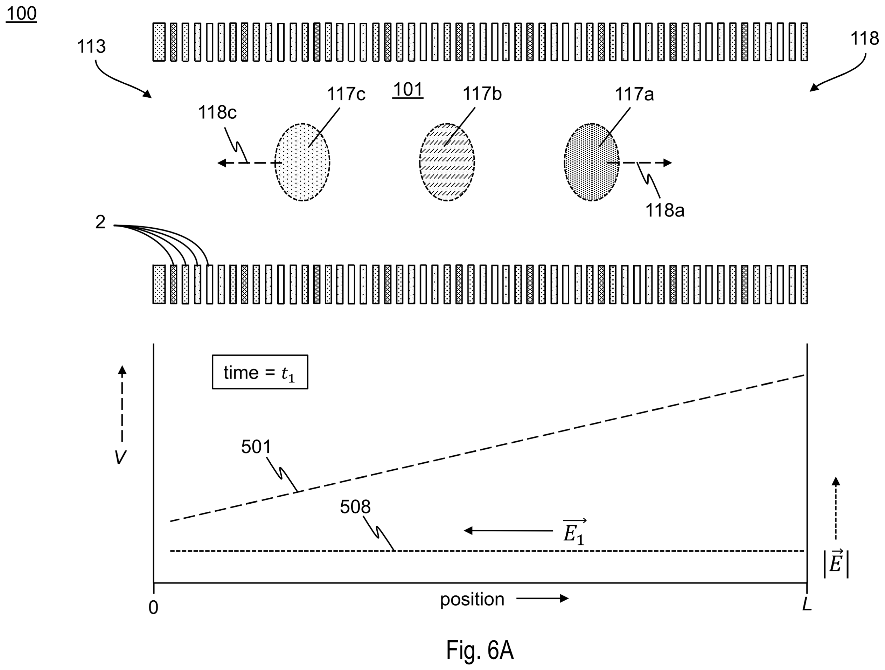

(c) an axial DC electric field is provided within the ion occupation volume that tends to urge ions in a direction opposite to the migration direction of the pseudopotential wells. Fig. 6A is a reproduction of the schematic cross-sectional depiction of the apparatus of Fig. 2A and of the ion packets therein, further showing a schematic example of how DC voltages, V, may be apportioned among stacked electrodes to generate the static, uniform DC axial field. The axial electric field vector, $\overrightarrow{E_1}$, in the vicinity of the axis of the apparatus is related to the gradient of the applied voltages (voltages shown as plot 501 in Fig. 6A). In the example, the gradient of V is essentially constant across the length of the ion tunnel apparatus 100. This is reflected in the fact that the magnitude, $|\overrightarrow{E_1}|$. , of the electric field (shown as plot 508 in Fig. 6A) in the vicinity of the axis is constant.

Specifically, with regard to the logical grouping of the electrodes into subsets, Fig. 2A depicts two such groups (e.g., subsets), each group comprising a first electrode 2a, a second electrode 2b, a third electrode 2c and a fourth electrode 2d. Although only two such groups are labeled in Fig. 2A, it is to be understood that, in the illustrated embodiment, the grouping into subsets of four electrodes each pertains to all electrodes 2 of the apparatus, extending from the first end 113 to the second end 118. According to some alternative embodiments, some portion of the electrodes may not be so organized into groups. Although four electrodes per subset are illustrated, the number of electrodes per subset, $N_e$, is not necessarily limited to four per subset. More generally, $N_e \geq 3$. A repeat distance, $L_R$, along the axis of the apparatus 100 (parallel to the arrows 115 and 119) is defined as the distance between successive electrodes 2a (or successive electrodes 2b, etc.).

Within each subset of electrodes of the apparatus 100, the four electrodes of the subset differ in that, in operation, each electrode is provided with a respective different RF voltage waveform, as discussed further below. All electrodes 2a are provided with a first RF voltage waveform that is, in embodiments, identical among all electrodes 2a. Likewise, all electrodes 2b are provided with a second RF voltage waveform that is, in embodiments, identical among all electrodes 2b. Likewise, a third voltage waveform is applied to all electrodes 2c and a fourth voltage waveform is applied to all electrodes 2d. Generally described, the $N_e$ voltage waveforms are chosen such that a set of migrating pseudopotential wells are generated along the axis of the apparatus (coincident with arrows 115 and 119), thereby forming a set of "travelling waves" that tend to urge ions along the axis. According to the example shown in Fig. 2A, the voltage waveforms are configured such that the travelling waves urge ions parallel to lines 115, 119 in a direction from the first end 113 (first end) towards the second end 118 (second end). However, according to some other embodiments as discussed further herein below, the voltage waveforms may be configured so as to urge ions in the opposite direction (from the second end 118 toward the first end 113).

According to some embodiments of the present disclosure, the RF voltage waveforms applied to the electrodes of the apparatus 100 may be selected as described in U.S. Pat. No. 9,799,503. That patent provides an example of a subset of four electrodes of a stacked-ring ion guide, wherein respective RF voltage waveforms are provided to the four electrodes such that a plurality of migrating pseudopotential wells create travelling waves within an ion guide. According to the aforementioned U.S. Pat. No. 9,799,503, the four RF voltage waveforms may be provided in accordance with the following first through fourth drive signals:

$$V_A = V_1 F(\omega_m t - \Phi_1) e^{j\omega t} \qquad \text{First RF drive signal} \qquad \text{Eq. 1a}$$

$$V_B = V_2 F(\omega_m t - \Phi_2) e^{j\omega t} \qquad \text{Second RF drive signal} \qquad \text{Eq. 1b}$$

$$V_C = V_3 F(\omega_m t - \Phi_3) e^{j\omega t} \qquad \text{Third RF drive signal} \qquad \text{Eq. 1c}$$

$$V_D = V_4 F(\omega_m t - \Phi_4) e^{j\omega t} \qquad \text{Fourth RF drive signal} \qquad \text{Eq. 1d}$$

where $t$ is time, $V_1$ through $V_4$ are zero-to-peak amplitudes, $j$ is the imaginary unit, the function F is a complex function of its argument and is periodic with period $2\pi$, and where scalar value $\Phi_1$ is a first phase, scalar value $\Phi_2$ is a second phase that is shifted by 90 degrees ($\pi/2$ radians) relative to the first phase, scalar value $\Phi_3$ is a third phase that is shifted by 180 degrees ($\pi$ radians) relative to the first phase, scalar value $\Phi_4$ is a third phase that is shifted by 270 degrees ($3\pi/2$ radians) relative to the first phase, and scalar values $\omega$ and $\omega_m$ may be angular frequencies in radians per second, with $\omega > \omega_m$. It is understood that the applied voltage is described by the real part of any resulting complex expression. The same patent also provides a specific example of the implementation of the expressions in Eqs. 1a-1d in which the applied voltages are as follows:

$$V_A = V_0 cos(\omega_m t) cos(\omega t) \qquad \text{First RF drive signal} \qquad \text{Eq. 2a}$$

$$V_B = V_0 cos(\omega_m t - \pi/2) cos(\omega t) \qquad \text{Second RF drive signal} \qquad \text{Eq. 2b}$$

$$V_C = V_0 cos(\omega_m t - \pi) cos(\omega t) \qquad \text{Third RF drive signal} \qquad \text{Eq. 2c}$$

$$V_D = V_0 cos(\omega_m t - 3\pi/2) cos(\omega t) \qquad \text{Fourth RF drive signal} f_C \quad \text{Eq. 2d}$$

As noted above, the number of electrodes per subset is not limited to four electrodes per subset and may comprise any integer number, $N_e$, where $N_e \geq 3$. In such instances, the various electrodes, R, of each subset and the various voltage waveforms, $V(t)$, provided to the electrodes each subset may be enumerated, in order beginning with the electrode closest to the entrance inlet, by the index variable, i, as

$$R_1, R_2, \dots, R_i, \dots, R_{N_e} \qquad (3 \leq i \leq N_e)$$

and

$$V_1(t), V_2(t), \dots, V_i(t), \dots, V_{N_r}(t) \qquad (3 \leq i \leq N_e)$$

Then, each and every electrode denoted as $R_1$ will be provided with the same, identical waveform, $V_1(t)$. Likewise, each and every electrode denoted as $R_2$ will be provided with the same, identical waveform, $V_2(t)$, etc. According to some embodiments, the phase shifts, $\Delta\Phi$, between any two successive electrodes of a subset are constant across the subset and are given by

$$\Delta\Phi = 2\pi/N_e \qquad\qquad \text{Eq. 3}$$

However, in accordance with some other embodiments, the phase shifts are not necessarily uniform across each subset.

In accordance with some other embodiments of the present teachings, the RF voltage waveforms provided to the electrodes of the apparatus 100 may be selected as described in U.S. Pat. No. 10,692,710, which describes creation of travelling waves by the provision of frequency-modulated waveforms that are driven by frequency-modulated signals, $S_{FM}$, represented by

$$S_{FM} = V_c cos(2\pi f_c + \beta S_{MS})$$

where $f_C$ is the "carrier frequency" (e.g., the frequency of the unmodulated conventional RF voltage waveform), $V_C$ is the voltage amplitude of the RF waveform, $\beta$ is a frequency modulation index and $S_{MS}$ is a frequency-modulating periodic waveform of frequency, $f_M$, which is a lower frequency than $f_C$. This latter patent provides a specific example in which the electrodes of a stacked-ring ion guide are organized into subsets of eight electrodes each and the phase of the frequency-modulating periodic waveform, $S_{MS}$, changes by $2\pi/8$ radians (45 degrees) between each pair of electrodes.

With reference, once again, to Fig. 2A, arrow 110 represents the migration direction of RF-generated pseudo-potential wells (e.g., travelling waves) that may be generated as described above. As indicated by arrow 110, the application of RF waveforms may be configured so that the travelling waves exert forces on ions that tends to urge the ions in the "forward" direction, which is generally from the first end 113 towards the second end 118. However, in alternative embodiments, such as when first end 113 functions as both the ion inlet and the ion outlet, the direction of the pseudopotential well migration may be reversed, relative to the migration direction indicated in Fig. 2A, by reversing the phase relationships of applied drive waveforms within each subset of electrodes. Fig. 2A also shows that, in accordance with the present teachings, a static, uniform DC axial field is also generated that exerts a force on the ions that tends to oppose the force that is exerted by the pseudopotential well migration. A schematic example of the magnitude of a static uniform DC axial field is provided by plot 508 of Fig. 6A. Accordingly, the arrow 111 indicates the direction in which the same ions are urged to migrate by the applied static, uniform DC axial field. Thus, according to the operation shown in Fig. 2A, the DC axial field is applied so as to tend to urge ions in a "reverse" direction, from the second end 118 towards the first end 113. It should be noted, however, that if the direction of the pseudopotential well migration is reversed from the direction shown in Fig. 2A, such that the travelling waves instead tend to urge the ions towards the first end 113, then the direction of the DC axial field is also reversed relative to the direction shown in Fig. 2A, such that the so-reversed DC axial field urges ions towards the second end 118.

The DC axial field that is created within the ion occupation volume 101 may be generated, in known fashion, by dividing an end-to-end voltage difference across the length of the apparatus through the inclusion of a series of resistors between the electrical connections to the various electrodes 2. Alternatively, the DC axial field may be generated by any one of a number of other known methods. In the examples described above, the DC axial field is generated by applying the DC voltages to the electrodes 2. In other examples (not shown), the DC axial field is generated by additionally or alternatively applying DC voltages to an additional series of electrodes (other than electrodes 2) disposed between the first end 113 and the second end 118 of ion guide 100, while the RF voltage waveforms are applied to electrodes 2, as described above.

The opposed pseudopotential and DC axial field forces that are applied as shown in Fig. 2A create three different ion behavior conditions, as follows: (1) firstly, in the case of ions having the smallest $m/z$ values (e.g., the ions of ion packet 117a), for which the force attributable to the RF travelling wave dominates over the DC-field force, the movement will be in the direction of the travelling wave, as indicated by motion vector 118a; (2) in the case of ions having the greatest $m/z$ values (e.g., the ions of ion packet 117c), for which the DC axial field dominates, the movement will be opposite to the direction of the travelling wave, as indicated by motion vector 118c; and (3), finally, for ions having a particular critical $m/z$ value that depends on the applied voltages (e.g., the ions of ion packet 117b), RF-derived and DC-gradient-derived forces will balance and such ions will not move in either direction. Thus, the apparatus 100, when operated as indicated in Fig. 2A, performs simultaneously as: (a) a mass filter that permits only ions having relatively low-$m/z$ values (e.g., less than the critical value) to be transmitted along outlet stream 119 to a downstream apparatus (such as a quadrupole mass filter and/or a collision cell and/or a mass analyzer); (b) a single-mass-to-charge ion trap or ion accumulator for ions having the critical $m/z$ value; and (c) a filter that eliminates all ions having $m/z$ values that are greater than the critical value.

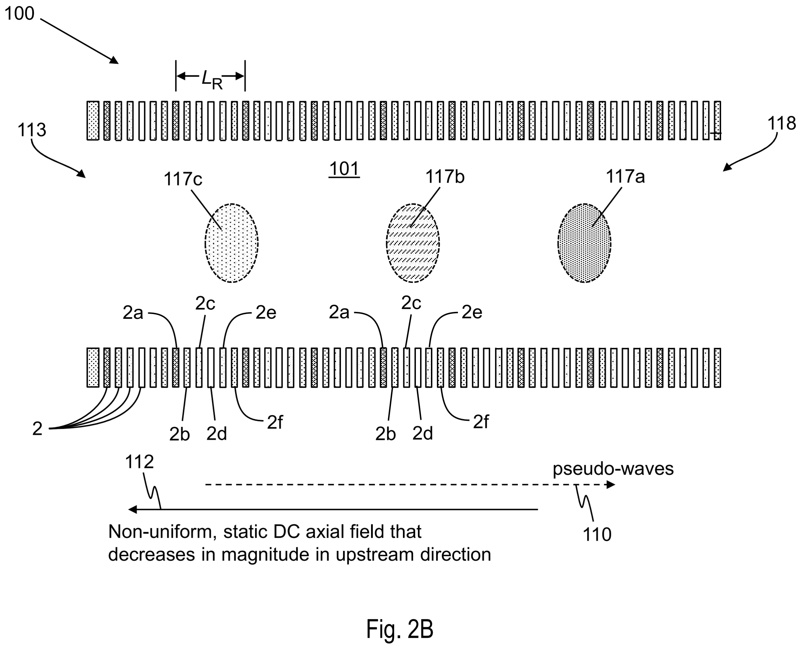

Fig. 2B is another schematic cross-sectional depiction of the ion tunnel stacked-ring ion guide 100, as introduced in Fig. 2A, but configured and operated in an alternative mode that causes differential migration of ions through the ion guide as well as spatially separated trapping of ion species in accordance with their respective mass-to-charge ($m/z$) ratios. According to the mode of operation indicated in Fig. 2B, the applied static DC axial field that opposes the pseudopotential-derived travelling waves is not uniform but, instead, decreases in magnitude in a general direction from the second end 118 towards the first end 113. Specifically, as indicated by arrow 112, the DC axial field continues to generate forces that tend to urge ions in an "upstream" direction, opposite to the "downstream" direction (as indicated by arrow 110) in which the ions are urged by the travelling waves. However, the magnitude of the DC axial field vector is non uniform and decreases in the upstream direction. Under such operation, various ion species within a range of $m/z$ values will be trapped within the ion occupation volume, as each such ion species migrates to and accumulates at an axial position at which the upstream-directed DC axial field exactly balances the downstream-directed pseudopotential-derived force that is exerted on ions of the species' mass-to-charge value. For example, in Fig. 2B, schematic axial equilibrium positions are indicated for a first packet of ions 117a having mass-to-charge ratio $(m/z)_L$, a second packet of ions 117b having mass-to-charge ratio $(m/z)_M$, and a third packet of ions 117c having mass-to-charge ratio, $(m/z)_H$, where $(m/z)_H > (m/z)_M > (m/z)_L$. Although the equilibrium positions of only three packets of ions having specific $m/z$ values are illustrated in Fig. 2B, there will generally exist, in practice, a virtually continuous range of equilibrium positions for ions having $m/z$ values within a certain $m/z$ range, with the equilibrium $m/z$ values decreasing in the general direction towards the second end 118. Additionally, certain ion species having small $m/z$ values that are outside of the range may migrate towards the ion outlet and certain other ion species having large $m/z$ values that are outside of the range may migrate towards the ion inlet. Accordingly, in the mode of operation that is schematically illustrated in Fig. 2B, the apparatus 100 functions as a multiple-mass-to-charge ion-sorting ion trap.

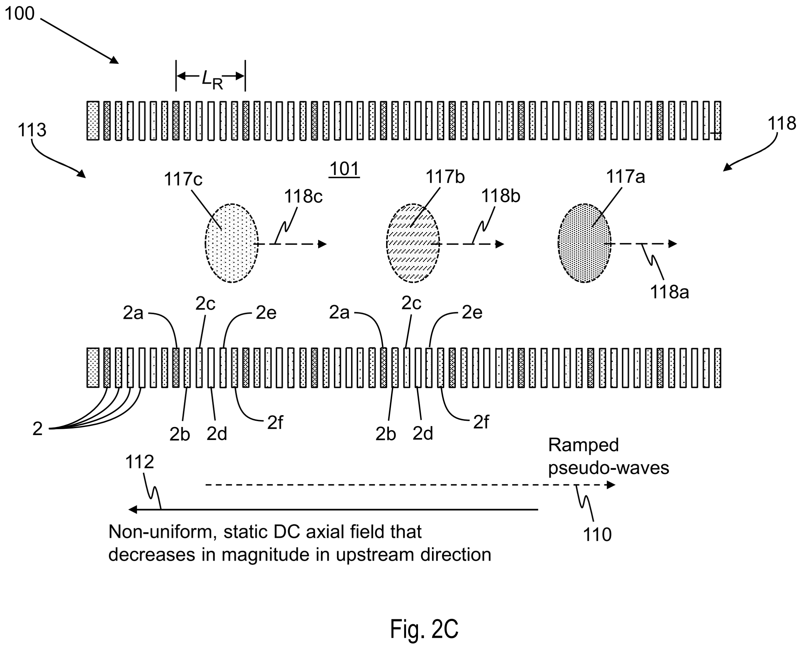

In order to extract the ions that are trapped at various equilibrium positions, as shown in Fig. 2B, the amplitude of the main RF voltage, either phase-shifted and/or frequency-modulated as described above, may be ramped or stepped upward (e.g., progressively increased) with time so that the equilibrium positions corresponding to all $m/z$ values migrate, over the course of the RF voltage amplitude ramping or stepping, towards the ion outlet, as indicated by the displacement vectors 118a, 118b and 118c in Fig. 2C. Additionally or alternatively, the magnitude of the opposing DC field may be ramped or stepped downward (e.g., progressively decreased). In this instance, trapped ions having the smallest $m/z$ values (e.g., the ions of packet 117a) will be the first to pass out of the ion outlet and ions having the greatest $m/z$ values (e.g., the ions of packet 117c) will exit last.

It should be noted that, in alternative embodiments, the migration direction of the travelling waves and the direction of the opposing DC field may be reversed from the directions shown in Figs. 2A-2C. In such alternative embodiments, the ion species having the greatest $m/z$ values will be the first to be outlet from the apparatus, provided that the "direction" of ramping or stepping (e.g., either ramping or stepping "up" or ramping or stepping "down") of the RF amplitude (of travelling waves that urge ions towards the first end 113) and the "direction" of ramping or stepping of the magnitude of the DC field (that urge ions towards the second end 118) are also reversed. It should be further noted that, although many of the elementary examples discussed herein refer to ramping or stepping of either the RF amplitude or the DC field, more generally the RF amplitude and DC field may be ramped or stepped simultaneously, whereby, during the simultaneous ramping or stepping, the RF amplitude and the magnitude of the DC field either both increase or both decrease. In other instances, the simultaneous ramping or stepping may comprise an increase of the RF amplitude and a simultaneous decrease in the magnitude of the DC field. In still other instances, the simultaneous ramping or stepping may comprise a decrease in the RF amplitude and a simultaneous increase in the magnitude of the DC field.

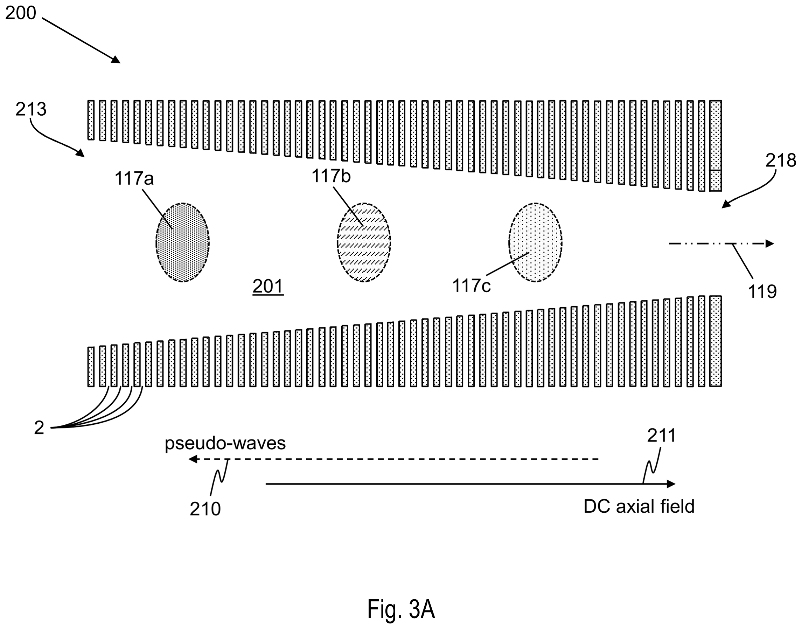

As described above, a stacked ring ion guide that is in the form of an ion tunnel may be made to function as either (a) a single-mass-to-charge ion trap or ion accumulator (as described with reference to Fig. 2A) by providing a uniform DC axial field in opposition to a travelling wave that is uniformly applied across the length of the apparatus or (b) a multiple-mass-to-charge ion-sorting ion trap when there is a longitudinal spatial gradient in either the provided opposing DC field and/or the migrational motive force of the pseudo-wave. For an ion tunnel apparatus, the act of creating a "longitudinal spatial gradient in the migrational motive force of the pseudo-wave" requires providing different RF waveforms (e.g., different RF amplitudes) to the electrodes of the apparatus at various different positions between the ion inlet and the ion outlet. In such instances, the required electronics may be complex, expensive and/or difficult to design or fabricate. However, in the case of an ion funnel ion guide apparatus, such as the ion funnel apparatus 200 depicted in Fig. 3A, a gradient in the depth of pseudopotential wells - and, thereby, a gradient in the migrational motive force -is created by the geometry of the device. Specifically, within ion occupation volume 201 of the ion funnel apparatus 200, the depths of the various pseudopotential wells increase in the direction of convergence of the ion funnel (e.g., see Fig. 1 of U.S. Pat. No. 9,799,503) essentially by virtue of the increasing proximity of electrode edges to the ion beam (centered near the device axis) in the same direction. Accordingly, with the direction of the RF-generated travelling waves directed (arrow 210) so as to urge ions towards the ion inlet 213 and the DC field directed (arrow 211) to urge ions towards the ion outlet 218, the apparatus 200 may be operated as a multiple-mass-to-charge ion-sorting ion trap without the application of any field gradients. Using the configuration shown in Fig. 3A, relatively "light" (small m/z) ions may be trapped within region 117a proximal to the ion inlet 213 while, simultaneously, relatively "heavy" (large m/z) ions are trapped within region 117c which is proximal to the ion outlet 218. As noted previously, intermediate-$m/z$ ions are trapped within region 117b. The trapped ions may be released, in reverse order of their $m/z$ ratios by either ramping up (e.g., to greater values) the magnitude of the DC field and/or ramping down (e.g., to lesser values) the applied RF amplitudes.

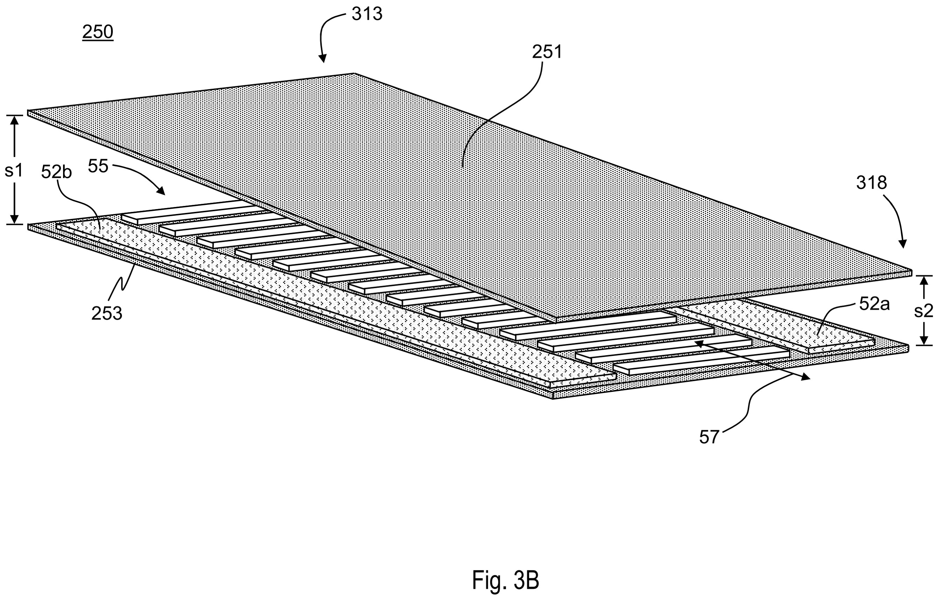

Fig. 3B is a modified version, in accordance with the present teachings, of the ion manipulation and ion guiding device of Fig. 1C. The ion manipulation and ion guiding device 250 that is depicted in Fig. 3B is modified, relative to the device 50 (Fig. 1C), in a fashion that enables it to be operated similarly to the operation, as discussed above, of the ion funnel 200 (Fig. 3A). In contrast to the device 50, in which parallel plates or wafers 51 and 53 are configured to support the arrays 55 of inner electrodes as well as the sets of outer guard electrodes 52a, 52b, the modified device 250 is configured such that the plates or wafers 251 and 253 converge towards one another along a direction away from an ion inlet 313 and towards an ion outlet 318. For example, as shown in Fig. 3B, the plates/wafers 251 and 253 are separated from one another at the ion inlet 313 by a first separation distance, $s_1$, and are separated from one another at the ion outlet 318 by a second separation distance, $s_2$, where $s_1 > s_2$ and wherein there is a continuous convergence of the plates/wafers 251, 253 between the ion inlet 313 and the ion outlet 318.

In some examples, an RF travelling wave may be created along the axis 57 of the device 50 by the manipulation of main RF axial-confinement waveform(s) that are applied to the series of individual electrodes 7a, 7b, 7c, ... of the mutually-facing electrode arrays 55 (see Fig. 1D). Additionally, a DC field that opposes the ion motion that is urged by the RF travelling waves may also be generated within either the device 50 (Fig. 1C) or the modified device 250 (Fig. 3B). For example, a static uniform DC field may be generated within either the device 50 or the modified device 250 by apportioning, among the plurality of inner electrodes of each plate/wafer 251, 253, a DC potential difference that is imposed between the ion inlet 313 and the ion outlet 318. The apportionment of the voltage difference may be achieved, in known fashion, by a voltage divider system. Additionally or alternatively, an axial DC field may be generated or an otherwise-generated axial field may be supplemented by providing the guard electrodes 52a, 52b of each plate/wafer as composed of an electrically resistive material (as opposed to an electrically conductive material, such as a metal). For example, resistive guard electrodes 52a, 52b may be formed of any one of a number of suitable materials (e.g., without limitation, doped glasses, cermets, polymers, etc.) having electrically resistive properties.

Because, within the device 250, the electrodes of the two electrode arrays 55 (one electrode array supported on each of the plates/wafers 251, 253) progressively approach one another along a direction from the ion inlet 313 towards the ion outlet 318, there thus exists a gradient in the depth of pseudopotential wells, with the well depth increasing in the same direction. The increasing well depth creates a gradient in the migrational motive force that is provided by the RF-generated travelling waves. Accordingly, if the RF-generated travelling waves are configured to urge ions that are within the device 250 away from the ion outlet 318 and towards the ion inlet 313 and if the urging of the travelling waves is opposed by a static, uniform DC field that urges the ions towards the ion outlet 318, then different ion species having different respective $m/z$ values will establish different respective equilibrium positions within the device. In this situation, the distribution of equilibrium positions will be similar to the depiction in Fig. 3A, wherein ions 117a having lesser mass-to-charge ratios are closer to the ion inlet than ions 117b, 117c having greater mass-to-charge ratios and wherein ions 117c having the greatest mass-to-charge ratios are closest to the ion outlet. The trapped ions may then be released from the device 250, in reverse order of their m/z ratios by either ramping up (e.g., to greater values) the magnitude of the DC field and/or ramping down (e.g., to lesser values) the applied RF amplitudes.

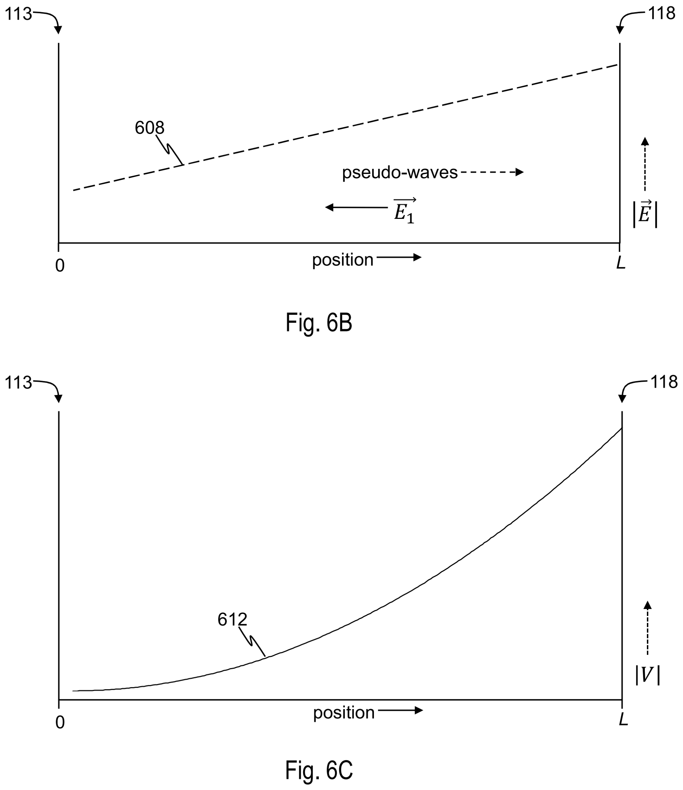

The following discussion relates to Figs. 6A-6H, which are various schematic graphs of voltages and DC electric fields within an ion guide that is operated in accordance with the present teachings. With regard to each of these figures, it is assumed that first end 113, at position 0, corresponds to the left-hand side of the respective graph and that second end 118, at position $L$, corresponds to the right-hand side of the plot. It is also assumed that a set of pseudo-waves are applied to electrodes of the respective ion guide so as to urge ions away from the ion inlet and towards the ion outlet. It is to be noted that the absolute magnitude of the applied DC voltage is plotted in each of Figs. 6C and 6E. If positively charged ions are introduced into an ion guide or ion separator apparatus that is operated as described herein, then the general movement of ions within the apparatus will be as described if the applied DC voltage profiles are of the general form as the profiles shown in Figs. 6C and 6E. However, if negatively charged ions are introduced into the apparatus, then the general movement of ions within the apparatus will be as described if the applied DC voltage profiles have the general form of mirror images (e.g., as reflected across the horizontal axis) of the profiles shown in Figs. 6C and 6E.

As noted above, a uniform DC field may be applied in opposition to the motion of a set of travelling RF potential wells (e.g., a set of pseudo-waves) in order to isolate ions comprising a particular $m/z$ range within an ion guide (e.g., see Fig. 2A). For example, plot 508 of Fig. 6A depicts a uniform axial DC field as may be created by applying a series of DC voltages to the various individual electrodes of the ion guide wherein the applied voltages linearly increase from an ion inlet towards an ion outlet (e.g., plot 501 of Fig. 6A). As also noted above, a non-uniform axial DC field may be applied in opposition to the motion of the pseudo-waves to cause the ion guide to emit ions from its ion outlet in either increasing or decreasing order of the $m/z$ values (e.g., see Fig. 2C).

Fig. 6B schematically illustrates the variation of the absolute magnitude, $|\vec{E_1}|$, of an applied non-uniform axial electric field, $\vec{E_1}$, that urges ions towards first end 113 in which the absolute magnitude, $|\vec{E_1}|$, increases towards second end 118 that is located at position $L$, as shown by plot 608 of Fig. 6B. As shown schematically in Fig. 6C, the non-uniform axial field may be generated by applying a series of voltages to the various electrodes of the ion guide wherein the magnitude, $|V|$, of the applied voltages increases in accordance with a quadratic function from the ion inlet to the ion outlet, as shown by plot 612 of Fig. 6C. Although the magnitude of the field is shown as increasing linearly in Fig. 6B and the corresponding voltage profile in Fig. 6C is described as a quadratic function, the electric field magnitude may be non-linear and the voltage profile may not necessarily conform to a quadratic function.

With regard to the utilization of an ion guide as an ion separation and sorting device (e.g., Fig. 2C) from which ions are emitted in the order of their $m/z$ values in accordance with the present teachings, the mass spectral resolution, $R$, of the device may be tailored by utilizing a non-uniform electric field profile as is schematically depicted in Fig. 6D, which may be generated by applying DC voltages to electrodes in accordance with the voltage profile that is shown by segments 504a and 504b in Fig. 6E. Specifically, good mass spectral resolution may be achieved be employing an electric field profile (dashed lines in Fig. 6D) comprising a first segment 503a and a second segment 503b, wherein a magnitude, $|\vec{E_1}|$, of the DC axial field that opposes the ion motion caused by the pseudo-waves increases to a maximum value, $E_{max}$, within the first segment 503a and remains constant at $E_{max}$ within the second segment 503b. The corresponding profile of DC voltages that are applied to the electrodes (solid lines in Fig. 6E) comprises a quadratic section 504a and a linear section 504b (for comparison, dashed line 504 represents the extension of the purely quadratic profile). The position of the junction between segments 503a and 503b in Fig. 6D is denoted by point pc along the axial length of the apparatus and corresponds to the demarcation, denoted by line 505 in Fig. 6E between the quadratic and linear segments of the voltage profile.

Ions are introduced, via first end 113, into an ion guide apparatus that is capable of being configured with travelling RF voltages and static DC voltages as shown in FIGS 6D and 6E. The position of the first end 113 is indicated as position 0 in Figs. 6D and 6E. Radio Frequency (RF) voltage waveforms are applied to the electrodes of the apparatus to create a set of RF travelling waves that create pseudopotential wells that urge ions through the apparatus from the first end 113 to an outlet 118, which is located at position L. At the same time, DC voltages are applied to the electrodes that create an axial field that has the general form indicated by the dashed lines 503a, 503b in Fig. 6D and that urges ions towards the first end 113. After introduction of the ions, the amplitude(s), $A_{RF}$, of the applied RF voltages is/are ramped (e.g., increased) with time. Under such conditions, as described previously herein, packets of ions having different respective $m/z$ values separate from one another and migrate through the apparatus towards the second end 118 at different rates. Fig. 6D schematically depicts the positions, within the apparatus, of three packets of ions 517a, 517b, 517c having mass-to-charge ratios $(m/z)_L$, $(m/z)_M$, and $(m/z)_H$, respectively, where $(m/z)_H > (m/z)_M > (m/z)_L$ at a particular time, $t_1$, during the ramping before any of the ions reach the plateau region 503b of the DC field profile. The instantaneous position, at any particular time, of any such packet of ions represents the axial location, within the apparatus, at which the instantaneous forward-directed urging of the ions of the packet by the pseudo-waves, as generated by the ramped RF amplitudes at the particular time, slightly overcomes the backward-directed urging of the ions by the static electric field along field segment 503a. As discussed previously, these opposed forces cause the ions having the smallest $m/z$ values (e.g., ions of packet 517a) to migrate towards the ion outlet the most rapidly and, thus, these ions arrive at point p1 at time $t_1$. The ions having the greatest $m/z$ values (e.g., ions of packet 517c) migrate the most slowly and, thus, only reach point p3 at time $t_1$. At the same time, the ions having intermediate $m/z$ values (e.g., ions of packet 517b) arrive at point p2.

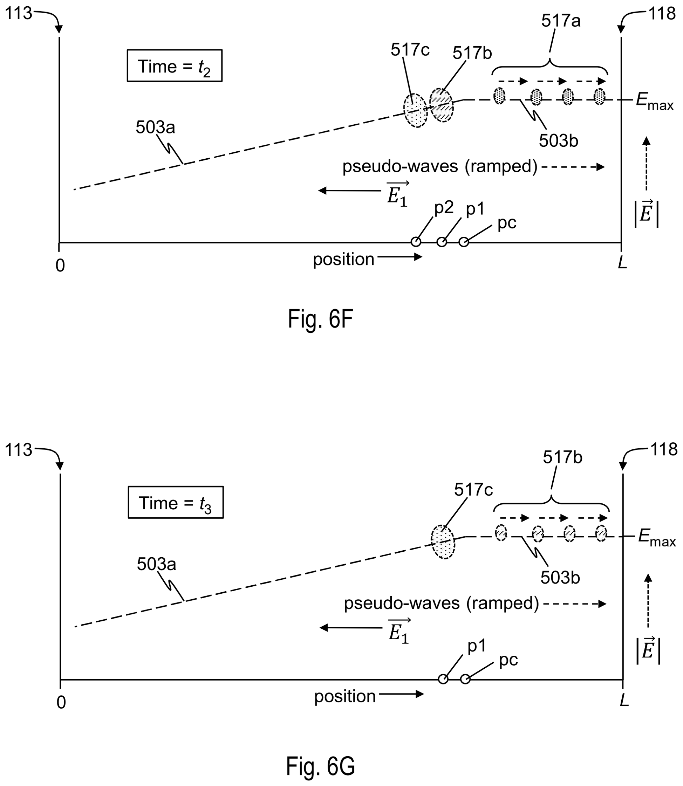

Fig. 6F is a schematic depiction of the positions of the packets of ions of Fig. 6D at a second time, $t_2$, subsequent to time $t_1$, at which the applied RF amplitude(s) has/have been ramped to such an extent that the forward-urging pseudopotential forces on the ions of ion packet 517a first equal and then substantially exceed the maximum backward-urging electrostatic forces corresponding to $E_{max}$ along field-magnitude segment 503b. As a result, multiple portions of the ions of packet 517a are collected by individual travelling pseudopotential wells and are transported downstream thereby, conveyor-belt style, from position pc to the second end 118 at position $L$. This movement of the ions along the flat field-strength profile 503b is relatively rapid, in comparison to the migration along the ascending voltage profile 503a, since additional ramping of the RF amplitude(s) is not met by a corresponding increase in the backward-urging DC field. Simulations of ion motions indicate that although a portion of the ions of each ion packet may migrate in the reverse direction (e.g., towards the first end 113) within constant field region 503b, they do so less frequently than within the variable field region 503a. The ions are able to efficiently escape from the region 503a in the vicinity of point pc because, on average, the travelling pseudopotential wells move them forward away from point pc and towards the second end 118.

At the same time that ions of packet 517a are transported from position pc to position L, the ions of packets 517b and 517c remain at positions p1 and p2 that are upstream from position pc as a result of the earlier spatial separation of the various packets of ions. Since the forward-urging pseudopotential forces at these positions are merely sufficient to approximately balance (e.g., slightly exceed) the backward-urging DC field forces, the ions in both of these packets continue to migrate relatively slowly towards position pc as the RF amplitude is further ramped until a subsequent time, $t_3$, at which packet 517b reaches position pc. As shown in Fig. 6G, still further ramping of the RF amplitude(s) causes relatively rapid transport of the ions of the packet 517b from position pc to position L. Yet additional ramping causes the ions of packet 517c to be similarly transported (not shown).

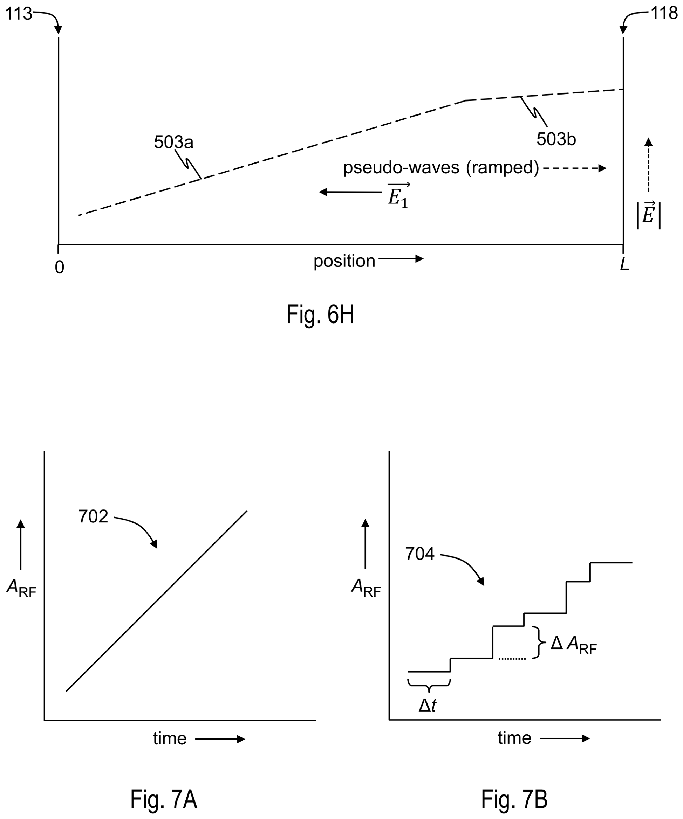

The transport of ions through an ion guide, in the fashion described above with reference to Figs. 6G-6H, causes the emergence, from the second end 118 of the apparatus, of ion packets having different respective $m/z$ values to be spaced apart, in time, by at least the time of flight of the ions from position pc to the second end 118. The axial field profile that opposes the forward motion of the ions need not be exactly as shown in Figs. 6D, 6F and 6G. For example, a voltage profile of the general form shown in Fig. 6H, wherein the profile along the second segment 503b is not constant, may also be usefully employed. Simulations of ion motions and distributions show that the exact form of the electric field in the "constant" region (e.g., the region indicated by voltage profile segment 503b) is not critical. The simulations indicate that, although the best *m/z* resolution is achieved when the field within the profile segment 503b is constant, small variations have only minor impacts on performance. Regardless, any gradient of the DC field in the profile segment 503b should be less than the gradient of the DC field in the profile region 503a that is used for initial spatial separation of ion species according to *m/z.*

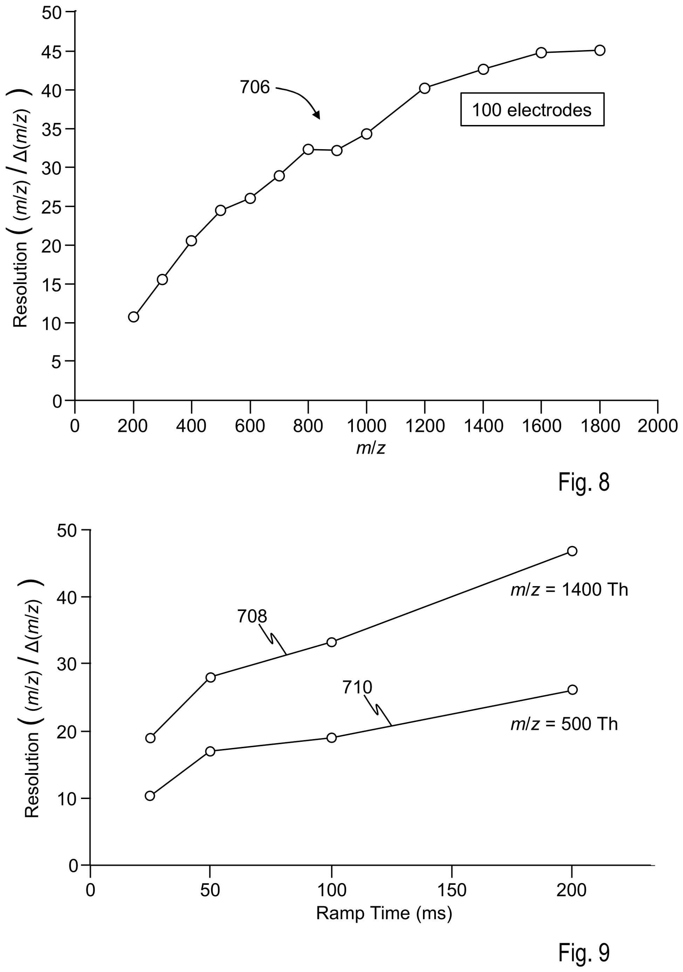

Further, the rate of ramping of the amplitude(s), $A_{RF}$, of the applied RF waveform(s) may be chosen depending on the requirements of a particular measurement. For example, if the ion guide apparatus is employed as a type of mass spectrometer that is operated in a general survey mode, with detection of all ions as they emerge from an ion outlet, then a continuous ramping of $A_{RF}$, as is schematically depicted by illustrative plot 702 in Fig. 7A, may be employed. Although Fig. 7A illustrates a linear variation of $A_{RF}$ with time, the variation may alternatively be non-linear, with steeper slopes (e.g., more rapid increase in amplitude) at those times during the ramping at which it is expected that the ions that emerge from the apparatus do not require detection at the maximum achievable resolution and shallower slopes (e.g., slower rate of increase of amplitude) at other times at which it is expected that the emerging ions require a greater level of *m/z* discrimination. For example, Fig. 8 shows an illustrative plot 706 of the expected achievable mass spectral resolution of ions as a function of *m/z* at a constant RF ramp rate. Fig. 9 shows illustrative plots 708 and 710 that show that greater resolution is expected with longer time durations allotted for completion of the ramping. Fig. 7B shows an illustrative plot 704 that illustrates discontinuous, stepped ramping with, for example, longer dwell times, $\Delta t,$ at times at which ions of particular interest are expected to emerge from the apparatus, and variable amplitude jumps, $\Delta A_{RF}$, at times at which no ions of interest are expected. Such expected times of emergence of ions of particular *m/z* values may be predetermined by calibration of the transit times of known standard ions through the apparatus under various conditions.

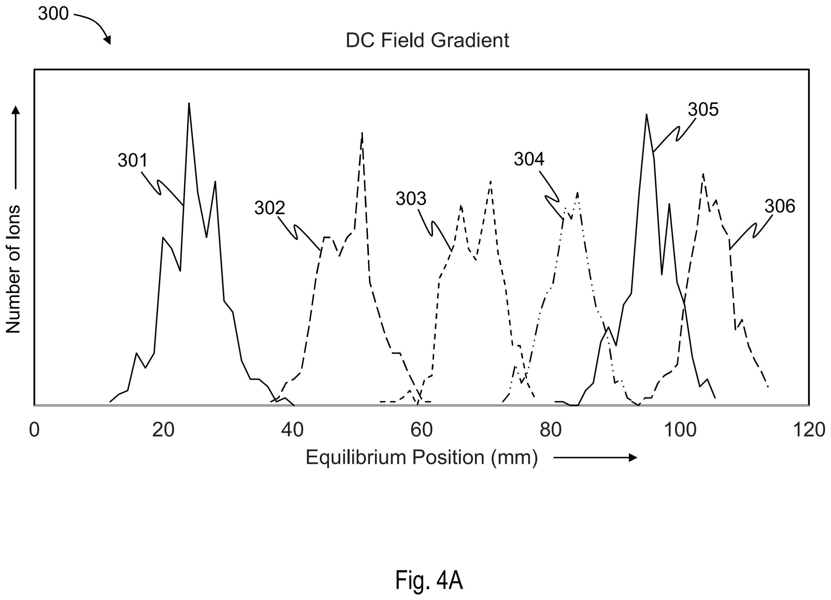

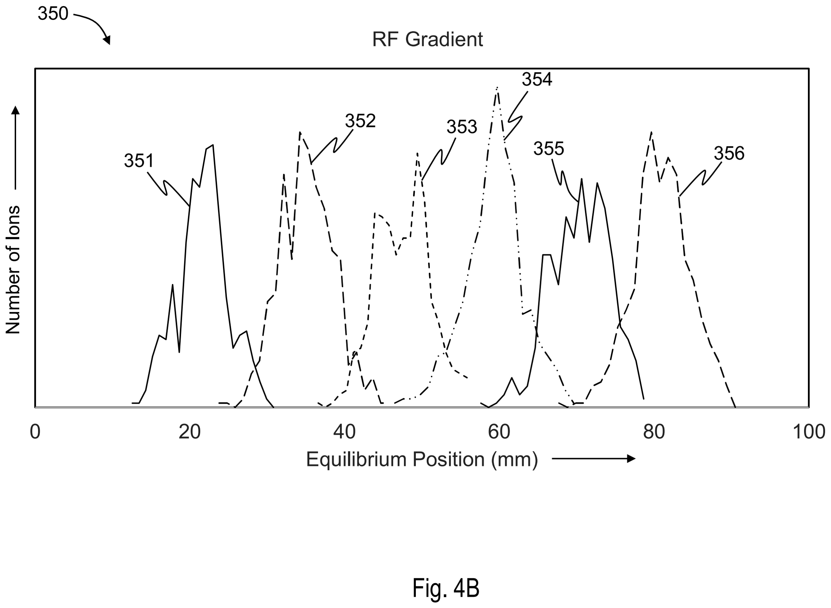

Figs. 4A and 4B represent simulated performance of an ion sorting apparatus that is configured and operated in accordance with the present teachings, as shown by plots 300 and 350. The simulated apparatus is 160 mm wide, having 320 electrodes, and 160 pseudopotential wells. The simulation assumed a general separation/equilibration time of 40 milliseconds (ms) and assumed operation in the presence of 100 mTorr of nitrogen gas. The plots in Fig. 4A represent the equilibrium positions of ions of various *m/z* ratios within such an apparatus under the application of a DC axial field gradient while, at the same time, under the application of RF waveforms that do not vary across the length of the apparatus. In contrast, the plots in Fig. 4B represent the equilibrium positions of the same ions under application of an RF amplitude gradient across the length of the apparatus in the presence of a uniform DC axial field. Both trace 301 (Fig. 4A) and trace 351 (Fig. 4B) represent ions having a hypothetical *m/z* value of 500 Th. Similarly, traces 302 and 352 represent ions having *m/z* ratio of 600 Th; traces 303 and 353 represent ions having *m/z* ratio of 700 Th; traces 304 and 354 represent ions having *m/z* ratio of 800 Th; traces 305 and 355 represent ions having *m/z* ratio of 900 Th; and traces 306 and 356 represent ions having *m/z* ratio of 1000 Th.

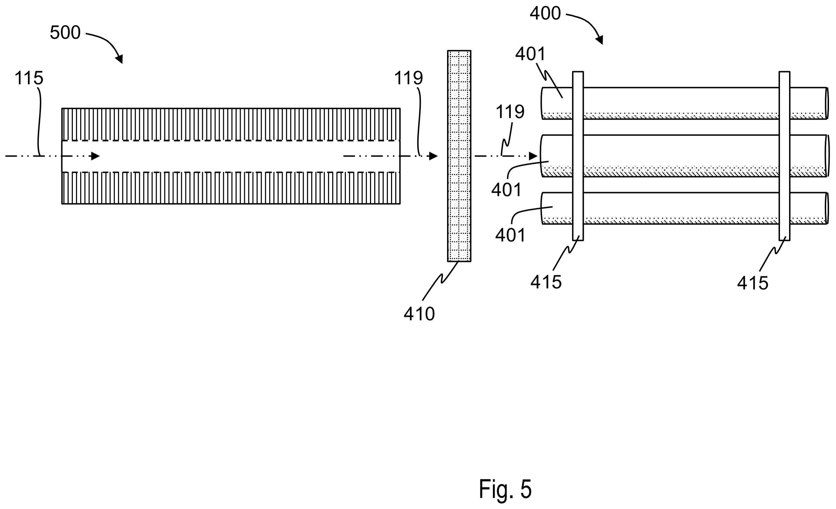

Fig. 5 is a schematic depiction of a portion of a mass spectrometer apparatus that includes an ion filter 400 or other mass spectrometer component arranged in series with ion transport apparatus 500 that is configured in accordance with the above-described teachings. The apparatus 500 may comprise any of the embodiments that are illustrated in the accompanying drawings or may comprise any non-illustrated apparatus that is operated in accordance with the present teachings including but not limited to: ion guides comprising series of electrodes disposed on or otherwise adhered to parallel plates or wafers (e.g., Figs. 1C, 1D), ion guides comprising series of electrodes disposed on or otherwise adhered to non-parallel plates or wafers (e.g., Fig. 3B), ion tunnels (e.g., Figs. 2A-2C), ion funnels (e.g., Fig. 3A), ion guides having both ion tunnel and ion funnel portions in any number (e.g., Figs. 1A-1B), ion guides in which the series of electrodes comprise series of segments of segmented quadrupole rods; and other ion guides that are capable of providing both an axial field gradient (either end-to-end or across only a portion of the length of the device) as well as a longitudinal gradient (either end-to-end or across only a portion of the length of the device) in RF amplitude or in some other RF parameter.

As illustrated, the apparatus 400 is a quadrupole mass filter that comprises four mutually parallel rod electrodes 401 that are maintained in mutual alignment by support structures 415 that may also provide electrical connections to the rods. In other instances, the apparatus may comprise, without limitation, a multipole ion trap, a multipole fragmentation cell, an ion guide, or a mass analyzer of any type. Preferably, a controllable ion gate 410 is disposed between an ion outlet of the apparatus 500 and an ion inlet of the apparatus 400.

In operation of the system depicted in Fig. 5, the apparatus 500 provides an outlet stream 119 of ions wherein, at any one time, the range of mass-to-charge (m/z) values of ions composing the outlet stream 119 is reduced relative to a broader range of *m/z* values that are provided to an inlet end of the apparatus 500 within an inlet ion stream 115 and wherein the range of (m/z) values composing the outlet stream 119 changes, over time, to either greater *m/z* values or smaller *m/z* values. In a practical sense, the operation of the apparatus 500 is thus similar to the operation of a conventional mass filter in which the mass-to-charge pass band of the mass filter is scanned with time with the exceptions that the pass band of the apparatus 500 is broader than that of a conventional mass filter and that ions within each pass band range may be accumulated and temporarily stored within the apparatus 500 prior to their release from the apparatus. Thus, the apparatus 500 performs the function of ion accumulation as well as the function of partial pre-separation of ions prior to transferring the ions into the conventional apparatus 400. If the conventional apparatus 400 comprises a quadrupole mass filter, then such mass filter may isolate narrower *m/z* ranges, each isolated range comprising ion species of particular analytical interest.

The ion outlet stream 119 may be either continuous in time or discontinuous in time. The continuity of delivery of the ion outlet stream to the apparatus 400 may be controlled by operation of an ion gate 410, thereby restricting the *m/z* range of ions that may be transferred to the downstream apparatus during any particular time interval. During the times that the ion gate 410 is closed (thereby restricting transmission), new packets of ions from the inlet ion stream 115 may be accumulated and sorted within the upstream apparatus 500 as described herein supra. At such times, the applied RF waveforms and DC voltages are coordinated so as to cause the sorting (e.g., Fig. 2B). At the time that the ion gate 410 is open, the internal RF waveforms and DC voltages are adjusted to permit migration of the accumulated ions out of the apparatus in either increasing order (e.g., Fig. 2C) or decreasing order (e.g., Fig. 3A) of their *m/z* values.

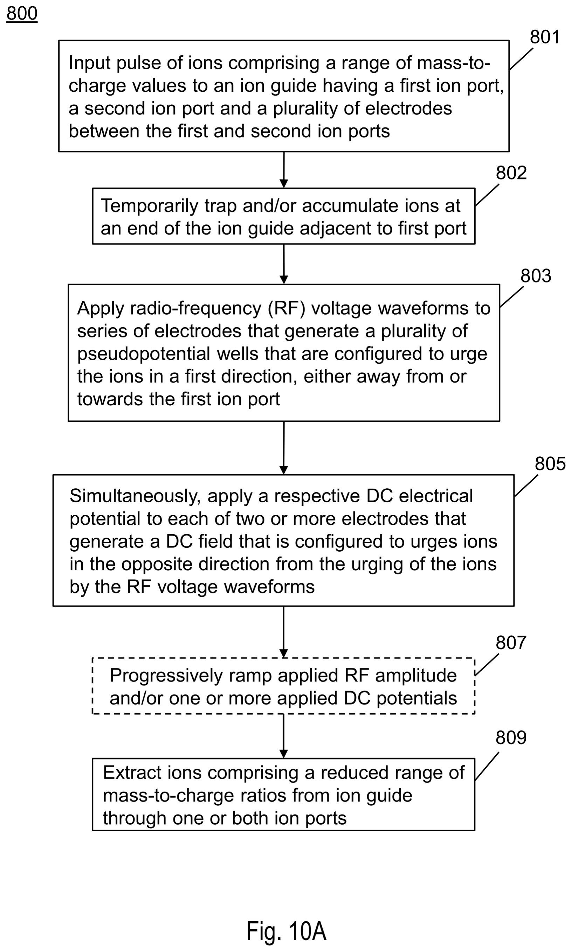

Fig. 10A is a flow diagram of a first method (method 800) of operating an ion guide in accordance with the present teachings. In the first step, step 801 of the method 800, a pulse of ions comprising a range of mass-to-charge (*m/z*) ratios are input to a first port of two separate ion ports of an ion guide. In step 802, the ions are temporarily trapped and/or accumulated within the ion guide at an end of the ion guide that is adjacent to the first port. The ions may be trapped and/or accumulated thereat by applying DC voltages to electrodes near the first port that temporarily create a temporary, static potential well near that port. In the following step 803 (which may be performed prior to or simultaneously with steps 801 and 802), radio-frequency (RF) voltage waveforms that generate a plurality of pseudopotential wells that are configured to urge the ions in a first direction that is either away from the first ion port and towards the second ion port or, alternatively, towards the first ion port are applied to series of electrodes of the ion guide. In step 805, which occurs simultaneously with step 803, DC electrical potentials that generate a DC field that urges the ions in a direction that is opposite to the urging of the ions by the pseudopotential wells are applied to each of two or more respective electrodes. The DC field may either be uniform (e.g., constant magnitude that does not vary with position) or non-uniform (e.g., having magnitude that is variable with position) across the length of the ion guide. In optional step 807, either the applied RF amplitude(s) and/or the one or more applied DC potentials are progressively ramped over time, in either an increasing or a decreasing fashion, in order to facilitate the differential migration of ions towards the second ion port. Finally, in step 809 ions comprising a range of *m/z* ratios that is reduced relative to the range of *m/z* ratios (e.g., is a subset of the range) of the originally input ions, are extracted from the second port of the ion guide. The extracted ions may be inlet to another component of a mass spectrometer apparatus, such as a mass filter, a collision cell or a mass analyzer.

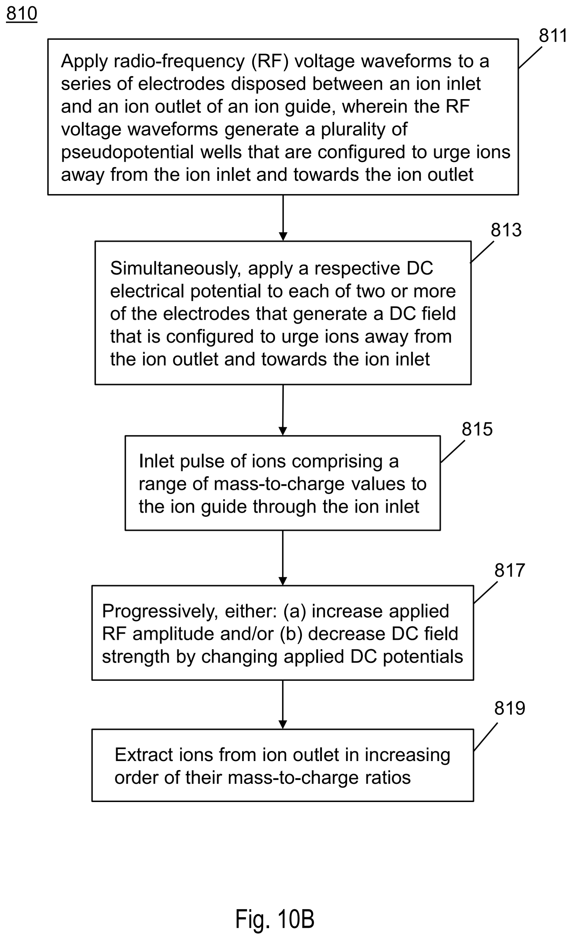

Fig. 10B is a flow diagram of a second method (method 810) of operating an ion guide in accordance with the present teachings. In step 811 of the method 810, radio-frequency (RF) voltage waveforms are applied to a series of electrodes disposed between an ion inlet and an ion outlet of an ion guide, wherein the RF voltage waveforms generate a plurality of pseudopotential wells that are configured to urge ions away from the ion inlet and towards the ion outlet. In step 813, which is executed simultaneously with the execution of step 811, respective DC electrical potentials are applied to each of two or more of the electrodes that generate a DC field that is configured to urge ions away from the ion outlet and towards the ion inlet. The DC field may either be uniform (e.g., constant magnitude that does not vary with position) or non-uniform (e.g., having magnitude that is variable with position) across the length of the ion guide. Subsequently, in step 815, a pulse of ions comprising a range of mass-to-charge values is inlet to the ion guide through the ion inlet. In step 817, either (a) the amplitude(s) of the applied RF waveforms are increased and/or (b) the magnitude of the applied DC field is progressively decreased to cause ions to differentially migrate through the ion guide and towards the ion outlet. In step 819, the ions are extracted from the ion outlet in increasing order of their mass-to-charge ratios. The extracted ions may be inlet to another component of a mass spectrometer apparatus, such as a mass filter, a collision cell or a mass analyzer. According to a variation of the method 810, the step 815 may be executed prior to the steps 811-813 and an additional step of trapping the pulse of ions within a region of the ion guide adjacent to the ion inlet may be executed together with execution of the steps 811-813.

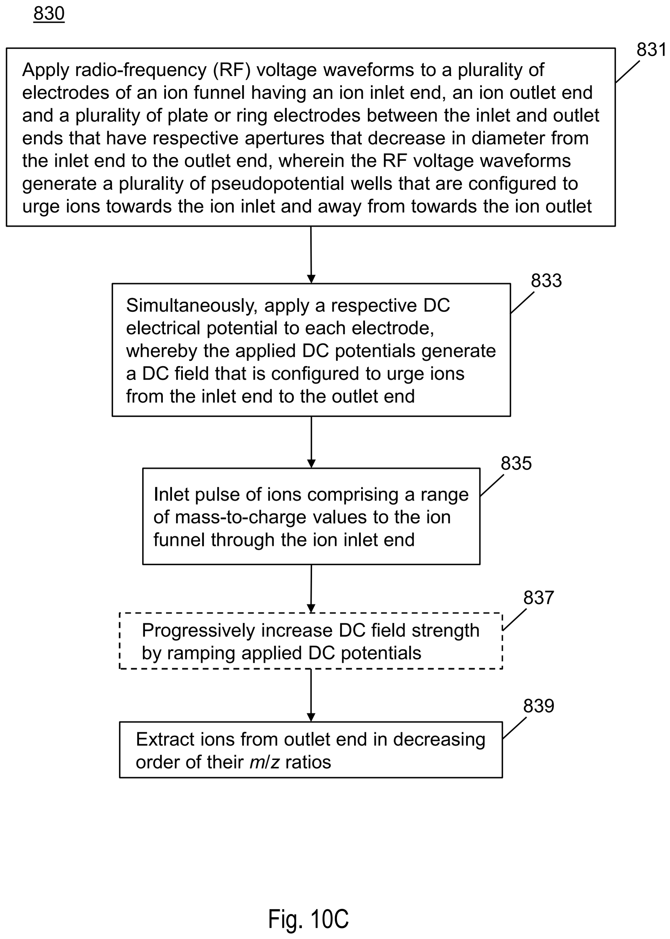

Fig. 10C is a flow diagram of a third method (method 830) of operating an ion guide in accordance with the present teachings. In step 831, radio-frequency (RF) voltage waveforms are applied to a plurality of electrodes of an ion funnel having an ion inlet end, an ion outlet end and a plurality of plate or ring electrodes between the inlet and outlet ends that have respective apertures that decrease in diameter from the inlet end to the outlet end, wherein the RF voltage waveforms generate a plurality of pseudopotential wells that are configured to urge ions towards the ion inlet and away from the ion outlet. In step 833, which is executed simultaneously with the execution of step 831, a respective DC electrical potential is applied to each of the electrodes, whereby the applied potentials generate a DC field that is configured to urge ions away from the inlet end towards the outlet end. Subsequently, in step 835, a pulse of ions comprising a range of mass-to-charge values is inlet to the ion funnel through its ion inlet end. In optional step 837, the magnitude (e.g., strength) of the DC field towards the ion outlet end of the ion funnel may be increased by ramping the DC voltages that are applied to the electrodes in order to facilitate the migration of ions towards the ion outlet end of the ion funnel. Finally, in step 839, ions are extracted from the outlet end of the ion funnel in decreasing order of their *m/z* ratios. The extracted ions may be inlet to another component of a mass spectrometer apparatus, such as a mass filter, a collision cell or a mass analyzer.

The discussion included in this application is intended to serve as a basic description. The present invention is not intended to be limited in scope by the specific embodiments described herein, which are intended as single illustrations of individual aspects of the invention. Functionally equivalent methods and components are within the scope of the invention, as defined by the claims. Various other modifications of the invention, in addition to those shown and described herein will become apparent to those skilled in the art. For example, a method of generating axial DC fields is described herein in which an end-to-end DC voltage is proportioned (e.g., by using voltage dividers) across a series or stack of electrodes to which RF voltages are also applied. However, many other means of generating axial fields within ion guides have been described, many of which utilize sets of auxiliary electrodes to generate axial fields. Such auxiliary electrodes are often separate from and in addition to a series or stack of main electrodes that receive the RF voltage waveforms. Many alternative methods for generating axial fields or drag fields are described in U.S. Pat. U.S. Pat. No. 7,675,031 (Konicek at al.); U.S. Pat. No. 5,847,386 (Thomson et al.); U.S. Pat. No. 7,985,951 (Okumura et al.; U.S. Pat. No. 7,064,322 (Crawford, et al.); U.S. Pat. No. 7,064,322 (Crawford, et al.); and U.S. Pat. No. 6,417,511 (Russ, IV, et al.). Adaptation of one or more of these known axial field generation techniques to the methods and apparatuses described herein is contemplated and would be within the ability of one of ordinary skill in the art.

As another example of a modification of the above teachings, a variation in the spacing between adjacent ring electrodes 2 (Figs. 1A, 2A, 2B, 2C) or between adjacent electrodes of an array 55 that is supported on a substrate (Fig. 1C) may be used as an additional method for creating a longitudinal spatial gradient in the migrational motive force of an RF-derived travelling wave. For example, the inter-electrode spacing could vary in either a continuous or a discontinuous fashion along the length of an axis of an ion guide or ion separator apparatus in accordance with the present teachings and this variation would create a corresponding variation in the depth of the pseudopotential wells along the length of the device.

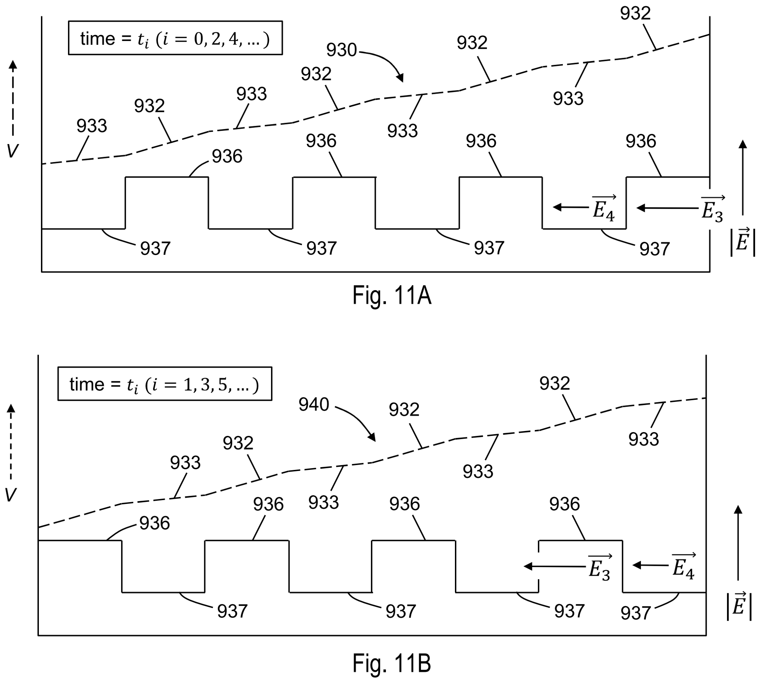

As another example of a modification of the above teachings, reference is now made to Figs. 11A-11B. The hypothetical voltage plots that are depicted in Figs. 11A-11B, when considered together, provide an example of the application, to an ion guide apparatus, of two separate DC voltage profiles 930, 940 that alternate in time with one another. The left end of each voltage profile corresponds to an ion inlet or "upstream" end of an ion guide apparatus and the right end of each profile corresponds to an ion outlet or "downstream" end of the apparatus. In operation, each DC profile is provided simultaneously with the providing of an RF-modulated travelling-wave that generates RF-induced pseudopotential wells that urge ions towards the downstream end of the apparatus to which the DC profiles are provided. The DC voltage profiles 930, 940 are provided in order to provide forces to ions that are in opposition to the pseudopotential-derived force and that thus urge ions towards the upstream end of the apparatus. Accordingly, the algebraic sign of the slope of the profiles 930, 940 implicitly assumes that the ions are positively charged.

Each voltage profile in Figs. 11A-11B comprises a series of steep-slope segments 932 separated from one another by a series of shallow-slope segments 933. The terms "steep-slope" and "shallow-slope" are used herein in only a relative sense and do not imply any particular numerical values of slopes or of applied voltages. The steep-slope segments of the voltage profile correspond to an upstream-directed electric field vector $\overrightarrow{E_3}$ and the shallow-slope segments correspond to a second upstream-directed electric field vector, $\overrightarrow{E_4}$, where the vector magnitudes are such that $|\overrightarrow{E_4}| < |\overrightarrow{E_3}|$. The voltage profile 930, is applied at time periods, $t_i$, where i = 0,2,4, ... and the voltage profile 940, is applied at time periods where i = 1,3,5, ... Each time the voltage profile changes, a section of the apparatus that was previously provided with the steep-slope profile is subsequently provided with the shallow-slope profile and vice versa.

It may be observed that the change from voltage profile 930 (Fig. 11A) to voltage profile 940 (Fig. 11B) and vice versa is equivalent to either a simple leftward or rightward shift of a single profile, with the shift being equal to the constant spatial width of the profile segments. However, with appropriate finer control of the apportioning of voltages provided to the various individual electrode segments that create the electric fields and to the cycling of the provided voltages to those electrodes, the shift may be caused to be much smaller than the segment widths. In such cases, the positional changes of voltage profiles as well as of the "peaks" 936 and "valleys" 937 of the profile of electric field magnitude may be made to more closely approximate a continuous profile shift and the positional changes of the peaks and valleys 936, 937 may be termed as a "DC travelling wave". The providing of such an upstream-migrating DC travelling wave in conjunction with the simultaneous providing of a downstream-migrating RF travelling wave may facilitate the separation and concentration, at an upstream end of an ion guide apparatus, of certain targeted "heavy" ion species if the rate of upstream migration of the peaks 936 is controlled so as to match the speed of movement of the target ions along the length of the apparatus. Generally, "light" ions will also migrate towards the downstream end of the apparatus under such conditions, but with less efficiency. Conversely, a downstream-migrating DC travelling wave may facilitate the separation of "light" ions and the concentration of those ions at the downstream end of the apparatus and/or their elimination from the apparatus at the ion outlet. Various operational parameters may be controlled as needed.

It should be noted that, with progressively increasing gas pressure above 0.01 Torr, the performance of an ion guide apparatus as described above will be progressively altered. Such changes are anticipated to result from the increasing probability of collisions between ions and gas molecules at increasing gas pressures. With slight increases in pressure above 0.01 Torr, the general characteristics of apparatus performance will continue to be as described above but there will be changes in *m/z* resolution and in the speed at which ion species migrate through the apparatus. In general, although the greater gas pressure will counteract both the downstream-directed and upstream-directed urgings created by the applied voltages, the pressure effect will be greatest in regard to the RF travelling waves because of a reduction in the pseudopotential well depths with increasing gas pressure. As a result, as the internal pressure increases, the effects of the *m/z* independent force that is exerted on all ions by the applied DC field will become more pronounced, relative to the urgings exerted by the RF travelling wave. Accordingly, at such gas pressures, the performance of an ion guide apparatus (e.g., *m/z* resolution, ion residence time) as described above may be advantageously modified, depending on the requirements of a particular measurement, experiment or analytical program, by control of the gas pressure.

As the gas pressure inside an ion guide apparatus increases still further, the ion-molecule collisional effects will become increasingly pronounced, relative to the effects of the applied DC and RF voltages, such that, above some gas pressure that depends on apparatus configuration (e.g., length, cross-sectional area, gas composition, etc.), the collisional effects dominate over the *m/z* dependent effects of the applied voltages and the apparatus performance tends to resemble an ion mobility separation apparatus, the performance of which is moderated by the applied DC and RF voltages. The performance of such an ion mobility apparatus may be advantageously modified, depending on the requirements of a particular measurement, experiment or analytical program, by controlling the magnitude or magnitudes of one or more applied RF voltage waveforms or by controlling one of more of the frequencies of the applied voltage waveforms.

Accordingly, gas pressure may be considered as an additional parameter to be taken into account during calibration of the performance of an apparatus that is operated as described by the present teachings. More generally, gas pressure is one of many operational parameters, such as apparatus length, apparatus cross-sectional area, gas composition, RF frequencies, etc., that may affect mass spectral results (e.g., mass spectral resolution and measurement speed) but that are difficult to theoretically model, when taken in combination. As a result, apparatus behavior should be calibrated for each particular apparatus prior to operation so that the effects of these parameters are well understood in each instance.

In some embodiments, an ion guide as described herein (also referred to as an ion sorter) is used to improve the efficiency of a mass spectrometry experiment. Conventional mass spectrometry experiments are inherently inefficient, with a mass filter of the mass spectrometer sometimes eliminating 99% or more of the available ions. To reduce this inefficiency, an ion sorter is included in or positioned near an inlet to the mass spectrometer. As described above, the ion sorter accumulates ions and spatially sorts the ions according to *m/z* of the ions. The ions are then selectively ejected from the ion sorter, such as in order of increasing *m/z* or decreasing *m/z.* The mass spectrometer receives the ejected ions and manipulates the ions, such as by filtering, fragmentation, and/or mass analysis. By using the ion sorter to pre-separate ions according to *m/z* before filtering the ions at the mass filter, a smaller percentage of ions are lost at the mass filter, thus improving the efficiency and sensitivity of mass spectrometry experiments as compared with conventional mass spectrometry techniques.

Ions may be ejected from an ion sorter similarly to ejecting ions from a traditional ion trap by continuously scanning the operating point of the ion sorter over time over an *m/z* range of interest (e.g., the *m/z* range encompassing all ions within the ion sorter or the *m/z* range from the lowest target *m/z* to the highest target *m/z).* The operating point of the ion sorter is the combination of the parameter values that determine which ions migrate out of the ion sorter. In some examples, the operating point of the ion sorter is the combination of the magnitude of the applied DC voltages and the amplitude of the applied RF voltage waveform(s). In further examples, the operating point also includes the pressure within the ion occupation volume and/or a flow rate of a carrier gas flowing through the ion occupation volume. Where the operating point of an ion sorter is determined by the amplitude of the applied RF voltage waveform(s) and the magnitude of applied DC voltages, ions may be ejected from the ion sorter by continuously ramping at least one of the amplitude of the applied RF voltage waveform(s) or the magnitude of the applied DC voltages. For example, as shown in Fig. 7A, the amplitude(s) $A_{RF}$ of the applied RF voltage waveform(s) are ramped upward linearly over time, so that the forces generated by the RF travelling wave overcome the opposing forces of the DC electric field and eject ions from the ion sorter in order of increasing *m/z* of the ions. On the other hand, ramping down the magnitude of the applied DC voltages results in a weaker DC electric field force opposing the RF travelling wave, so that the forces generated by the RF travelling wave overcome the opposing forces of the DC electric field and eject ions from the ion sorter in order of increasing *m/z* of the ions.

The resolution of an ion sorter is much like traditional ion traps in that the observed resolution of the subsequent mass analysis scales approximately with the square root of the mass analysis acquisition time. If an ion sorter ejects ions like a traditional ion trap, the resolution of the mass analysis will improve as the time to eject the ions is slowed. The resolution of the mass analysis is based on the relative position in *m/z* of the closest two precursor ions. For example, a target resolution for two adjacent ions may be given by the formula $m_2/(m_2 - m_1)$ where $m_1$ is *m/z* of the lighter ion and $m_2$ is *m/z* of the heavier ion. In many mass spectrometry experiments, only a relatively small number of analytes included in the sample to be analyzed are of interest to the experimenter. Accordingly, time is wasted when continuously scanning the operating point of the ion sorter over the full *m/z* range of interest. The need to scan *m/z* ranges that are not of interest either results in less time to scan the *m/z* of the targets and, hence, produces data that does not achieve the target resolution or results in the need to dedicate more time to the experiment to obtain the target resolution. Thus, continuously scanning the operating point has a tradeoff between resolution and time required to eject ions.

However, the ion sorter is not limited to a continuously scanning operation because the ejection process is not based on resonant excitation, as in conventional ion traps. Rather, ejection from the ion sorter is based on the mass cut-off of the operating point, thereby allowing the ion sorter to be discontinuously stepped between operating points (e.g., from a first operating point to a second operating point). When the direction of the RF travelling wave is toward the outlet of the ion sorter (low mass cut-off mode), ions trapped within the ion sorter that have an *m/z* equal to or less than the low mass cutoff (LMCO) of the operating point migrate, due to the combined forces exerted by the travelling wave and the DC electric field, out of the ion sorter in the direction of the travelling wave. Ions that have an *m/z* greater than the LMCO remain trapped in the ion sorter. When the direction of the DC electric field is toward the outlet of the ion sorter (high mass cut-off mode), ions trapped within the ion sorter that have an *m/z* equal to or greater than the high mass cut-off (HMCO) of the operating point migrate, due to the combined forces exerted by the travelling wave and the DC electric field, out of the ion sorter in the direction of the DC axial field. Ions that have an *m/z* less than the HMCO remain trapped in the ion sorter.

When the target *m/z* values to be mass analyzed are known before performing a mass spectrometry experiment, such as when using acquisition scheduling, the ion sorter can be discontinuously stepped, such as to set the operating point based on the target *m/z* values. Acquisition scheduling is a technique in which the acquisition of mass spectra for one or more known target *m/z* are scheduled based on the expected elution time of the target *m/z* (e.g., retention time in chromatography applications, wherein retention time is generally measured as the period of time between injection of the sample into the mobile phase of an upstream chromatography system and the relative intensity peak maximum for the target *m/z* after chromatographic separation). A target *m/z* refers to a specific *m/z,* with or without a mass tolerance window (e.g., +/- 0.5 *m/z*)*,* or a narrow range of *m/z* (e.g., an isolation window with a width or range such as 20 *m/z,* 10 *m/z,* 4 *m/z,* 3 *m/z,* etc.), encompassing a target analyte (e.g., an ion of interest, an ion scheduled for mass analysis, etc.). Each operating point may be selected to eject ions of a distinct target *m/z.* This stepped operation of the ion sorter provides the highest separation resolution in the shortest amount of time.

As an example of acquisition scheduling, targeted mass spectrometry is a technique in which a mass analysis is performed for a known list of analytes included in a sample. Targeted mass spectrometry experiments are designed to gather quantitative information about a set of analytes, the identity of which are known before the experiment starts. In conventional targeted mass spectrometry experiments, the sample is introduced to a separation system (e.g., a liquid chromatography system, a gas chromatography system, a capillary electrophoresis system, etc.), which separates analytes and introduces the analytes to the mass spectrometer as the analytes elute from the separation system. Given some knowledge about the analytes' expected elution times from the separation system, an acquisition schedule can be created that specifies which analytes (e.g., target *m/z)* the mass spectrometer will target for mass analysis at which time during the experiment. Analytes that are part of such targeted assays are often referred to as "targets," "target ions," or "target analytes". During the experiment, when the elapsed time is a value between a target's elution start and stop times, the target is said to be "active". A mass filter in the mass spectrometer is configured to transmit only target ions for mass analysis while filtering out all other non-target ions. This helps utilize the instrument resources more efficiently than if mass spectra were acquired continuously for every target in the assay.

As mentioned, ions trapped within an ion sorter may be ejected in order of increasing or decreasing *m/z* by discontinuously stepping the ion sorter through a plurality of operating points, where each operating point represents a distinct step. It will be recognized that continuously scanning the operating point across an *m/z* range, as in conventional methods, may in some regards be considered to be a series of small, discrete steps, where each step is a distinct operating point maintained for a very brief, constant period of time (e.g., 1 millisecond per 1 *m/z)*, so that the full *m/z* range of interest can be scanned. However, in some examples discontinuously stepping the ion sorter differs from continuously scanning the ion sorter in that discontinuously stepping the ion sorter means that the step time for any one or more operating points (e.g., for one or more target operating points) is greater than the step time for other operating points (e.g., for one or more non-target operating points). For example, the step time for a target operating point may be greater than a maximum, average, or median step time of the non-target operating points. The step time refers to the amount of time that a particular operating point (e.g., combination of amplitude of RF voltage waveform(s) and applied DC voltages, or the LMCO or HMCO of the operating point) remains unchanged. A target operating point refers to an operating point that is configured for ejection of ions having a target *m/z* (although it will be recognized that all ions having an *m/z* less than the LMCO of the target operating point, when operated in low mass cut-off mode, will also be ejected, and all ions having an *m/z* greater than the HMCO of the target operating point, when operated in high mass cut-off mode, will also be ejected). A non-target operating point refers to an operating point that is not configured to eject ions of a target *m/z.* A non-target operating point is an intermediate operating point configured to eject ions having an *m/z* between adjacent target *m/z.*

Additionally or alternatively, discontinuously stepping the ion sorter through a plurality of operating points includes stepping directly from a first target operating point to a second target operating point without any intervening non-target operating points.

Additionally or alternatively, discontinuously stepping the ion sorter through a plurality of operating points means that the accumulated ions within the ion sorter are ejected without operating the ion sorter at any non-target operating points across an *m/z* range of interest (e.g., the *m/z* range spanning all accumulated ions within the ion sorter or the *m/z* range from the lowest target *m/z* to the highest target *m/z).*

In some examples, discontinuously stepping the ion sorter through a plurality of operating points differs from continuously scanning the ion sorter in that discontinuously stepping the ion sorter means that ejection of ions slows down for one or more operating points (e.g., one or more target operating points) as compared with other operating points. For example, a slope of an operating point curve, which plots the operating point as a function of time, at one or more steps is less than the slope of the operating point curve between steps. The operating point curve may be based on the start (or stop) time of each operating point or an average time of each operating point.

In yet further examples, discontinuously stepping the ion sorter means that one or more operating points has a step time that is greater than or equal to a threshold step time. The threshold step time may be, for example, 1 ms, 3 ms, 5 ms, 7 ms, 10 ms, 12 ms, 15 ms, 20 ms, 25 ms, 30 ms, 40 ms, 45, ms, 50 ms, or any other suitable value. In some examples, the step time of any one or more operating points is between 5 ms and 75 ms, between 10 ms and 60 ms, or between 10 ms and 60 ms, inclusive.

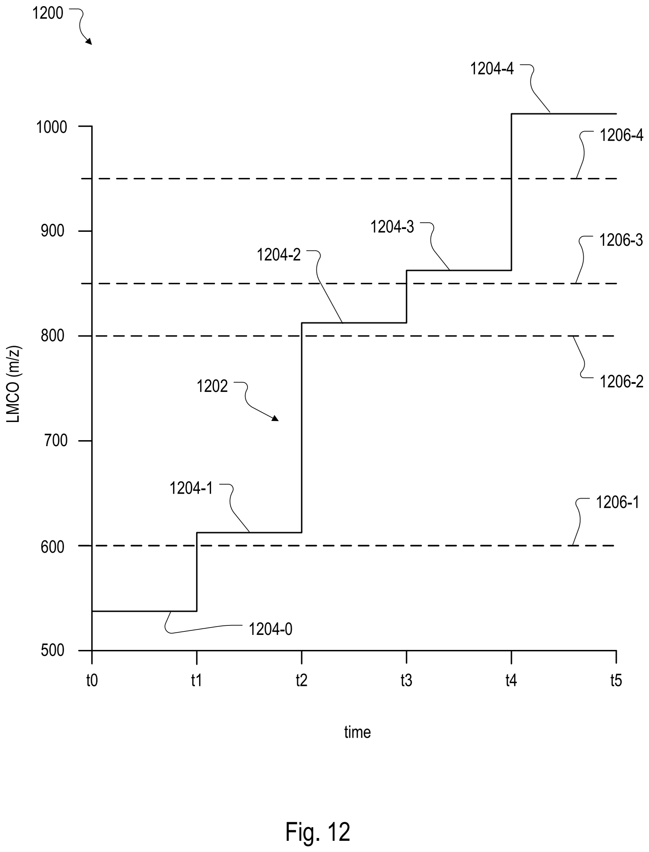

Illustrative examples of operating point schemes for discontinuously stepping an ion sorter through a plurality of operating points will now be described with reference to Figs. 12-19. In these examples, it is assumed that a population of ions accumulated in the ion sorter spans a range of approximately 550 *m/z* to 1000 *m/z* and includes a first target analyte of 600 *m/z,* a second target analyte of 800 *m/z,* a third target analyte of 850 *m/z,* and a fourth target analyte of 950 *m/z,* and the ion sorter is operated in low mass cut-off mode so that ions are ejected from the ion sorter in order of increasing *m/z.* However, the following examples can be applied to high mass cut-off mode, in which case the direction of discontinuously stepping the operating point is reversed so that ions are ejected in order of decreasing *m/z.*

Fig. 12 shows an illustrative timing diagram 1200 for discontinuously stepping the operating point of the ion sorter to eject the population of ions accumulated in the ion sorter, including the four target ions. Timing diagram 1200 includes an operating point curve 1202 that plots the LMCO for each of a plurality of operating points as a function of time. As shown, from time t0 to time t1 the ion sorter is set at a first operating point 1204-0 so that the ion sorter accumulates ions within the *m/z* range of interest (e.g., 550 *m/z* to 1000 *m/z*) without ejecting any ions. To eject the accumulated ions, the ion sorter is operated at a first operating point 1204-1 from time t1 to t2 for the first target analyte of 600 *m/z,* at a second operating point 1204-2 from time t2 to time t3 for the second target analyte of 800 *m/z,* at a third operating point 1204-3 from time t3 to time t4 for the third target analyte of 850 *m/z,* and at a fourth operating point 1204-4 from time t4 to time t5 for the fourth target analyte of 950 *m/z.* The first operating point 1204-1 is selected so that the *m/z* of the first target analyte (indicated by dashed line 1206-1) is equal to or less than the LMCO of the first operating point 1204-1. The second operating point 1204-2 is selected so that the *m/z* of the second target analyte (indicated by dashed line 1206-2) is equal to or less than the LMCO of the second operating point 1204-2. The third operating point 1204-3 is selected so that the *m/z* of the third target analyte (indicated by dashed line 1206-3) is equal to or less than the LMCO of the third operating point 1204-3. The fourth operating point 1204-4 is selected so that the *m/z* of the fourth target analyte (indicated by dashed line 1206-4) is equal to or less than the LMCO of the fourth operating point 1204-4.

In some examples, the fourth operating point 1204-4 is selected to eject all remaining target analytes, including the fourth target analyte. In the example of Fig. 12, the LMCO of fourth operating point 1204-4 is equal to or greater than the upper *m/z* limit of the accumulated ions (e.g., 1000 *m/z).* In alternative examples, the fourth operating point 1204-4 is set lower than the upper limit of the full *m/z* range and a final non-target operating point is set (e.g., at or above the upper limit of the full *m/z* range) to eject any non-target analytes remaining in the ion sorter. Various methods for selection of the target operating point for each target analyte (e.g., the distance between the LMCO of the target operating point and the target *m/z* of the target analyte) are described below in more detail.

As can be seen in Fig. 12, the operating point of the ion sorter is discontinuously stepped through the four operating points 1204 rather than continuously scanned across the full *m/z* range *(550 m/z* to 1000 *m/z),* as in the example of Fig. 7A. In this way, the amount of time that is dedicated to ejecting ions of each target *m/z* is increased as compared with continuous scanning, thereby improving the resolution of the acquired mass spectra. In the example of Fig. 12, the ion sorter is discontinuously stepped through a plurality of operating points 1204 by stepping directly from first target operating point 1204-1 to second target operating point 1204-2 without any intervening non-target operating points, from second target operating point 1204-2 to third target operating point 1204-3 without any intervening non-target operating points, and so on. Furthermore, the accumulated ions within the ion sorter are ejected without operating the ion sorter at any non-target operating points across the *m/z* range of interest (e.g., across the *m/z* range spanning from the lowest target *m/z* to the highest target *m/z).*

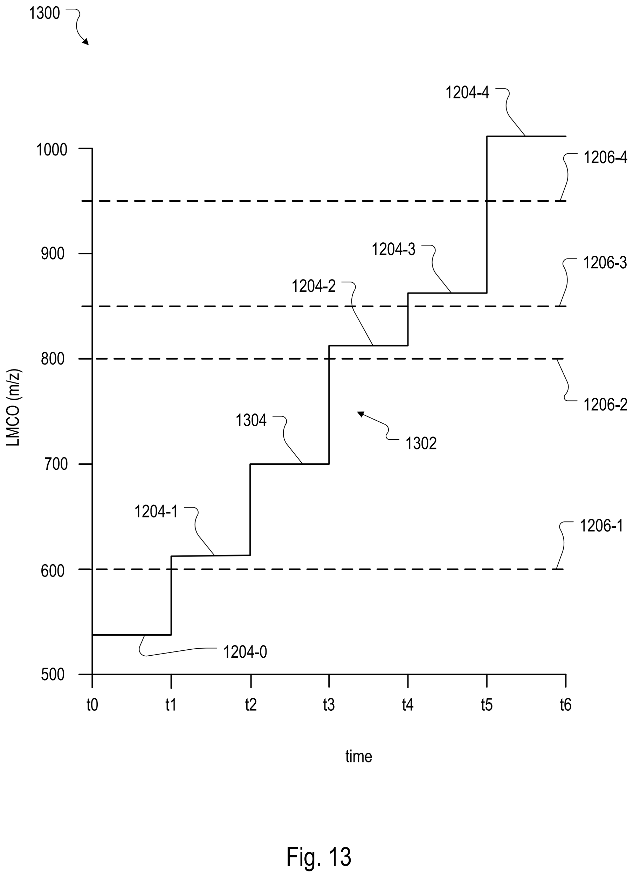

Fig. 13 shows another illustrative timing diagram 1300 for discontinuously stepping the operating point of the ion sorter to eject the population of ions accumulated in the ion sorter, including the four target ions. Timing diagram 1300 includes an operating point curve 1302 that plots the LMCO for each of a plurality of operating points as a function of time. Timing diagram 1300 is similar to timing diagram 1200 except that timing diagram 1300 includes an intervening non-target operating point 1304 between first target operating point 1204-1 and second operating point 1204-2. In the example of Fig.

13, the ion sorter steps directly from first target operating point 1204-1 to non-target operating point 1304, and then steps directly from non-target operating point 1304 to second target operating point 1204-2. Any one or more non-target operating points may be included at any point along operating curve 1302 as may serve a particular implementation.

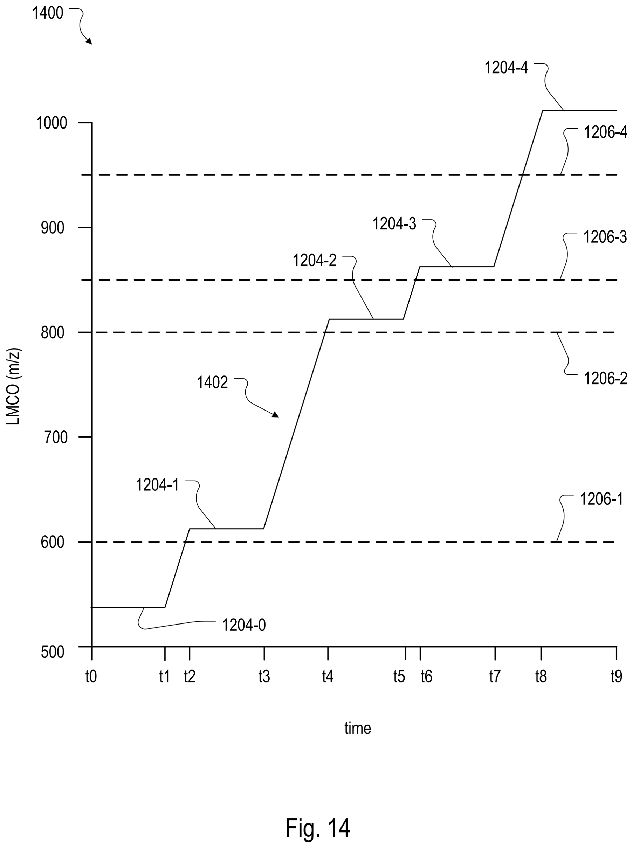

Fig. 14 shows another illustrative timing diagram 1400 for discontinuously stepping the operating point of the ion sorter to eject the population of ions accumulated in the ion sorter, including the four target ions. Timing diagram 1400 includes an operating point curve 1402 that plots the LMCO for each of a plurality of operating points as a function of time. Timing diagram 1400 is similar to timing diagram 1200 except that timing diagram 1400 does not step directly from one target operating point 1204 to another target operating point 1204. Rather, as shown by operating point curve 1402, the ion sorter is continuously scanned between target operating points 1204, such as by continuously ramping magnitudes of the applied set of DC voltages or amplitudes of the applied RF voltage waveforms. Thus, the step time for target operating points 1204 is greater than the step time for intervening operating points between target operating points 1204. With this configuration, non-target analytes are quickly ejected while stepping between target operating points 1204, thus improving the efficiency of ejection during operating points 1204 by preliminarily ejecting ions of lower *m/z* that are positioned in the ion sorter ahead of (in the direction of ejection) the target ions of the next target operating point 1204.

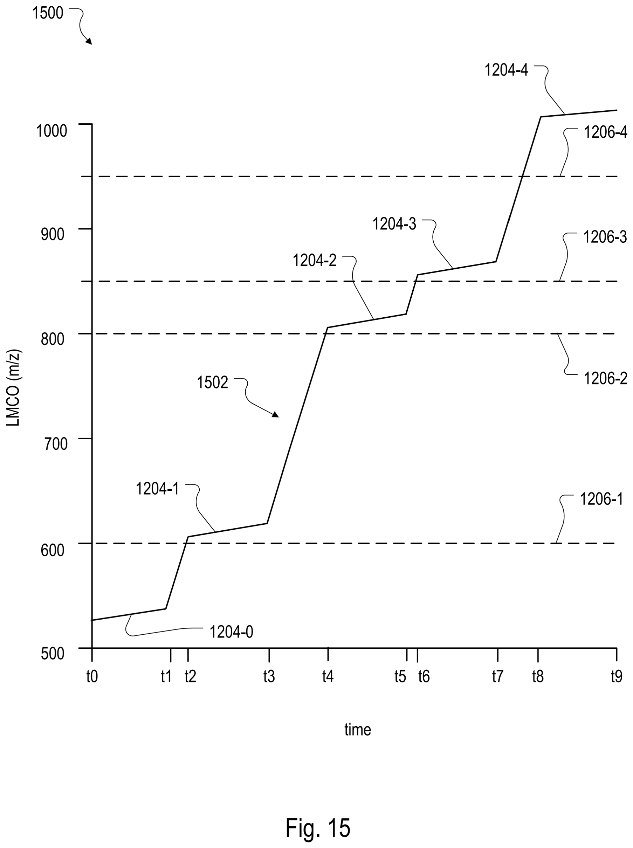

Fig. 15 shows another illustrative timing diagram 1500 for discontinuously stepping the operating point of the ion sorter to eject the population of ions accumulated in the ion sorter, including the four target ions. Timing diagram 1500 includes an operating point curve 1502 that plots the LMCO for each of a plurality of operating points as a function of time. Timing diagram 1500 is similar to timing diagram 1400 except that, in timing diagram 1500, the ion sorter is continuously scanned (ramped) during steps 1204 and between steps 1204, but during steps 1204 the scanning is slower than between steps 1204. As shown in Fig. 15, the slope of operating point curve 1502 during steps 1204 is less than the slope of the operating point curve between steps 1204.

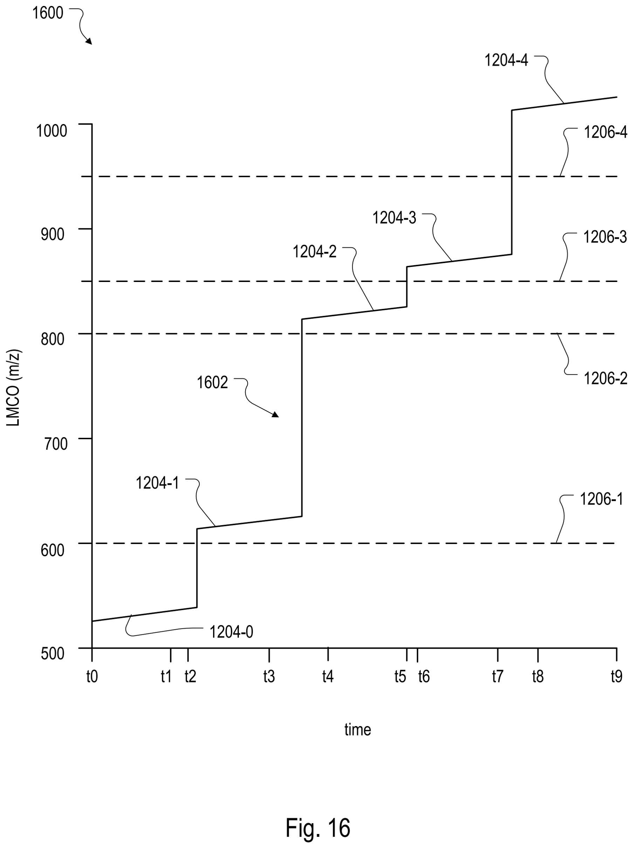

Fig. 16 shows another illustrative timing diagram 1600 for discontinuously stepping the operating point of the ion sorter to eject the population of ions accumulated in the ion sorter, including the four target ions. Timing diagram 1600 includes an operating point curve 1602 that plots the LMCO for each of a plurality of operating points as a function of time. Timing diagram 1600 is similar to timing diagram 1500 except that, in timing diagram 1600, the ion sorter does not continuously scan between steps 1204 but steps directly between steps 1204 and continuously scans the operating point during steps 1204. As shown in Fig. 16, the slope of operating point curve 1602 during steps 1204 is less than the slope of operating point curve 1602 between steps 1204, which is practically infinite.

In the examples of Figs. 14-16, the rate of stepping or ramping magnitudes of the set of DC voltages or the amplitude of the RF voltage waveforms is less during the plurality of target operating points than during non-target operating points.

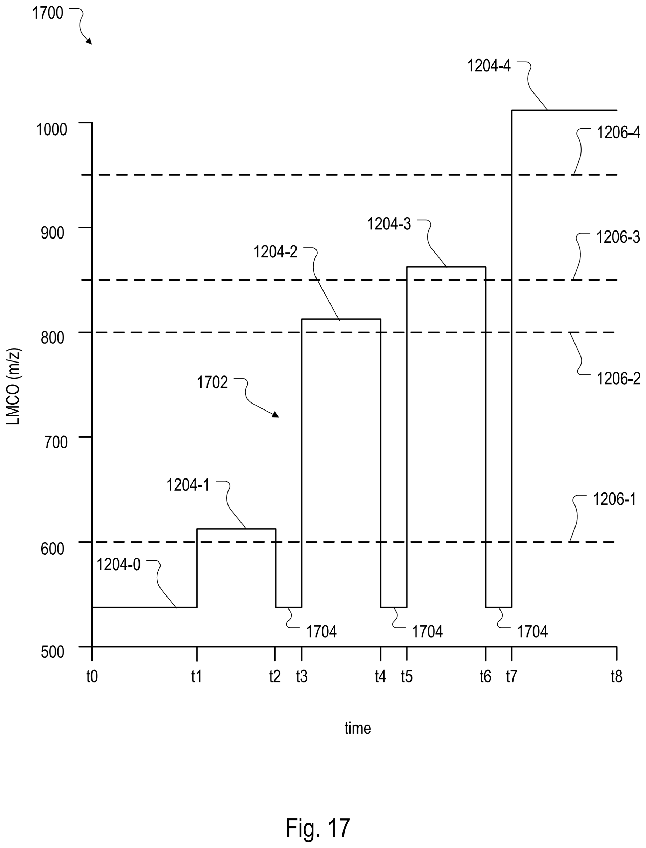

In some examples, the operating point can be stepped back down (a reverse step) to a lower operating point after any one or more operating points to preserve ions of higher *m/z* for subsequent ejection. Fig. 17 shows another illustrative timing diagram 1700 for discontinuously stepping the operating point of the ion sorter to eject the population of ions accumulated in the ion sorter, including the four target ions. Timing diagram 1700 includes an operating point curve 1702 that plots the LMCO for each of a plurality of operating points as a function of time. Timing diagram 1700 is similar to timing diagram 1200 except that, in timing diagram 1700, the ion sorter steps back down (reverse steps) to a predetermined operating point 1704 (e.g., a baseline operating point) after each operating point 1204. Any suitable predetermined operating point may be used. In some examples, the predetermined operating point has an LMCO at or near the lower limit of the *m/z* range of ions initially accumulated within the ion sorter so that no ions are ejected.

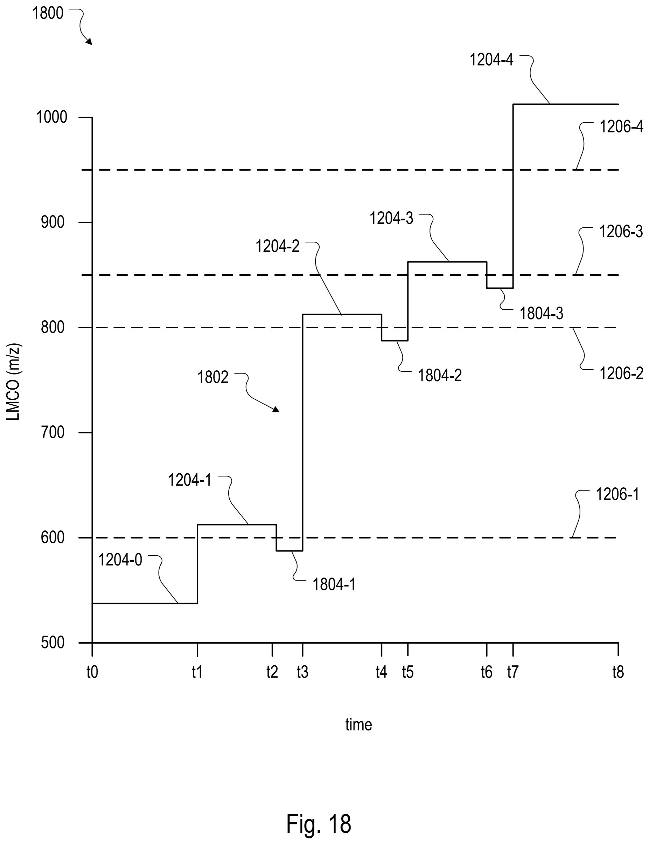

Fig. 18 shows another illustrative timing diagram 1800 for discontinuously stepping the operating point of the ion sorter to eject the population of ions accumulated in the ion sorter, including the four target ions. Timing diagram 1800 includes an operating point curve 1802 that plots the LMCO for each of a plurality of operating points as a function of time. Timing diagram 1800 is similar to timing diagram 1200 except that, in timing diagram 1800, the ion sorter steps back down (reverse steps) after one or more operating points 1204 to an intermediate operating point 1804 that is a threshold amount below the prior operating point. For example, the ion sorter is stepped down to a first intermediate operating point 1804-1 after first operating point 1204-1, stepped down to a second intermediate operating point 1804-2 after second operating point 1204-2, and stepped down to a third intermediate operating point 1804-3 after third operating point 1204-3. In some examples, the operating point may be stepped down a threshold amount, such as 5 *m/z*, 10 *m/z*, 25 *m/z* 50 *m/z*, 100 *m/z*, 150 *m/z*, or any other value, or a percentage of the prior operating point, such as 5%, 10%, 15%, or 20%. In some examples, the operating point is stepped down only after target operating points and not after non-target operating points.

Any of the timing diagrams described herein can be modified to include one or more reverse steps, as described with reference to timing diagrams 1700 and/or 1800, after any one or more operating points.

In the examples described with reference to Figs. 12 to 18, the step times of operating points 1204 are roughly the same. However, in other embodiments the step times of operating points 1204 may vary and may be independently selected for each operating point 1204. Selection of the step time and operating point will be described below in more detail. Additionally, the configuration of the operating point curve can vary over time during a targeted experiment. Moreover, any combination of two or more operating point schemes can be combined or used in one experiment.

In the examples described above, the ion sorter is discontinuously stepped through a plurality of operating points. The ion sorter may be discontinuously stepped in any suitable way. For example, at least one of the amplitude of the applied RF voltage waveform(s) or the magnitude of the applied DC voltages may be increased or decreased, by one or more steps, to cause the accumulated ions within the ion sorter to migrate out of the ion sorter through either the first end or the second end in order of either increasing $m/z$ or decreasing $m/z$.

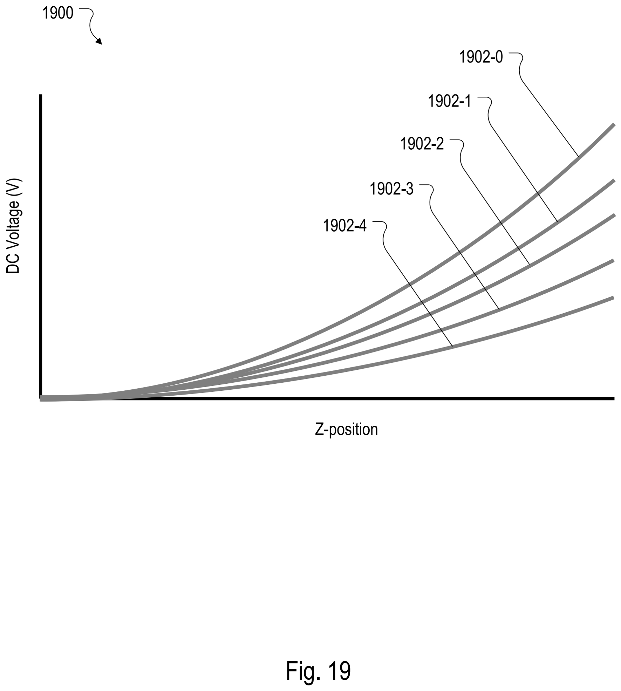

Fig. 19 shows a schematic plot 1900 of a profile of the magnitudes of applied DC voltages (the applied DC voltage profile) that are discontinuously stepped with reference to the timing diagram of Fig. 12. In the example of Fig. 19, and as described above with reference to Figs. 6B and 6C, the magnitude of the DC axial field vector is non-uniform and decreases in the upstream direction (toward the first end 113). The non-uniform DC axial field is generated by applying a series of voltages to the various electrodes of the ion sorter wherein the magnitude of the applied voltages increases non-linearly (e.g., in accordance with a quadratic function) in the downstream direction (toward the second end 118). The operating point of the ion sorter is discontinuously stepped through a plurality of operating points by stepping down the magnitude of the applied DC voltages (the applied DC voltage profile) by a plurality of steps. During an initial time period from time t0 to time t1 (see Fig. 12), the magnitudes of the applied DC voltages, represented by a voltage profile 1902-0 (Fig. 19), are set for an initial operating point having an LMCO such that the ion sorter accumulates ions within the $m/z$ range of interest (e.g., 550 $m/z$ to 1000 $m/z$). At time t1 the applied DC voltages are quickly stepped down for a first time period from time t1 to time t2. During the first time period, the magnitudes of the applied DC voltages are represented by a first voltage profile curve 1902-1 for a first operating point. At time t2 the applied DC voltages are quickly stepped down for a second time period from time t2 to time t3. During the second time period, the magnitudes of the applied DC voltages are represented by a second voltage profile curve 1902-2 for a second operating point. At time t3 the applied DC voltages are quickly stepped down for a third time period from time t3 to time t4. During the third time period, the magnitudes of the applied DC voltages are represented by a third voltage profile curve 1902-3 for a third operating point. At time t4 the applied DC voltages are quickly stepped down for a fourth time period from time t4 to time t5. During the fourth time period, the magnitudes of the applied DC voltages are represented by a fourth voltage profile curve 1902-4 for a fourth operating point. Ions are ejected from the outlet of the ion sorter in order of increasing $m/z$ as the magnitudes of the applied DC voltages are stepped down.

It will be recognized that the amplitude of the applied RF voltage waveform(s) can be stepped in a similar manner, although in an opposite direction (e.g., by increasing the amplitude of the applied RF voltage waveforms over time with each step). Fig. 7B shows an illustrative plot 704 for discontinuously stepping the amplitude, $A_{RF}$, of the applied RF voltage waveforms by a plurality of steps. As shown, for each operating point the amplitude, $A_{RF}$, of the applied RF voltage waveforms, is maintained at a substantially constant value for a discrete step time $\Delta t$. The length of the discrete step time $\Delta t$ may be the same across all operating points or may vary for each operating point. At the end of the step time $\Delta t$ for an operating point, the amplitude, $A_{RF}$, of the applied RF voltage waveforms is stepped by a step size $\Delta A_{RF}$ to a next operating point. At the next operating point, the amplitude of the applied RF voltage waveform is maintained at this new, constant value for a discrete step time $\Delta t$. This process may be performed until all accumulated ions or all accumulated ions of interest have been ejected from the ion sorter.

In some examples, both the amplitudes of the applied RF voltage waveforms and the magnitudes of the applied DC voltages are stepped to discontinuously step the operating point of the ion sorter.

In some examples, a controller controls a power source to adjust the amplitude of the applied RF voltage waveforms and/or adjust the magnitude of the DC voltages to adjust the operating point of the ion sorter. As described herein, this may be accomplished by implementing a power source that includes a plurality of individually controllable DC voltage sources configured to be directly connected to various individual electrodes included in the series of electrodes of the ion sorter. Impedance elements (e.g., resistors) interconnecting the electrodes create a voltage divider circuit that can be leveraged to selectively provide a set of DC voltages to a set of electrodes. The set of DC voltages may be set to increase in accordance with a linear or quadratic function across the set of electrodes along the axis of the ion sorter, thereby creating a gradient electric field within an ion occupation volume defined by the set of electrodes.

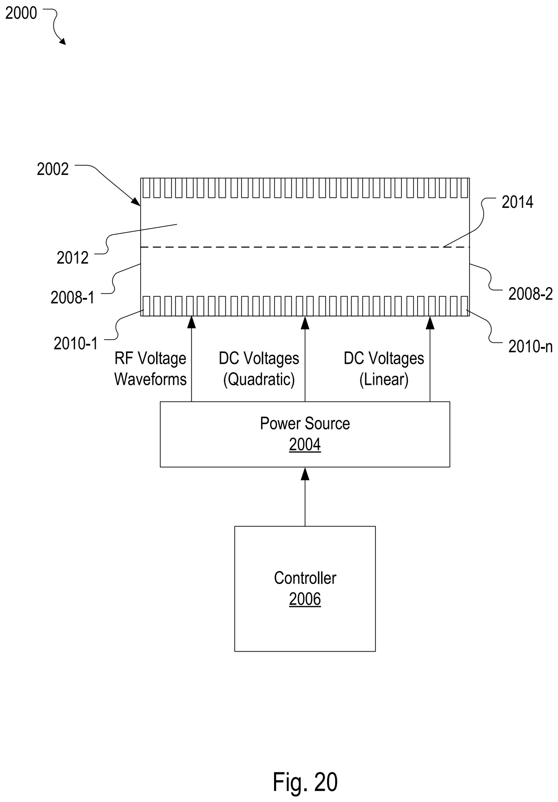

Fig. 20 shows an illustrative system 2000 configured to control ejection of ions from an ion guide. As shown, system 2000 includes an ion guide 2002, a power source 2004, and a controller 2006. System 2000 may include additional or alternative components not shown as may serve a particular implementation.

Ion guide 2002 may be implemented by any of the ion guides (also referred to herein as ion sorters) described herein (e.g., ion guide 100, 200, 250, 500) and is depicted in Fig. 20 as a cross-sectional side view. As shown, ion guide 2002 includes a first end 2008-1, a second end 2008-2, and a series of electrodes 2010 (e.g., electrode 2010-1 through electrode 2010-n) disposed between the first end 2008-1 and the second end 2008-2. Electrodes 2010 define an ion occupation volume 2012 within ion guide 2002 and an axis 2014 of ion guide 2002 between the first end 2008-1 and the second end 2008-2. The series of electrodes 2010 may include any suitable number of electrodes (e.g., 100 electrodes).

Power source 2004 is electrically coupled to electrodes 2010 and may be implemented by any number of individually controllable power supplies and power supply circuits. Example implementations of power source 2004 are described herein.

Power source 2004 is configured to simultaneously apply a set of RF voltage waveforms to the series of electrodes 2010 and a set of DC voltages to the series of electrodes 2010. As explained herein, the RF voltage waveforms are configured to generate a plurality of moving pseudopotential wells within the ion occupation volume 2012 and that exert forces that urge the ions to migrate along the axis 2014 in a first direction toward the second end 2008-2 (or toward the first end 2008-1 in configurations where the first end 2008-1 functions as both the ion inlet and ion outlet). As also explained herein, the set of DC voltages are configured to generate a static, non-uniform DC electric field that exerts forces that urge the ions to migrate along the axis 2014 in a second direction opposite to the first direction toward the first end 2008-1 (or toward the second end 2008-2 in configurations where the first end 2008-1 serves as both the ion inlet and ion outlet). The plurality of moving pseudopotential wells and the static, non-uniform DC electric field cause the ions to accumulate within the ion occupation volume 2012 at a plurality of different locations along the axis 2014 based on the respective $m/z$ values of the ions.

Power source 2004 is further configured to adjust, by one or more steps, at least one of an amplitude of the applied RF voltage waveforms or a magnitude of the applied DC voltages to cause the accumulated ions to migrate out of ion guide 2002 through either the first end 2008-1 or the second end 2008-2 in order of either increasing or decreasing $m/z.$

Controller 2006 is coupled to power source 2004 and configured to control an operation of power source 2004. For example, controller 2006 may direct power source 2004 to apply the RF voltage waveforms to the series of electrodes 2010 and the set of DC voltages to the set of electrodes 2010. Controller 2006 may be further configured to set and adjust an amplitude of the applied RF voltage waveforms and a magnitude of the applied DC voltages. In this way, controller 2006 may be configured to set and adjust the operating point of ion guide 2002. These and other operations that may be performed by controller 2006 are described herein.

Controller 2006 may be implemented by any suitable combination of hardware (e.g., a processor, circuitry, etc.), software, and/or computing devices as may serve a particular implementation. For example, controller 2006 may be implemented by a computing device included in a mass spectrometry system, one or more computing devices configured to be communicatively coupled with a mass spectrometry system, and/or any other local and/or remote computing devices as may serve a particular implementation.

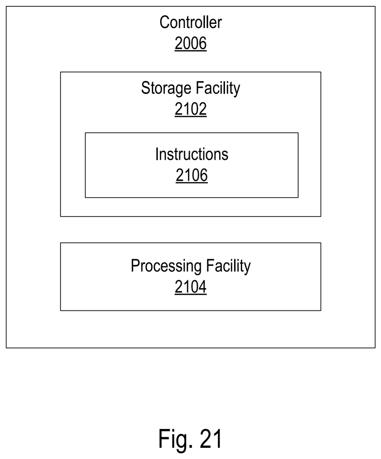

Fig. 21 shows illustrative components of controller 2006. As shown, controller 2006 includes, without limitation, a memory 2102 and a processor 2104 selectively and communicatively coupled to one another. Memory 2102 and processor 2104 may each include or be implemented by hardware and/or software components (e.g., processors, memories, communication interfaces, instructions stored in memory for execution by the processors, etc.). In some examples, memory 2102 and processor 2104 are distributed between multiple devices and/or multiple locations as may serve a particular implementation. For example, memory 2102 and processor 2104 may be distributed between one or more local compute resources and one or more remote compute resources communicatively coupled to the local compute resources by way of a network.

Memory 2102 may maintain (e.g., store) executable data used by processor 2104 to perform any of the operations described herein. For example, memory 2102 may store instructions 2106 that may be executed by processor 2104 to perform any of the operations described herein. Instructions 2106 may be implemented by any suitable application, software, code, and/or other executable data instance. Memory 2102 may also maintain any data acquired, received, generated, managed, used, and/or transmitted by processor 2104.

Processor 2104 may be configured to perform (e.g., execute instructions 2106 stored in memory 2102 to perform) various processing operations described herein. It will be recognized that the operations and examples described herein are merely illustrative of the many different types of operations that may be performed by processor 2104. In the description herein, any references to operations performed by controller 2006 may be understood to be performed by processor 2104 of controller 2006. Furthermore, in the description herein, any operations performed by controller 2006 may include controller 2006 directing or instructing another computing system, device, or apparatus to perform the operations.

Referring again to Fig. 20, in some examples, ion guide 2002 is positioned upstream of a mass spectrometer (not shown) and is configured to pre-sort ions before the ions are introduced into the mass spectrometer. For example, the mass spectrometer may be positioned at or near first end 2008-1 or second end 2008-2. With this configuration, ion guide 2002 may pre-sort and eject ions in order of increasing $m/z$ (in low mass cutoff mode) or decreasing $m/z$ (in high mass cutoff mode) by discontinuously stepping the operating point of ion guide 2002 through a plurality of target operating points. At each target operating point, ions having an $m/z$ less than the LMCO of the target operating point (or greater than the HMCO of the target operating point), including ions having the target $m/z,$ will be ejected. A mass filter of the mass spectrometer may be synchronized with system 2000 (e.g., ion guide 2002 and/or controller 2006) so that, as the operating point of ion guide 2002 is discontinuously stepped through the plurality of target operating points, operation of the mass filter is also stepped to transmit only ions having each target $m/z$ of the plurality of target $m/z$ as the ions of the target $m/z$ are ejected from ion guide 2002.

Selection of the operating point of an ion sorter operated in stepped mode will now be described. When the ion sorter is operated in low mass cut-off mode, the operating point is selected so that the LMCO of the operating point is equal to or greater than the $m/z$ of the target analytes to be ejected. Similarly, when the ion sorter is operated in high mass cut-off mode, the operating point is selected so that the HMCO of the operating point is equal to or less than the $m/z$ of the target analytes to be ejected. When the LMCO or HMCO for any particular operating point is equal to the target $m/z$, ions will take effectively an infinite amount of time before the ions of the target $m/z$ are completely ejected. Time limitations make this impractical, so the operating point is selected so that the LMCO is above the target $m/z$ (in low mass cutoff mode) or the HMCO is below the target $m/z$ (in high mass cutoff mode). The distance between the LMCO or HMCO of the operating point and the target $m/z$ ("operating point $\Delta m/z$") determines how quickly the ions having the target $m/z$ are completely ejected. The greater the distance $\Delta m/z$ is, the faster the ions will eject (the shorter the ejection time/step time) but the higher probability that ions of nearby $m/z$ will also be ejected. Thus, there is a tradeoff between resolution and ejection time.

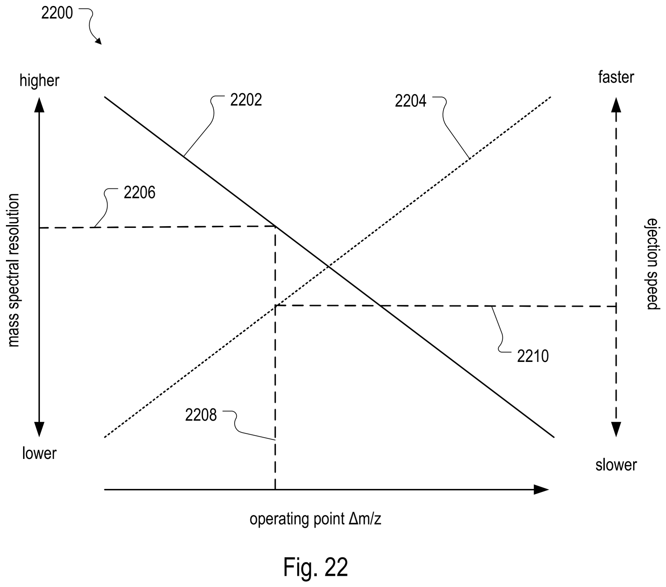

Fig. 22 shows a chart 2200 that illustrates the relationship between the operating point $\Delta m/z$, resolution, and ejection speed. As shown in chart 2200, a resolution curve 2202 (in solid line) plots resolution as a function of operating point $\Delta m/z$ (the distance between the LMCO or the HMCO of a selected operating point and the target $m/z$). Resolution refers to the observed or predicted mass spectral resolution for a mass spectrum of the ejected ions. An ejection speed curve 2204 (in dotted line) plots ejection speed as a function of operating point $\Delta m/z$. Ejection speed refers to the speed at which all ions of the target $m/z$ are completely ejected from the ion sorter after a step to the target operating point. Ejection speed is inversely related to ejection time. Although not directly related to ejection speed, in stepped mode the step time may be set based on ejection speed in order to ensure ejection of substantially all ions of each target $m/z$. In chart 2200, resolution curve 2202 and ejection speed curve 2204 are shown as linear, but they may have any other form. For example, it has been observed that mass spectral resolution scales approximately with the square root of ejection time. Moreover, chart 2200 is merely illustrative and qualitative for ease of description purposes; the actual relationship between operating point $\Delta m/z$, resolution, and ejection speed will vary based on various experimental and instrument parameters and conditions, and resolution curve 2202 and ejection speed curve 2204 may be determined experimentally for a particular experiment or instrument setup and/or may be accessed from a library of experimental data.

As shown in chart 2200, resolution is high at low values of operating point $\Delta m/z$ (where the operating point is near the target $m/z$) but decreases as operating point $\Delta m/z$ increases (as the operating point moves further away from the target $m/z$). Conversely, ejection speed is low (and thus step time might be long) at low values of operating point $\Delta m/z$ but increases as operating point $\Delta m/z$ increases. The operating point for one or more target $m/z$ may be selected based on the relationship between operating point $\Delta m/z$, resolution, and ejection speed.

In some examples, the target operating points for target ions included in a population of ions stored in an ion sorter are selected so that a threshold resolution is achieved. The threshold resolution may be the same for all targets or may be determined individually for each target. In some examples, the threshold resolution is based upon the relative position in $m/z$ of the closest two targets included in the population of ions. For example, a threshold resolution may be calculated based on two adjacent ions by the formula $m_2/(m_2 - m_1)$ where $m_1$ is $m/z$ of the lighter ion and $m_2$ is $m/z$ of the heavier ion.

To illustrate using the example described above with four target analytes of 600 $m/z$, 800 $m/z$, 850 $m/z$, and 950 $m/z$, the two closest targets are at 800 $m/z$ and 850 $m/z$ and thus the threshold resolution is 17 (850/(850-800) = 17). Referring to chart 2200, a resolution of 17 is indicated by a dashed line 2206, which occurs at an operating point $\Delta m/z$ value indicated by dashed line 2208. At the threshold resolution of 17, the ejection speed to completely eject the 800 $m/z$ species while retaining the 850 $m/z$ species is indicated by dashed line 2210. In this example, this ejection speed is assumed to require 20 ms for all the 800 $m/z$ ions to be ejected.

In some examples, the step time for each operating point could be held for 20 ms based on the ejection speed for the closest targets, for a total experiment duration of 80 ms. This is effectively a 50 Hz MS/MS acquisition rate (4 precursors in 80 ms). Such an acquisition rate is an improvement over conventional systems using continuous scanning, which may achieve acquisition rates of, for example, 10 Hz. The 20 ms step time achieves the necessary separation of the closest species (800 $m/z$ and 850 $m/z$). However, the other targets require less resolution for complete separation, and thus the corresponding step time for the other targets could be significantly shorter. Thus, in other examples the step time for one or more other targets is independently determined in a similar manner based on the required resolution for each target considering the target's nearest neighboring target.

Additionally or alternatively to selecting target operating points based on a threshold resolution, the target operating points may be selected based on an available parallel processing time for ejection of the ions. When the ion sorter is operated in conjunction with a hybrid mass spectrometer where multiple discrete MS steps are performed in parallel, ions may be ejected from the ion sorter concurrently (in parallel) with other downstream MS operations, such as ion activation (e.g., in a collision cell) or $m/z$ analysis (e.g., in a mass analyzer). The time needed to perform these downstream processes (referred to as the available parallel processing time) may be longer than the step time determined as described above. Accordingly, the operating point can be further adjusted to decrease the ejection speed (e.g., and correspondingly increase the step time and/or decrease operating $\Delta m/z$ value) to take advantage of the available parallel processing time for ejection. This has the added benefit of further increasing resolution. For instance, in the example of Fig. 22 above, if the minimum time required to perform downstream MS operations is 30 ms, the ejection speed can be decreased (e.g., and the step time can be correspondingly increased from 20 ms to 30 ms), thus resulting in a resolution above the threshold resolution value.

With complex hybrid mass spectrometers, the time needed to perform concurrent MS operations may vary between MS acquisitions. Accordingly, the time available to eject ions from the separator will also vary between MS acquisitions. Given this variable amount of parallelizable ejection time, the operating point may also vary for each acquisition based on the time-varying downstream MS operations. Varying the applied operating point to align the ejection time with the concurrent downstream MS operations maximizes the number of precursors a hybrid mass spectrometer can interrogate per ion load into the ion sorter.

One additional ion behavior can be further exploited to improve performance. Consider again separation of targets having $m/z$ 800 and $m/z$ 850, which both need to be selected for ejection. If the experimental conditions require rapid acquisition rates, such as rates that would not achieve the threshold resolution, an operating point for 800 $m/z$ can be selected with an LMCO greater than 850 $m/z$. Due to the differences in ejection rate for ions with different $m/z$ values, all of the 800 $m/z$ ions can be ejected before the first 850 $m/z$ ion. If the ion sorter were held at this operating point, eventually all the 850 $m/z$ ions would also be ejected. However, to preserve the 850 $m/z$ ions, the operating point is quickly dropped back down below 850 $m/z$ before the 850 $m/z$ ions start to eject. This technique takes advantage of the faster ejection speed resulting from the greater distance between the operating point LMCO and the target $m/z$, without ejecting ions of nearby $m/z$.

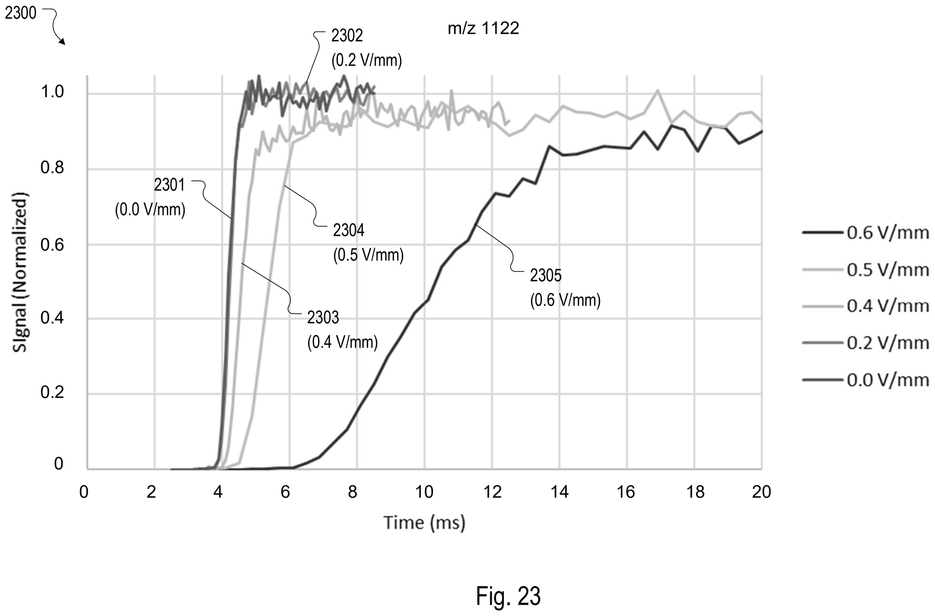

As mentioned above, the actual relationship between operating point $\Delta m/z$, resolution, and ejection speed will vary based on various experimental and instrument parameters and conditions. In some cases, the speed with which ions are ejected depends on the relative strengths of the RF travelling wave and the DC electric field (e.g., the bias between the amplitude of the RF voltage waveforms and the magnitude of the applied DC voltages). If the RF travelling wave is only slightly stronger than the DC electric field, ions will eject slowly. However, if the RF travelling wave is much stronger than the DC electric field, ions will eject quickly. Fig. 23 shows a chart 2300 that plots normalized mass spectra signals for ions having $m/z$ 1122 as a function of time for each of a plurality of distinct applied DC voltages, where the RF travelling wave is held constant. A first plot 2301 plots the observed signal when the magnitude of the applied DC voltages is 0.0 V/mm, a second plot 2302 plots the observed signal when the magnitude of the applied DC voltages is 0.2 V/mm, a third plot 2303 plots the observed signal when the magnitude of the applied DC voltages is 0.4 V/mm, a fourth plot 2304 plots the observed signal when the magnitude of the applied DC voltages is 0.5 V/mm, and fifth plot 2305 plots the observed signal when the magnitude of the applied DC voltages is 0.6 V/mm. As can be seen, as the magnitude of the DC voltage decreases (from 0.6 V/mm to 0.0 V/mm), the speed with which the ions eject from the ion sorter increases, and vice versa.

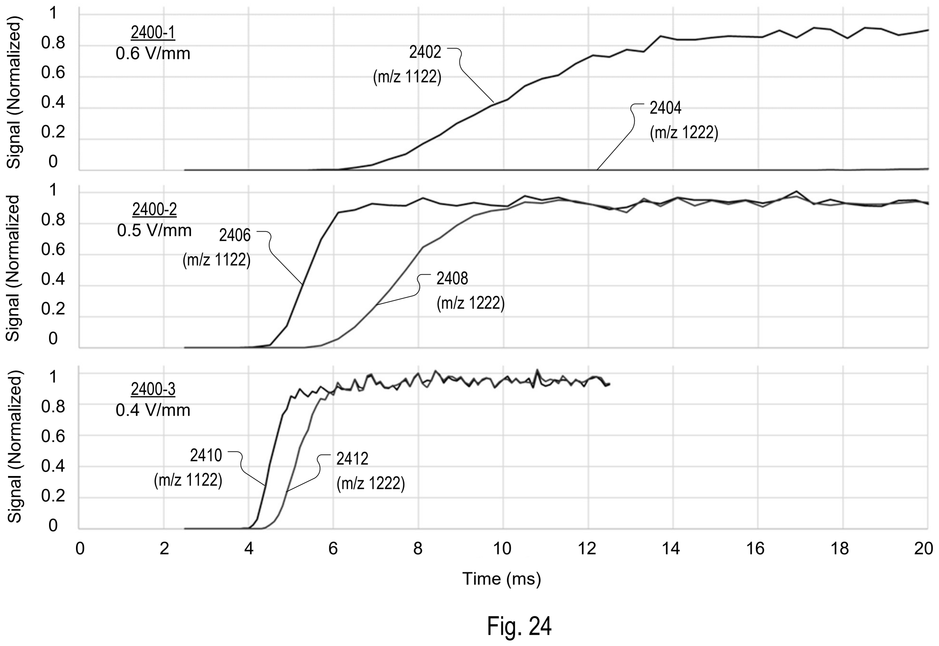

Fig. 24 shows three charts 2400-1, 2400-2, and 2400-3 that illustrate how ejection speed and resolution are related. Each chart 2400 plots normalized mass spectrum signals for ions having $m/z$ 1122 and ions having $m/z$ 1222 as a function of time for each of a plurality of distinct applied DC voltages (0.6 V/mm, 0.5 V/mm, and 0.4 V/mm), where the RF travelling wave is held constant. In chart 2400-1, plots 2402 ($m/z$ 1122) and 2404 ($m/z$ 1222) plot the observed signals when the magnitude of the applied DC voltages is 0.6 V/mm. In chart 2400-2, plots 2406 ($m/z$ 1122) and 2408 ($m/z$ 1222) plot the observed signals when the magnitude of the applied DC voltages is 0.5 V/mm. In chart 2400-3, plots 2410 ($m/z$ 1122) and 2412 ($m/z$ 1222) plot the observed signals when the magnitude of the applied DC voltages is 0.4 V/mm. As can be seen, when the magnitude of the applied DC voltages is 0.6 V/mm, ions of $m/z$ 1122 are fully ejected in approximately 20 ms while ions of $m/z$ 1222 are fully retained. However, when the magnitude of the applied DC voltages is 0.5 V/mm or 0.4 V/mm, both ion species eject in similar time scales and thus may not be easily resolved.

In view of this relationship between ejection speed and resolution, in some examples selection of the operating point for a target $m/z$ also includes selecting a relative strength of the RF travelling wave and the DC electric field (e.g., by selecting an appropriate bias between the amplitude of the RF voltage waveforms and the magnitude of the applied DC voltages). The bias between the amplitude of the RF voltage waveforms and the magnitude of the DC voltages may be determined experimentally and/or may be accessed from a library of experimental data. In some examples, these parameters may be determined first before determining the actual relationship between operating point $\Delta m/z$, resolution, and ejection speed, as in chart 2200 of Fig. 22.

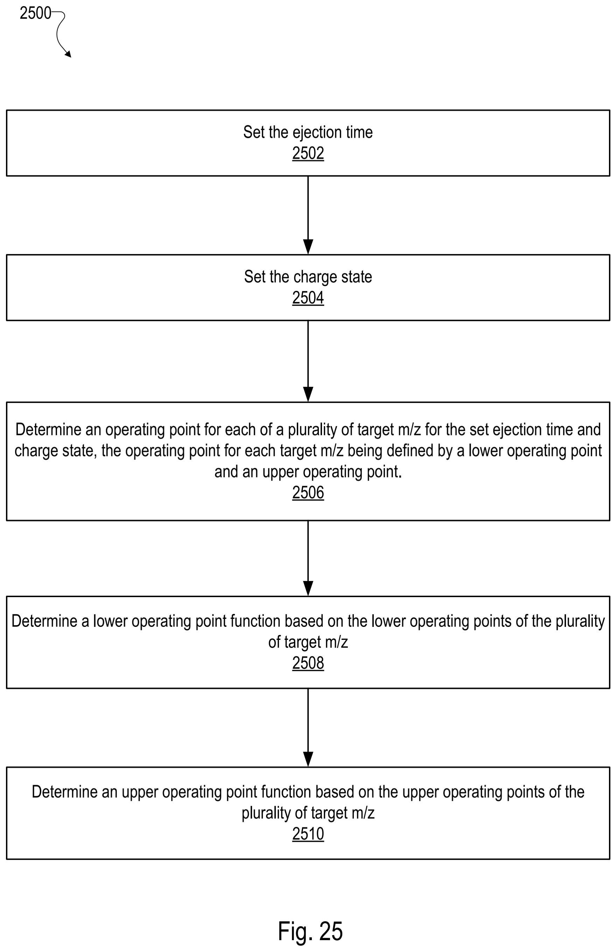

In some examples the target operating points are determined and set based on a calibration method that accounts for an available parallel processing time, charge state of the target ions, and $m/z$ of the target ions. The calibration method is performed using a calibration sample prior to performing an experimental mass analysis of an experimental sample. Fig. 25 shows a flowchart of an illustrative calibration method 2500. While Fig. 25 shows illustrative operations according to one embodiment, other embodiments may omit, add to, reorder, and/or modify any of the operations shown in Fig. 25. Calibration method 2500 may be performed by controller 2006 and/or any other component of system 2000.

At operation 2502, an ejection time is set based on an available parallel processing time. In some examples, the ejection time is set to be approximately equal to or less than the available parallel processing time. In some examples, the available parallel processing time is the time required for a downstream mass analyzer to perform a mass analysis of a population of ions ejected from an ion sorter (e.g., ion sorter 2002).

At operation 2504, a charge state is set. The charge state is the charge state of calibrant ions to be ejected from the ion sorter for mass analysis. For example, the charge state may be +1, +2, +3, -1, -2, -3, etc.

At operation 2506, an operating point range is determined for each of a plurality of target $m/z$ for the set ejection time and charge state. The operating point range is a function of *m/z* (e.g., each target *m/z* will have a distinct operating point range). The operating point range is defined by a lower operating point and an upper operating point. The lower operating point is the operating point at which a first threshold quantity of the first target ions are ejected from the ion sorter during the ejection time. The lower operating point represents the operating point at which all or nearly all of the target ions are retained in the ion sorter and only the first threshold quantity of ions are ejected from the ion sorter. The first threshold quantity may be any suitable value, such as 0.1%, 0.5%, 1%, 3%, 5%, or 10%. In some examples, the first threshold quantity is set by a user. The upper operating point is the operating point at which a second threshold quantity of the first target ions are ejected from the ion sorter during the ejection time. The upper operating point represents the operating point at which all or nearly all of the target ions are ejected from the ion sorter. The second threshold quantity may be in any suitable value, such as 100%, 99%, 98%, 97%, 95%, or 90%. In some examples, the second threshold quantity is set by a user.

The acceptable operating point range for each target *m/z* is determined by performing a series of mass analyses for calibrant ions having each target *m/z* and the charge state set at operation 2504. The series of mass analyses include a mass analysis performed at each of a plurality of distinct operating points. The plurality of distinct operating points include one or more operating points expected to be below the lower operating point (e.g., one or more operating points at which no calibrant ions are ejected) and one or more operating points expected to be above the upper operating point (e.g., one or more operating points at which all calibrant ions are ejected), and one or more operating points between the lower operating point and the upper operating point. A mass spectrum of the target *m/z* is acquired at each operating point. For example, in LMCO mode, the operating points may be adjusted by increasing the applied RF voltages through a series of operating points and/or decreasing the applied DC voltage through a series of distinct operating points, and acquiring a mass spectrum at each operating point. Normalized mass spectrum signals for the target *m/z* are plotted as a function of time (e.g., ejection time) for each operating point, as in the example of Fig. 23. The plots have a substantially sigmoid shape, so a sigmoid function may be fitted to the data.

The lower operating point is selected as the operating point at which the first threshold quantity of the first target ions are ejected from the ion sorter at the conclusion of the ejection time set at operation 2502. The upper operating point is selected as the operating point at which the second threshold quantity of the first target ions are ejected from the ion sorter at the conclusion of the ejection time set at operation 2502. For example, assuming the first threshold quantity is 5% and the second threshold quantity is 95%, the lower operating point is the operating point at which the measured normalized signal is 0.05 at the conclusion of the ejection time and the upper operating point is the operating point at which the measured normalized signal is 0.95 at the conclusion of the ejection time. If insufficient operating points are acquired, the data can be extrapolated to obtain the lower operating point and/or upper operating point.

Operation 2506 is performed for each of a plurality of distinct target *m/z* (each having the charge state set at operation 2504) across an *m/z* range of interest. For instance, the operating point range may be determined for 3, 4, 5, 7, 10, 15, or 20 distinct target m/z. A set of lower operating points and a set of upper operating points.

At operations 2508 and 2510, a lower operating point function and an upper operating point function are determined, respectively. The lower operating point function represents the lower operating point as a function of *m/z* and the upper operating point function represents the upper operating point as a function of m/z. The lower operating point function may be determined by plotting the lower operating points obtain at operation 2506 as a function of *m/z* and fitting a curve to the data. Similarly, the upper operating point function may be determined by plotting the upper operating points obtain at operation 2506 as a function of *m/z* and fitting a curve to the data. In some examples, the lower operating point and upper operating point are related to the square root of m/z.

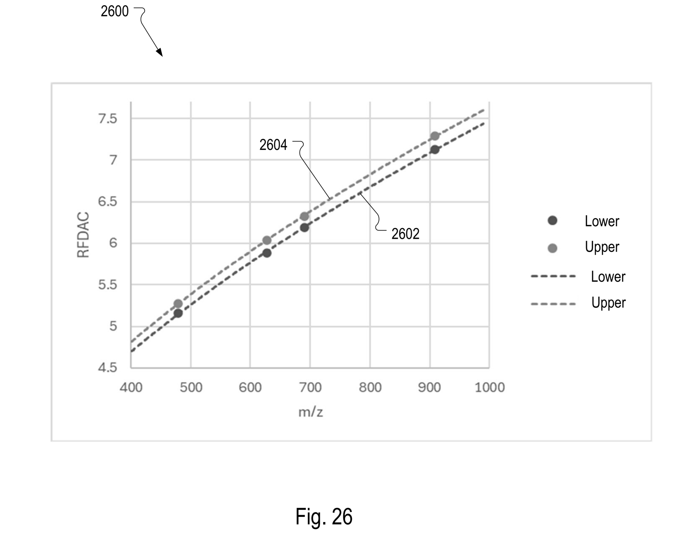

Fig. 26 shows a chart 2600 that plots the operating point (in this example, the RF voltage amplitude) as a function of *m/z* for a set of four different target m/z. Chart 2600 includes a curve 2602 representing a lower operating point function and a curve 2604 representing an upper operating point function.

Calibration method 2500 may be repeated for other charge states and for other ejection times to obtain a set of calibration data for various experimental conditions. A proper set of calibration data can be selected for use during an analytical experiment based on the experiment conditions. For example, given the charge state of the target ions and the available parallel processing time for an experiment, an appropriate a set of calibration data can be selected from a plurality of sets of calibration data and used to set the target operating points for the experiment. Using the lower operating point function and upper operating point function, an operating point range can be determined for any *m/z* value, and an acceptable target operating point within the operating point range can be selected for any *m/z* value.

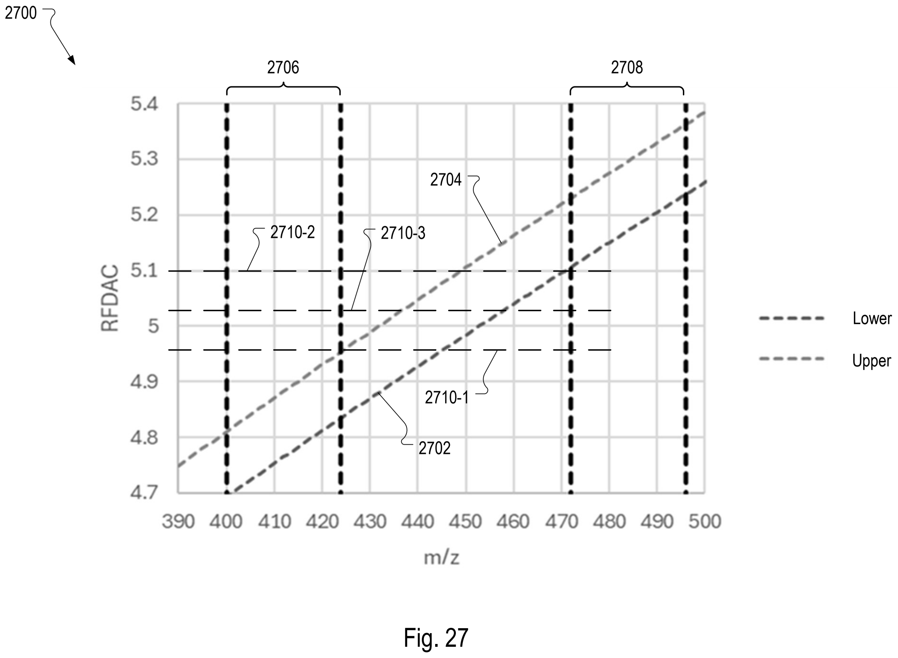

There is a continuum within the operating point range for each target *m/z* at which the target operating point can be set. In some examples, the target operating point for a target *m/z* is set to maximize the quantity of ions of the target *m/z* that are ejected during the ejection time and/or to minimize the quantity of ions of the next target *m/z* that are ejected during the ejection time. Illustrative examples of selecting a target operating point for a DIA experiment will now be described with reference to Fig. 27.

Fig. 27 shows a chart 2700 that includes a curve 2702 representing a lower operating point function and a curve 2704 representing an upper operating point function. The operating point is the amplitude of the applied RF voltages. In the DIA experiment, the isolation window width is 24 m/z. A first window 2706 spans 400 *m/z* to 424 *m/z* and a second window 2708 spans 472 *m/z* to 496 m/z. A dead space having a width of 48 *m/z* is positioned between first window 2706 and second window 2708.

In a first mode of setting the target operating point, a first target operating point, indicated by dashed line 2710-1, is set at the upper operating point of first window 2706 (e.g., 4.95 V for *m/z* 424, the largest *m/z* in first window 2706). At the first target operating point, ion species in first window 2706 are expected to be completely ejected during the ejection time and ion species having an *m/z* value above approximately *m/z* 445 are expected to be fully retained in the ion sorter, which is well below the minimum *m/z* of second window 2708 (e.g., 472 *m/z)*. Thus, the first target operating point does not "leak" out any ions in the second window 2708 while providing good charge state discrimination. However, if the ions in first window 2706 need a larger RF voltage amplitude than expected for complete ejection, the ions in first window 2706 may not eject completely.

In a second mode of setting the target operating point, a second target operating point, indicated by dashed line 2710-2, is set at or just below the lower operating point of second window 2708 (e.g., 5.1 V for *m/z* 472). At this operating point, which is well above the upper operating point of first window 2706, the RF field is strong enough to fully eject ion species in first window 2706 during the ejection time. Ion species within second window 2708 are expected to be fully retained in the ion sorter. Thus, this target operating point easily ejects all ions within first window 2706, even if ejection requires a slightly larger RF voltage amplitude than expected. However, if ions within second window 2708 need a smaller RF voltage amplitude than expected to be retained in the ion sorter, the ions within second window 2708 will not be fully retained within the ion sorter. Thus, the second target operating point provides poor charge state discrimination.

In a third mode of setting the target operating point, a third target operating point is set somewhere between the upper operating point of first bin 2706 and the lower operating point of second bin 2706. In the example shown in Fig. 27, the third target operating point is set at 5.0 V, which gives some tolerance against ions in the current isolation window (first window 2706) needing a larger RF voltage amplitude to fully elute and ions in the next isolation window (second window 2708) needing a smaller RF voltage amplitude to be fully retained. The choice of where to set the target operating point may depend on how mass spectral peaks are shifting with space charge and how important charge state separation is, among other factors. In some examples, the third target operating point is set at approximately one-half the distance (in either amplitude of RF voltages or in m/z) between the upper operating point of first bin 2706 and the lower operating point of second bin 2708.

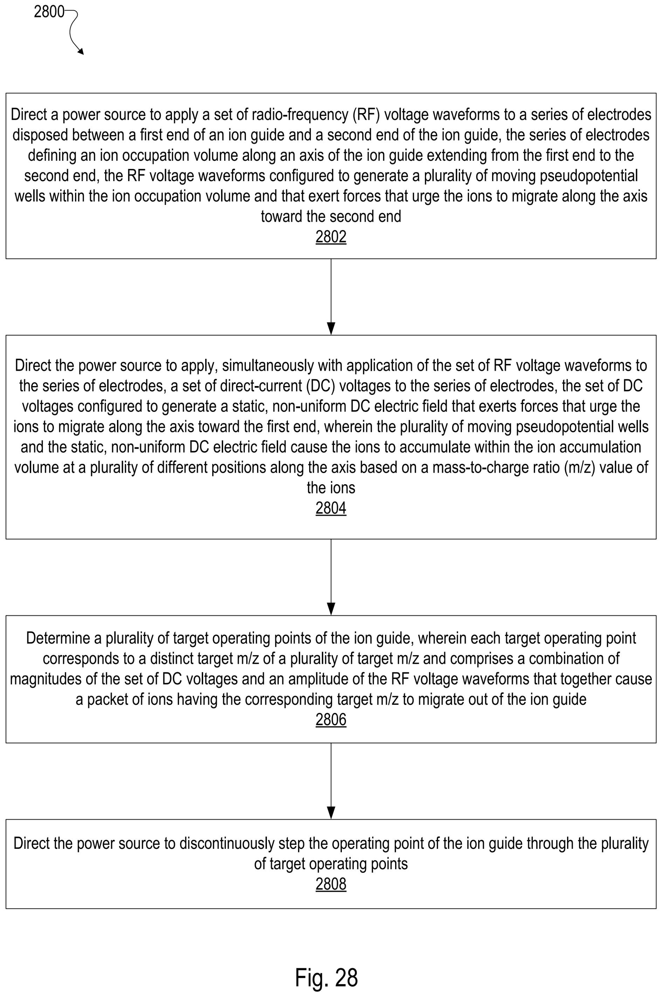

Fig. 28 shows an illustrative method 2800 of operating an ion guide 2002. While Fig. 28 shows illustrative operations according to one embodiment, other embodiments may omit, add to, reorder, and/or modify any of the operations shown in Fig. 28. Method 2800 may be performed by controller 2006.

At operation 2802, controller 2006 directs power source 2004 to apply a set of RF voltage waveforms to the series of electrodes 2010. The RF voltage waveforms are configured as described herein to generate a plurality of moving pseudopotential wells (e.g., a traveling wave) within ion occupation volume 2012 and that exert forces that urge the ions to migrate along axis 2014 toward second end 2008-2.

At operation 2804, simultaneously with the application of the set of RF voltage waveforms at operation 2802, controller 2006 directs power source 2004 to apply a set of DC voltages to the series of electrodes 2010. The set of DC voltages are configured to generate a static, non-uniform DC electric field that exerts forces that urge the ions to migrate along axis 2014 toward first end 2008-1. Together, the plurality of moving pseudopotential wells and the static, non-uniform DC electric field cause the ions to accumulate within ion occupation volume 2012 at a plurality of different positions along axis 2014 based on the respective *m/z* value of the ions.

At operation 2806, controller 2006 determines a plurality of target operating points for ion guide 2002. Each target operating point corresponds to a distinct target *m/z* of a plurality of target *m/z* and comprises a combination of magnitudes of the applied set of DC voltages and an amplitude of the applied RF voltage waveforms that together cause a packet of ions having the corresponding target *m/z* to migrate out of ion guide 2002 (e.g., out of first end 2008-1 or out of second end 2008-2).

At operation 2808, controller 2006 directs power source 2004 to discontinuously step the operating point of ion guide 2002 through the plurality of target operating points. Power source 2004 may discontinuously step the operating point of ion guide 2002 through the plurality of target operating points in any suitable way, including any way described herein. By discontinuously stepping the operating point of ion guide 2002 through the plurality of target operating points, the ions accumulated in ion occupation volume 2012 are ejected from the ion guide in a sequence of distinct ejection events.

In some examples, a computer program product embodied in a non-transitory computer-readable storage medium may be provided. In such examples, the non-transitory computer-readable storage medium may store computer-readable instructions in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

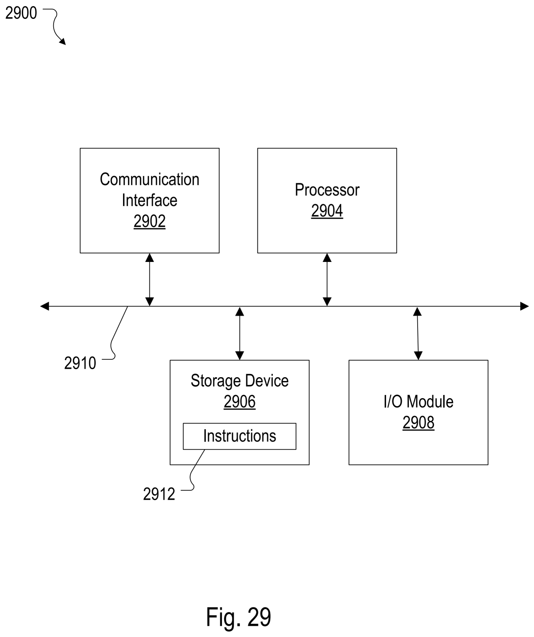

Fig. 29 shows an illustrative computing device 2900 that may be specifically configured to perform one or more of the operations, methods, and processes described herein. Any of the systems, computing devices, and/or other components described herein may be implemented by computing device 2900.

As shown in Fig. 29, computing device 2900 may include a communication interface 2902, a processor 2904, a storage device 2906, and an input/output ("I/O") module 2908 communicatively connected one to another via a communication infrastructure 2910. While an illustrative computing device 2900 is shown in Fig. 29, the components illustrated in Fig. 29 are not intended to be limiting. Additional or alternative components may be used in other embodiments. Components of computing device 2900 shown in Fig. 29 will now be described in additional detail.

Communication interface 2902 may be configured to communicate with one or more computing devices. Examples of communication interface 2902 include, without limitation, a wired network interface (such as a network interface card), a wireless network interface (such as a wireless network interface card), a modem, an audio/video connection, and any other suitable interface.

Processor 2904 generally represents any type or form of processing unit capable of processing data and/or interpreting, executing, and/or directing execution of one or more of the instructions, processes, and/or operations described herein. Processor 2904 may perform operations by executing computer-executable instructions 2912 (e.g., an application, software, code, and/or other executable data instance) stored in storage device 2906.

Storage device 2906 may include one or more data storage media, devices, or configurations and may employ any type, form, and combination of data storage media and/or device. For example, storage device 2906 may include, but is not limited to, any combination of the non-volatile media and/or volatile media described herein. Electronic data, including data described herein, may be temporarily and/or permanently stored in storage device 2906. For example, data representative of computer-executable instructions 2912 configured to direct processor 2904 to perform any of the operations described herein may be stored within storage device 2906. In some examples, data may be arranged in one or more databases residing within storage device 2906.

I/O module 2908 may include one or more I/O modules configured to receive user input and provide user output. One or more I/O modules may be used to receive input for a single virtual experience. I/O module 2908 may include any hardware, firmware, software, or combination thereof supportive of input and output capabilities. For example, I/O module 2908 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 2908 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 2908 is configured to provide graphical data to a display for presentation to a user. The graphical data may be representative of one or more graphical user interfaces and/or any other graphical content as may serve a particular implementation.

In the preceding description, various exemplary embodiments have been described with reference to the accompanying drawings. It will, however, be evident that various modifications and changes may be made thereto, and additional embodiments may be implemented, without departing from the scope of the invention as set forth in the claims that follow. For example, certain features of one embodiment described herein may be combined with or substituted for features of another embodiment described herein. The description and drawings are accordingly to be regarded in an illustrative rather than a restrictive sense.

Advantages and features of the present disclosure can be further described by the following examples:

Example 1. A system comprising: an ion guide configured to receive ions and comprising: a first end, a second end, and a series of electrodes disposed between the first end and the second end, the series of electrodes defining an ion occupation volume along an axis of the ion guide extending from the first end to the second end; a power source electrically coupled to the series of electrodes and configured to: apply a set of radio-frequency (RF) voltage waveforms to the series of electrodes, the RF voltage waveforms configured to generate a plurality of moving pseudopotential wells within the ion occupation volume and that exert forces that urge the ions to migrate along the axis in a first direction, and apply, simultaneously with application of the set of RF voltage waveforms, a set of direct current (DC) voltages to the series of electrodes or an additional series of electrodes disposed between the first end and the second end, the set of DC voltages configured to generate a static, non-uniform DC electric field that exerts forces that urge the ions to migrate along the axis in a second direction opposite to the first direction, wherein the plurality of moving pseudopotential wells and the static, non-uniform DC electric field cause the ions to accumulate within the ion accumulation volume at a plurality of different positions along the axis based on a mass-to-charge ratio (m/z) value of the ions; and a controller configured to: determine a plurality of target operating points for the ion guide, wherein each target operating point corresponds to a distinct target m/z of a plurality of target m/z and comprises a combination of magnitudes of the set of DC voltages and an amplitude of the RF voltage waveforms that together cause a packet of ions having the corresponding target m/z to migrate out of the ion guide, and direct the power source to discontinuously step the operating point of the ion guide through the plurality of target operating points.

Example 2. The system of example 1, wherein a step time of each target operating point of the plurality of target operating points is greater than a step time of non-target operating points.

Example 3. The system of example 1, wherein directing the power source to discontinuously step through the plurality of operating points comprises directing the ion guide to step directly from a first target operating point included in the plurality of operating points to a second target operating point included in the plurality of operating points.

Example 4. The system of example 1 or 3, wherein directing the power source to discontinuously step through the plurality of operating points comprises abstaining from directing the ion guide to operate at a non-target operating point.

Example 5. The system of example 1 or 2, wherein a rate of stepping the magnitudes of the set of DC voltages or the amplitude of the RF voltage waveforms is less during the plurality of target operating points than during non-target operating points.

Example 6. The system of any of the preceding examples, wherein a step time of each target operating point of the plurality of target operating points is greater than or equal to 3 milliseconds.

Example 7. The system of any of the preceding examples, wherein directing the power source to discontinuously step the operating point of the ion guide through the plurality of target operating points comprises directing the power source to discontinuously step the magnitudes of the applied set of DC voltages.

Example 8. The system of any of the preceding examples, wherein directing the power source to discontinuously step the operating point of the ion guide through the plurality of target operating points comprises directing the power source to discontinuously step the amplitude of the applied RF voltage waveforms.

Example 9. The system of any of the preceding examples, wherein the controller is further configured to direct the power source to perform a reverse step of the operating point after the ion guide is operated at a target operating point of the plurality of target operating points.

Example 10. The system of example 9, wherein performing the reverse step comprises reverse stepping the operating point to a predetermined operating point.

Example 11. The system of example 9, wherein performing the reverse step comprises reverse stepping the operating point by a threshold amount.

Example 12. The system of any of the preceding examples, wherein the controller is configured to determine each target operating point of the plurality of target operating points based on a threshold resolution for the plurality of target m/z.

Example 13. The system of any of the preceding examples, wherein the controller is configured to determine each target operating point of the plurality of target operating points based on a threshold resolution for each respective target m/z.

Example 14. The system of any of the preceding examples, wherein the controller is configured to determine each target operating point of the plurality of target operating points based on an available parallel processing time for each target operating point.

Example 15. The system of any of the preceding examples, wherein the controller is configured to: select, based on an available parallel processing time and a charge state of the ions, a lower operating point function and an upper operating point function, wherein the lower operating point function represents a lower operating point as a function of m/z and the upper operating point function represents an upper operating point as a function of m/z; and determine each target operating point based on the lower operating point function and the upper operating point function.

Example 16. The system of any of the preceding examples, wherein: each operating point of the plurality of operating points is configured so that ions having an m/z less than a low mass cutoff of the target operating point are ejected out of the ion guide; and the low mass cutoff of each target operating point is greater than the respective target m/z for the operating point.

Example 17. The system of any of examples 1 to 15, wherein: each operating point of the plurality of operating points is configured so that ions having an m/z greater than a high mass cutoff of the target operating point are ejected out of the ion guide; and the high mass cutoff of each target operating point is less than the respective target m/z for the operating point.

Example 18. The system of any of the preceding examples, further comprising a mass filter positioned downstream of the ion guide and configured to receive ions from the ion guide as the ions migrate out of the ion guide, wherein the mass filter is synchronized with the ion guide to transmit only ions of a current target m/z as the ions of the current target m/z migrate out of the ion guide.

Example 19. The system of any of the preceding examples, wherein the ion guide is operated at each operating point of the plurality of operating points for a step time.

Example 20. The system of example 19, wherein the step time for the plurality of target operating points is determined based on a threshold resolution for the plurality of target m/z.

Example 21. The system of example 19, wherein the step time for each target operating point of the plurality of target operating points is determined based on a threshold resolution for each respective target m/z.

Example 22. A system for controlling an ion guide to eject ions accumulated in the ion guide, the ion guide comprising a first end, a second end, and a series of electrodes disposed between the first end and the second end, the series of electrodes defining an ion occupation volume along an axis of the ion guide extending from the first end to the second end, the system comprising: one or more processors; and memory storing executable instructions that, when executed by the one or more processors, cause a computing device for mass spectrometry to perform a process comprising: directing a power source electrically coupled to the series of electrodes to: apply a set of radio-frequency (RF) voltage waveforms to the series of electrodes, the RF voltage waveforms configured to generate a plurality of moving pseudopotential wells within the ion occupation volume and that exert forces that urge the ions to migrate along the axis in a first direction, and apply, simultaneously with application of the set of RF voltage waveforms to the series of electrodes, a set of direct current (DC) voltages to the series of electrodes or an additional series of electrodes disposed between the first end and the second end, the set of DC voltages configured to generate a static, non-uniform DC electric field that exerts forces that urge the ions to migrate along the axis in a second direction opposite to the first direction, wherein the plurality of moving pseudopotential wells and the static, non-uniform DC electric field cause the ions to accumulate within the ion accumulation volume at a plurality of different positions along the axis based on a mass-to-charge ratio (m/z) value of the ions; determining a plurality of target operating points of the ion guide, wherein each target operating point corresponds to a distinct target m/z of a plurality of target m/z and comprises a combination of magnitudes of the set of DC voltages and an amplitude of the RF voltage waveforms that together cause a packet of ions having the corresponding target m/z to migrate out of the ion guide; and directing the power source to discontinuously step the operating point of the ion guide through the plurality of target operating points.

Example 23. A system comprising: an ion guide configured to receive ions and comprising: a first end, a second end, and a series of electrodes disposed between the first end and the second end, the series of electrodes defining an ion occupation volume along an axis of the ion guide extending from the first end to the second end; a power source electrically coupled to the series of electrodes and configured to: apply a set of radio-frequency (RF) voltage waveforms to the series of electrodes, the RF voltage waveforms configured to generate a plurality of moving pseudopotential wells within the ion occupation volume and that exert forces that urge the ions to migrate along the axis in a first direction, and apply, simultaneously with application of the set of RF voltage waveforms, a set of direct current (DC) voltages to the series of electrodes or an additional series of electrodes disposed between the first end and the second end, the set of DC voltages configured to generate a static, non-uniform DC electric field that exerts forces that urge the ions to migrate along the axis in a second direction opposite to the first direction, wherein the plurality of moving pseudopotential wells and the static, non-uniform DC electric field cause the ions to accumulate within the ion accumulation volume at a plurality of different positions along the axis based on a mass-to-charge ratio (m/z) value of the ions; and a controller configured to: determine a plurality of operating points of the ion guide and a step time for each operating point of the plurality of operating points, wherein each operating point comprises a combination of magnitudes of the set of DC voltages and an amplitude of the RF voltage waveforms that together cause ions having an m/z less than a low mass cutoff of the operating point to migrate out of the ion guide, and direct the power source to discontinuously step the operating point of the ion guide through the plurality of operating points based on the step time for each operating point of the plurality of operating points.

Example 24. A non-transitory computer-readable medium storing instructions that, when executed, direct at least one processor of a computing device to perform a process for controlling an ion guide to eject ions accumulated in the ion guide, the ion guide comprising a first end, a second end, and a series of electrodes disposed between the first end and the second end, the series of electrodes defining an ion occupation volume along an axis of the ion guide extending from the first end to the second end, the process comprising: directing a power source electrically coupled to the series of electrodes to: apply a set of radio-frequency (RF) voltage waveforms to the series of electrodes, the RF voltage waveforms configured to generate a plurality of moving pseudopotential wells within the ion occupation volume and that exert forces that urge the ions to migrate along the axis in a first direction, and apply, simultaneously with application of the set of RF voltage waveforms to the series of electrodes, a set of direct current (DC) voltages to the series of electrodes or an additional series of electrodes disposed between the first end and the second end, the set of DC voltages configured to generate a static, non-uniform DC electric field that exerts forces that urge the ions to migrate along the axis in a second direction opposite to the first direction, wherein the plurality of moving pseudo-

potential wells and the static, non-uniform DC electric field cause the ions to accumulate within the ion accumulation volume at a plurality of different positions along the axis based on a mass-to-charge ratio (m/z) value of the ions; determining a plurality of target operating points of the ion guide, wherein each target operating point corresponds to a distinct target m/z of a plurality of target m/z and comprises a combination of magnitudes of the set of DC voltages and an amplitude of the RF voltage waveforms that together cause a packet of ions having the corresponding target m/z to migrate out of the ion guide; and directing the power source to discontinuously step the operating point of the ion guide through the plurality of target operating points.

**Claims**

1. A system comprising:

   an ion guide configured to receive ions and comprising:

      a first end,
      a second end, and
      a series of electrodes disposed between the first end and the second end, the series of electrodes defining an ion occupation volume along an axis of the ion guide extending from the first end to the second end;

   a power source electrically coupled to the series of electrodes and configured to:

      apply a set of radio-frequency (RF) voltage waveforms to the series of electrodes, the RF voltage waveforms configured to generate a plurality of moving pseudopotential wells within the ion occupation volume and that exert forces that urge the ions to migrate along the axis in a first direction, and
      apply, simultaneously with application of the set of RF voltage waveforms, a set of direct current (DC) voltages to the series of electrodes or an additional series of electrodes disposed between the first end and the second end, the set of DC voltages configured to generate a static, non-uniform DC electric field that exerts forces that urge the ions to migrate along the axis in a second direction opposite to the first direction, wherein the plurality of moving pseudopotential wells and the static, non-uniform DC electric field cause the ions to accumulate within the ion accumulation volume at a plurality of different positions along the axis based on a mass-to-charge ratio *(m/z)* value of the ions; and

   a controller configured to:

      determine a plurality of target operating points for the ion guide, wherein each target operating point corresponds to a distinct target *m/z* of a plurality of target *m/z* and comprises a combination of magnitudes of the set of DC voltages and an amplitude of the RF voltage waveforms that together cause a packet of ions having the corresponding target m/z to migrate out of the ion guide, and
      direct the power source to discontinuously step the operating point of the ion guide through the plurality of target operating points.

2. The system of claim 1, wherein a step time of each target operating point of the plurality of target operating points is greater than a step time of non-target operating points.

3. The system of any preceding claim, wherein directing the power source to discontinuously step through the plurality of operating points comprises directing the ion guide to step directly from a first target operating point included in the plurality of operating points to a second target operating point included in the plurality of operating points.

4. The system of any preceding claim, wherein directing the power source to discontinuously step through the plurality of operating points comprises abstaining from directing the ion guide to operate at a non-target operating point.

5. The system of any preceding claim, wherein a rate of stepping the magnitudes of the set of DC voltages or the amplitude of the RF voltage waveforms is less during the plurality of target operating points than during non-target operating points.

6. The system of any preceding claim, wherein a step time of each target operating point of the plurality of target operating points is greater than or equal to 3 milliseconds.

7.  The system of any preceding claim, wherein directing the power source to discontinuously step the operating point of the ion guide through the plurality of target operating points comprises directing the power source to discontinuously step the magnitudes of the applied set of DC voltages or the amplitude of the applied RF voltage waveforms.

8.  The system of any preceding claim, wherein the controller is further configured to direct the power source to perform a reverse step of the operating point after the ion guide is operated at a target operating point of the plurality of target operating points, and
    wherein the reverse step comprises reverse stepping the operating point to a predetermined operating point or reverse stepping the operating point by a threshold amount.

9.  The system of any preceding claim, wherein the controller is configured to determine each target operating point of the plurality of target operating points based on at least one of a threshold resolution for the plurality of target $m/z$ or a threshold resolution for each respective target m/z.

10. The system of any preceding claim, wherein the controller is configured to determine each target operating point of the plurality of target operating points based on an available parallel processing time for each target operating point.

11. The system of any preceding claim, wherein the controller is configured to:

    select, based on an available parallel processing time and a charge state of the ions, a lower operating point function and an upper operating point function, wherein the lower operating point function represents a lower operating point as a function of m/z and the upper operating point function represents an upper operating point as a function of m/z; and
    determine each target operating point based on the lower operating point function and the upper operating point function.

12. The system of any preceding claim, wherein:

    each operating point of the plurality of operating points is configured so that ions having an $m/z$ less than a low mass cutoff of the target operating point are ejected out of the ion guide and the low mass cutoff of each target operating point is greater than the respective target $m/z$ for the operating point, or
    each operating point of the plurality of operating points is configured so that ions having an $m/z$ greater than a high mass cutoff of the target operating point are ejected out of the ion guide and the high mass cutoff of each target operating point is less than the respective target $m/z$ for the operating point.

13. The system of any preceding claim, further comprising a mass filter positioned downstream of the ion guide and configured to receive ions from the ion guide as the ions migrate out of the ion guide,
    wherein the mass filter is synchronized with the ion guide to transmit only ions of a current target $m/z$ as the ions of the current target $m/z$ migrate out of the ion guide.

14. The system of any preceding claim, wherein the ion guide is operated at each operating point of the plurality of operating points for a step time.

15. The system of claim 14, wherein the step time for the plurality of target operating points is determined based on at least one of a threshold resolution for the plurality of target $m/z$, a threshold resolution for each respective target $m/z$, or an available parallel processing time for each target $m/z$.

Fig. 1A
(Prior Art)

Fig. 1B
(Prior Art)

Fig. 1C
(Prior Art)

Fig. 1D
(Prior Art)

Fig. 2A

EP 4 783 224 A1

Fig. 2B

Fig. 2C

Fig. 3A

Fig. 3B

EP 4 783 224 A1

Fig. 4A

EP 4 783 224 A1

Fig. 4B

EP 4 783 224 A1

Fig. 5

Fig. 6A

EP 4 783 224 A1

EP 4 783 224 A1

Fig. 6B

Fig. 6C

46

113

118

Time = $t_1$

517c    517b    517a

503a

$E_{max}$

503b

pseudo-waves (ramped)

$\overrightarrow{E_1}$

$|\vec{E}|$

p3    p2  p1    pc

position

0    L

Fig. 6D

113

118

504

504b

505

504a

$|V|$

position

0    L

Fig. 6E

Fig. 6F

Fig. 6G

Fig. 6H

Fig. 7A

Fig. 7B

Fig. 8

Fig. 9

800

801

Input pulse of ions comprising a range of mass-to-charge values to an ion guide having a first ion port, a second ion port and a plurality of electrodes between the first and second ion ports

802

Temporarily trap and/or accumulate ions at an end of the ion guide adjacent to first port

803

Apply radio-frequency (RF) voltage waveforms to series of electrodes that generate a plurality of pseudopotential wells that are configured to urge the ions in a first direction, either away from or towards the first ion port

805

Simultaneously, apply a respective DC electrical potential to each of two or more electrodes that generate a DC field that is configured to urges ions in the opposite direction from the urging of the ions by the RF voltage waveforms

807

Progressively ramp applied RF amplitude and/or one or more applied DC potentials

809

Extract ions comprising a reduced range of mass-to-charge ratios from ion guide through one or both ion ports

Fig. 10A

810

Apply radio-frequency (RF) voltage waveforms to a series of electrodes disposed between an ion inlet and an ion outlet of an ion guide, wherein the RF voltage waveforms generate a plurality of pseudopotential wells that are configured to urge ions away from the ion inlet and towards the ion outlet — 811

Simultaneously, apply a respective DC electrical potential to each of two or more of the electrodes that generate a DC field that is configured to urge ions away from the ion outlet and towards the ion inlet — 813

Inlet pulse of ions comprising a range of mass-to-charge values to the ion guide through the ion inlet — 815

Progressively, either: (a) increase applied RF amplitude and/or (b) decrease DC field strength by changing applied DC potentials — 817

Extract ions from ion outlet in increasing order of their mass-to-charge ratios — 819

Fig. 10B

830

Apply radio-frequency (RF) voltage waveforms to a plurality of electrodes of an ion funnel having an ion inlet end, an ion outlet end and a plurality of plate or ring electrodes between the inlet and outlet ends that have respective apertures that decrease in diameter from the inlet end to the outlet end, wherein the RF voltage waveforms generate a plurality of pseudopotential wells that are configured to urge ions towards the ion inlet and away from towards the ion outlet — 831

Simultaneously, apply a respective DC electrical potential to each electrode, whereby the applied DC potentials generate a DC field that is configured to urge ions from the inlet end to the outlet end — 833

Inlet pulse of ions comprising a range of mass-to-charge values to the ion funnel through the ion inlet end — 835

Progressively increase DC field strength by ramping applied DC potentials — 837

Extract ions from outlet end in decreasing order of their $m/z$ ratios — 839

Fig. 10C

Fig. 11A

Fig. 11B

Fig. 12

Fig. 13

Fig. 14

Fig. 15

Fig. 16

Fig. 17

Fig. 18

Fig. 19

2000

2002

2012

2014

2008-1

2008-2

2010-1

2010-n

RF Voltage
Waveforms

DC Voltages
(Quadratic)

DC Voltages
(Linear)

Power Source
2004

Controller
2006

Fig. 20

Controller
2006

Storage Facility
2102

Instructions
2106

Processing Facility
2104

Fig. 21

EP 4 783 224 A1

Fig. 22

65

Fig. 23

EP 4 783 224 A1

Fig. 24

2500

```
┌─────────────────────────────────────────────────────────┐
│                    Set the ejection time                 │
│                           2502                           │
└─────────────────────────────────────────────────────────┘
                             │
                             ▼
┌─────────────────────────────────────────────────────────┐
│                    Set the charge state                  │
│                           2504                           │
└─────────────────────────────────────────────────────────┘
                             │
                             ▼
┌─────────────────────────────────────────────────────────┐
│  Determine an operating point for each of a plurality of │
│  target m/z for the set ejection time and charge state,  │
│  the operating point for each target m/z being defined   │
│  by a lower operating point and an upper operating point.│
│                           2506                           │
└─────────────────────────────────────────────────────────┘
                             │
                             ▼
┌─────────────────────────────────────────────────────────┐
│  Determine a lower operating point function based on the │
│  lower operating points of the plurality of target m/z   │
│                           2508                           │
└─────────────────────────────────────────────────────────┘
                             │
                             ▼
┌─────────────────────────────────────────────────────────┐
│  Determine an upper operating point function based on    │
│  the upper operating points of the plurality of target   │
│  m/z                                                     │
│                           2510                           │
└─────────────────────────────────────────────────────────┘
```

Fig. 25

Fig. 26

Fig. 27

2800

Direct a power source to apply a set of radio-frequency (RF) voltage waveforms to a series of electrodes disposed between a first end of an ion guide and a second end of the ion guide, the series of electrodes defining an ion occupation volume along an axis of the ion guide extending from the first end to the second end, the RF voltage waveforms configured to generate a plurality of moving pseudopotential wells within the ion occupation volume and that exert forces that urge the ions to migrate along the axis toward the second end
2802

Direct the power source to apply, simultaneously with application of the set of RF voltage waveforms to the series of electrodes, a set of direct-current (DC) voltages to the series of electrodes, the set of DC voltages configured to generate a static, non-uniform DC electric field that exerts forces that urge the ions to migrate along the axis toward the first end, wherein the plurality of moving pseudopotential wells and the static, non-uniform DC electric field cause the ions to accumulate within the ion accumulation volume at a plurality of different positions along the axis based on a mass-to-charge ratio (m/z) value of the ions
2804

Determine a plurality of target operating points of the ion guide, wherein each target operating point corresponds to a distinct target m/z of a plurality of target m/z and comprises a combination of magnitudes of the set of DC voltages and an amplitude of the RF voltage waveforms that together cause a packet of ions having the corresponding target m/z to migrate out of the ion guide
2806

Direct the power source to discontinuously step the operating point of the ion guide through the plurality of target operating points
2808

Fig. 28

2900

Communication
Interface
2902

Processor
2904

2910

Storage Device
2906

Instructions

I/O Module
2908

2912

Fig. 29

| | Europäisches Patentamt European Patent Office Office européen des brevets | **EUROPEAN SEARCH REPORT** | **Application Number** EP 26 15 3533 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/291167 A1 (HOYES JOHN BRIAN [GB]) 15 September 2022 (2022-09-15) * figures 2-4 * * table 1 * * paragraphs [0021], [0049], [0060] - [0108] * | 1-15 | INV. H01J49/06 H01J49/42 |
| A | US 2016/320340 A1 (GILES KEVIN [GB] ET AL) 3 November 2016 (2016-11-03) * figure 8 * * paragraphs [0032] - [0033] * | 1-15 | |
| A | US 2009/127455 A1 (BRUKER DALTONICS INC [US]; BRUKER DALTONICS INC) 21 May 2009 (2009-05-21) * figures 14,15 * * paragraphs [0093] - [0097] * | 1-15 | |
| A | US 2022/299473 A1 (PARK MELVIN ANDREW [US]) 22 September 2022 (2022-09-22) * figures 4A-4G * * paragraphs [0106] - [0111] * | 1-15 | TECHNICAL FIELDS SEARCHED (IPC) H01J G01N |
| A | US 2009/302209 A1 (GREEN MARTIN [GB] ET AL) 10 December 2009 (2009-12-10) * paragraph [0016] * | 8 | |
| A | US 2021/142993 A1 (SENKO MICHAEL W [US] ET AL) 13 May 2021 (2021-05-13) * paragraph [0006] * | 10,11 | |

The present search report has been drawn up for all claims

| Place of search | Date of completion of the search | Examiner |
|---|---|---|
| The Hague | 19 June 2026 | Simpson, Malcolm |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 783 224 A1**

## ANNEX TO THE EUROPEAN SEARCH REPORT
## ON EUROPEAN PATENT APPLICATION NO.

EP 26 15 3533

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2026

| Patent document cited in search report | | Publication date | Patent family member(s) | | Publication date |
|---|---|---|---|---|---|
| US 2022291167 | A1 | 15-09-2022 | CN | 114342041 A | 12-04-2022 |
| | | | EP | 4031858 A1 | 27-07-2022 |
| | | | EP | 4534993 A1 | 09-04-2025 |
| | | | GB | 2588846 A | 12-05-2021 |
| | | | US | 2022291167 A1 | 15-09-2022 |
| | | | US | 2025172525 A1 | 29-05-2025 |
| | | | WO | 2021053342 A1 | 25-03-2021 |
| US 2016320340 | A1 | 03-11-2016 | DE | 112014005868 T5 | 15-09-2016 |
| | | | US | 2016320340 A1 | 03-11-2016 |
| | | | WO | 2015097462 A1 | 02-07-2015 |
| US 2009127455 | A1 | 21-05-2009 | CA | 2463433 A1 | 04-10-2004 |
| | | | CA | 2747956 A1 | 04-10-2004 |
| | | | EP | 1465234 A2 | 06-10-2004 |
| | | | US | 2004195503 A1 | 07-10-2004 |
| | | | US | 2004211897 A1 | 28-10-2004 |
| | | | US | 2007278399 A1 | 06-12-2007 |
| | | | US | 2009127455 A1 | 21-05-2009 |
| | | | US | 2011147584 A1 | 23-06-2011 |
| US 2022299473 | A1 | 22-09-2022 | CN | 115112746 A | 27-09-2022 |
| | | | CN | 122218068 A | 16-06-2026 |
| | | | CN | 122218069 A | 16-06-2026 |
| | | | CN | 122218070 A | 16-06-2026 |
| | | | DE | 102022106047 A1 | 22-09-2022 |
| | | | GB | 2605687 A | 12-10-2022 |
| | | | GB | 2632940 A | 26-02-2025 |
| | | | GB | 2636306 A | 11-06-2025 |
| | | | GB | 2636316 A | 11-06-2025 |
| | | | IE | 20220026 A2 | 28-09-2022 |
| | | | IE | 20240620 A2 | 20-11-2024 |
| | | | IE | 20250137 A2 | 16-07-2025 |
| | | | IE | 20250138 A2 | 16-07-2025 |
| | | | US | 2022299473 A1 | 22-09-2022 |
| | | | US | 2025076250 A1 | 06-03-2025 |
| | | | US | 2025093297 A1 | 20-03-2025 |
| | | | US | 2025093298 A1 | 20-03-2025 |
| US 2009302209 | A1 | 10-12-2009 | CN | 101479828 A | 08-07-2009 |
| | | | GB | 2437829 A | 07-11-2007 |
| | | | GB | 2455593 A | 17-06-2009 |
| | | | US | 2009302209 A1 | 10-12-2009 |
| | | | US | 2011180704 A1 | 28-07-2011 |
| | | | US | 2013267037 A1 | 10-10-2013 |
| | | | US | 2014138534 A1 | 22-05-2014 |

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 26 15 3533

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2026

| Patent document cited in search report | Publication date | Patent family member(s) | | Publication date |
|---|---|---|---|---|
| | | US | 2016163525 A1 | 09-06-2016 |
| US 2021142993 A1 | 13-05-2021 | EP | 3819928 A1 | 12-05-2021 |
| | | US | 2021142993 A1 | 13-05-2021 |
| | | US | 2022336198 A1 | 20-10-2022 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63749962 A
- US 6630662 B, Loboda
- US 7838826 B1
- US 11226308 B, Rather and Michelmann
- US 6812453 B, Bateman
- US 9799503 B, Williams

- US 10692710 B, Prabhakaran
- US 7675031 B, Konicek
- US 5847386 B, Thomson
- US 7985951 B
- US 7064322 B, Crawford
- US 6417511 B, Russ, IV

**Non-patent literature cited in the description**

- **KANU, ABU B.** ; **PRABHA DWIVEDI** ; **MAGGIE TAM** ; **LAURA MATZ** ; **HERBERT H. HILL JR**. Ion mobility-mass spectrometry. *Journal of mass spectrometry*, 2008, vol. 43 (1), 1-22
- **MICHELMANN** ; **KARSTEN** ; **JOSHUA A. SILVEIRA** ; **MARK E. RIDGEWAY** ; **MELVIN A. PARK**. Fundamentals of trapped ion mobility spectrometry. *Journal of the American Society for Mass Spectrometry*, 2014, vol. 26 (1), 14-24
- **SILVEIRA, JOSHUA A.** ; **KARSTEN MICHELMANN** ; **MARK E. RIDGEWAY** ; **MELVIN A. PARK**. Fundamentals of trapped ion mobility spectrometry part II: fluid dynamics. *Journal of the American Society for Mass Spectrometry*, 2016, vol. 27 (4), 585-595

- **TOLMACHEV, ALEKSEY V.** ; **IAN K. WEBB** ; **YEHIA M. IBRAHIM** ; **SANDILYA VB GARIMELLA** ; **XINYU ZHANG** ; **GORDON A. ANDERSON** ; **RICHARD D. SMITH**. Characterization of ion dynamics in structures for lossless ion manipulations. *Analytical chemistry*, 2014, vol. 86 (18), 9162-9168
- **IBRAHIM, YEHIA M** ; **AHMED M. HAMID** ; **LIULIN DENG** ; **SANDILYA VB GARIMELLA** ; **IAN K. WEBB** ; **ERIN S. BAKER** ; **RICHARD D. SMITH**. New frontiers for mass spectrometry based upon structures for lossless ion manipulations. *Analyst*, 2017, vol. 142 (7), 1010-1021